# EUROPEAN PATENT SPECIFICATION

(11) **EP 4 427 053 B1**
(45) Date of publication and mention of the grant of the patent: **29.04.2026**
(21) Application number: 22803070.6
(22) Date of filing: 31.10.2022
(51) Int. Cl.: G01N 35/02, G01N 35/04

(54) **CONSUMABLES CONTAINER LOADING/UNLOADING SYSTEM AND METHOD OF LOADING/UNLOADING CONSUMABLES CONTAINERS FOR AUTOMATED ANALYZER**
SYSTEM ZUM LADEN/ENTLADEN VON VERBRAUCHSMATERIALBEHÄLTERN UND VERFAHREN ZUM LADEN/ENTLADEN VON VERBRAUCHSMATERIALBEHÄLTERN FÜR EINEN AUTOMATISIERTEN ANALYSATOR
SYSTÈME DE CHARGEMENT/DÉCHARGEMENT DE RÉCIPIENTS DE PRODUITS CONSOMMABLES ET PROCÉDÉ DE CHARGEMENT/DÉCHARGEMENT DE RÉCIPIENTS DE PRODUITS CONSOMMABLES POUR AUTOMATE D'ANALYSE

(30) Priority: 01.11.2021 US 202163274027 P
(43) Date of publication of application: 11.09.2024
(73) Proprietor: Beckman Coulter, Inc., Brea, CA 92821 (US)
(72) Inventor: ITO, Noriyuki, Shizuoka 411-0931 (JP); OKADA, Noriyoshi, Shizuoka 411-0931 (JP); MIZUTANI, Takayuki, Chaska, Minnesota 55318 (US)
(74) Representative: Maiwald GmbH
(86) International application number: PCT/IB2022/060485
(87) International publication number: WO 2023/073667

(56) References cited:
- WO-A1-2021/166512
- US-A1- 2016 161 521
- US-A1- 2018 267 068
- US-A1- 2019 284 612

## Description

### CROSS-REFERENCE TO RELATED APPLICATIONS

This is related to, and claims the benefit of, provisional patent application number 63/274,027, entitled "Consumables Container Loading/Unloading System and Method of Loading/Unloading Consumables Containers for Automated Analyzer," filed November 1, 2021, in the United States Patent Office.

### FIELD

The present disclosure relates to an automated analyzer. Particularly, the present disclosure relates to a consumables container loading/unloading system for the automated analyzer and a method of loading/unloading one or more consumables containers for the automated analyzer.

### BACKGROUND

Automated analyzers are well known in the art and are generally used for automated or semi -automated analysis of patient samples, such as blood, urine, spinal fluid, and the like. For testing and analyzing the patient sample, several key components are dispensed into a reaction vessel. The patient sample is dispensed by a sample nozzle from a sample vessel to the reaction vessel. Further, a reagent is dispensed by a reagent nozzle from a reagent container to the reaction vessel to which the patient sample has been dispensed.

Generally, the reagent containers are manually loaded into the automated analyzer by an operator in the morning. Since, there is a growing demand of analysis of the patient samples and the automatic analyzers nowadays have improved processing capability of analysis, the consumption of the reagents has also increased. In some cases, there may be a need to load additional reagent containers into the automated analyzer, for example, due to a shortage of the reagent due to limited onboard capacity of the analyzer, and/or an urgent unscheduled test requirement. In some other cases, when the reagent in a reagent container has exceeded its expiration date, it may need to be replaced. In order to load and/or replace the reagent containers, conventionally, the operator has to temporarily interrupt an operation of the automated analyzer. This may negatively affect a throughput of the automated analyzer. Further, in some cases, the operator may have to wait till completion of an operation before loading the additional reagent containers into the automated analyzer. However, this may be undesirable for the operator. An example of a consumables loading/unloading system for an automated analyzer where reagents can be loaded during operation is US 2019/284612 A1.

### BRIEF SUMMARY

According to a first aspect of the disclosure, a consumables container loading/unloading system for an automated analyzer according to claim 1 is provided.

According to a second aspect of the disclosure, a method of loading/unloading one or more consumables containers for an automated analyzer according to claim 9 is provided.

The automated analyzer may be used for automated or semi -automated analysis of patient samples, such as blood, urine, spinal fluid, and the like. For testing and analyzing the patient sample, several key components are dispensed into a reaction vessel in the at least one analyzer arrangement. The patient sample is dispensed by a sample nozzle from a sample vessel to the reaction vessel. Further, the liquid consumable is dispensed by a dispensing apparatus from the consumables container to the reaction vessel to which the patient sample has been dispensed.

Due to a growing demand of analysis of the patient samples and as the automatic analyzers may have improved processing capability of analysis, there may be an increase in consumption of the liquid consumable. Therefore, in some cases, there may be a need to load consumables containers into the automated analyzer due to limited onboard capacity of the analyzer, and/or an urgent unscheduled test requirement. In some cases, when the liquid consumable in a consumables container has exceeded its expiration date, it may also need to be replaced.

The consumables container loading/unloading system of the present disclosure may enable manually loading/unloading of the consumables containers into or from the automated analyzer while the at least one analyzer arrangement is in the active mode. Therefore, the operator may not have to pause or interrupt one or more operations of the automated analyzer in order to load/unload the one or more of the consumables containers into or from the automated analyzer. This may prevent delays in a workflow of the automated analyzer and subsequently improve a throughput of the automated analyzer. Further, the consumables container loading/unloading system may prevent shortage of the liquid consumables during the analysis of the patient samples.

Further, as the transfer system transfers one or more of the consumables containers to or from the at least one storage magazine at least while the loading/unloading tray manually receives one or more of the consumables containers from the operator, the consumables containers may be loaded by the operator while the transfer system transfers the consumables containers which are not required from the at least one storage magazine or transfers previously loaded one or more of the consumables to the at least one storage magazine. This may further decrease a time required to load the consumables containers into the at least one storage magazine so that the liquid consumables contained in the consumables containers may be used when required for the analysis of the patient samples.

Since the operator may not have to wait till completion of the one or more operations before loading the consumables containers into the automated analyzer, the operator may carry out other necessary tasks. This may also save a time of the operator. Further, the consumables container loading/unloading system may ensure operational safety. Therefore, the automated analyzer may further be user friendly.

The consumables container loading/unloading system may also help in rearrangement of the consumables containers from one holding position in the at least one storage magazine to another holding position in the at least one storage magazine.

Further, the buffer storage may provide additional holding positions to removably hold at the consumables containers. Further, the buffer storage may enable faster loading/unloading of the consumables containers. The buffer storage may also help in the rearrangement of the consumables containers from the one holding position in the at least one storage magazine to the other holding position in the at least one storage magazine.

The rearrangement of the consumables containers may correct loading errors. The rearrangement of the consumables containers may further balance out or distribute test orders between the first and second analyzer arrangements, and therefore optimize the workflow of the automatic analyzer. This may further improve the throughput of the automatic analyzer.

A variety of additional aspects will be set forth in the description that follows. These aspects can relate to individual features and to combinations of features. It is to be understood that both the foregoing summary and the following detailed description are exemplary and explanatory only and are not restrictive of the broad concepts upon which the embodiments disclosed herein are based.

### BRIEF DESCRIPTION OF THE FIGURES

Exemplary embodiments disclosed herein may be more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labeled with the same number.
FIG. 1 is a perspective view of an automated analyzer, according to an embodiment of the present disclosure;
FIG. 2 is a partial top view of the automated analyzer, according to an embodiment of the present disclosure;
FIGS. 3A and 3B are partial perspective views of the automated analyzer in different configurations, according to an embodiment of the present disclosure;
FIG. 4 is a partial perspective view of the automated analyzer, according to another embodiment of the present disclosure;
FIG. 5 is a partial top view of the automated analyzer of FIG. 4, according to an embodiment of the present disclosure;
FIG. 6 is a perspective view of a buffer storage of the automated analyzer, according to an embodiment of the present disclosure;
FIG. 7A is a perspective view of a consumables container containing a liquid consumable for use with the automated analyzer, according to an embodiment of the present disclosure;
FIG. 7B is a perspective view of a consumables container containing a liquid consumable for use with the automated analyzer, according to another embodiment of the present disclosure;
FIG. 7C is a detailed side view of a transfer system of the automated analyzer, according to an embodiment of the present disclosure;
FIGS. 8A and 8B are schematic top views of the automated analyzer in an idle mode at different levels, according to an embodiment of the present disclosure;
FIG. 8C is a partial schematic side view of the automated analyzer, according to an embodiment of the present disclosure;
FIGS. 9A to 9F are schematic top views of different configurations of the automated analyzer in an active mode, according to an embodiment of the present disclosure;
FIG. 10 is a schematic top view of a loading/unloading tray of the automated analyzer, according to an embodiment of the present disclosure;
FIGS. 11A and 11B are schematic top views of different configurations of the automated analyzer in the active mode, according to another embodiment of the present disclosure;
FIG. 12 is a schematic top view of the automated analyzer in the active mode, according to an embodiment of the present disclosure;
FIGS. 13A and 13B illustrate schematic top views of the loading/unloading tray with the buffer storage, according to different embodiments of the present disclosure;
FIGS. 14A to 14F are schematic top views of different configurations of the automated analyzer including the buffer storage in the active mode, according to an embodiment of the present disclosure;
FIGS. 15A to 15C are schematic top views of different configurations of the automated analyzer including the buffer storage in the active mode, according to another embodiment of the present disclosure;
FIGS. 16A to 16C are schematic top views of different configurations of the automated analyzer including the buffer storage in the active mode, according to another embodiment of the present disclosure;
FIGS. 17A to 17D are schematic top views of different configurations of the automated analyzer including the buffer storage in the active mode, according to another embodiment of the present disclosure;
FIGS. 18A to 18C are schematic top views of different configurations of the automated analyzer including the buffer storage in the active mode, according to another embodiment of the present disclosure;
FIGS. 19A to 19D are schematic top views of different configurations of the automated analyzer including the buffer storage in the active mode, according to another embodiment of the present disclosure;
FIG. 20 is a schematic top view of the automated analyzer including the buffer in the active mode, according to an embodiment of the present disclosure;
FIG. 21 is a flowchart illustrating a method of loading/unloading one or more consumables containers for the automated analyzer, according to an embodiment of the present disclosure;
FIG. 22 is a flowchart illustrating an exemplary method of loading/unloading one or more consumables containers for the automated analyzer; and
FIG. 23 is a flowchart illustrating another exemplary method of loading/unloading one or more consumables containers for the automated analyzer.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

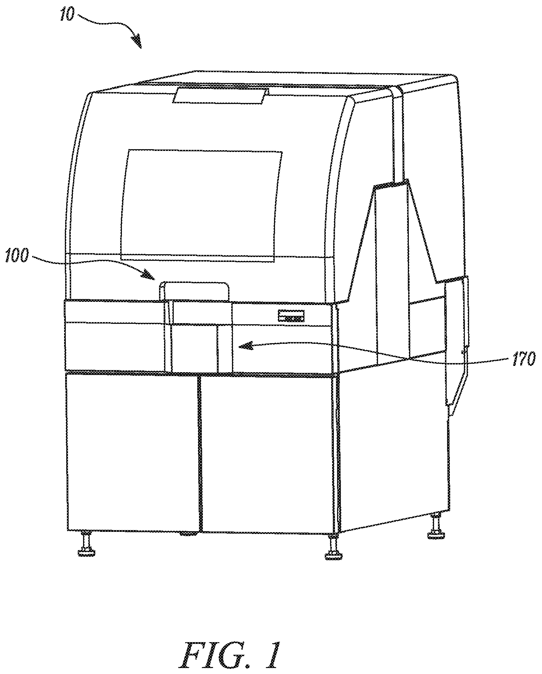

Referring now to Figures, FIG. 1 illustrates a perspective view of an automated analyzer 10, according to an embodiment of the present disclosure. The automated analyzer 10, as shown in FIG. 1, may be used by an operator. The automated analyzer 10 may conduct qualitative and quantitative analysis on one or more chemical components contained in a biological sample, or upon biologically derived substances contained in the biological sample, such as blood, urine, spinal fluid, and the like. Further, FIG. 1 partially illustrates a consumables container loading/unloading system 100 for the automated analyzer 10.

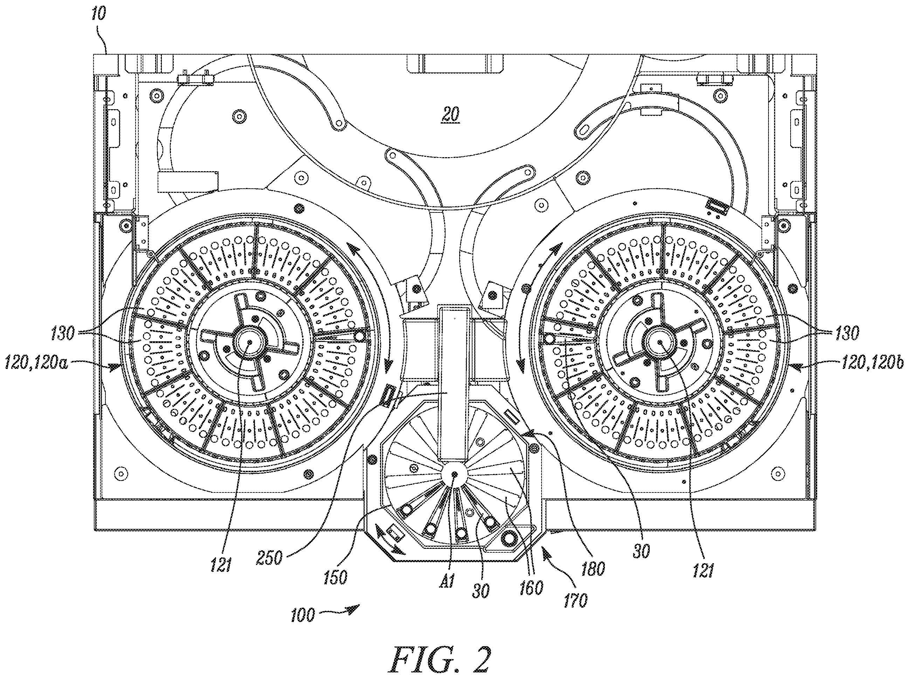

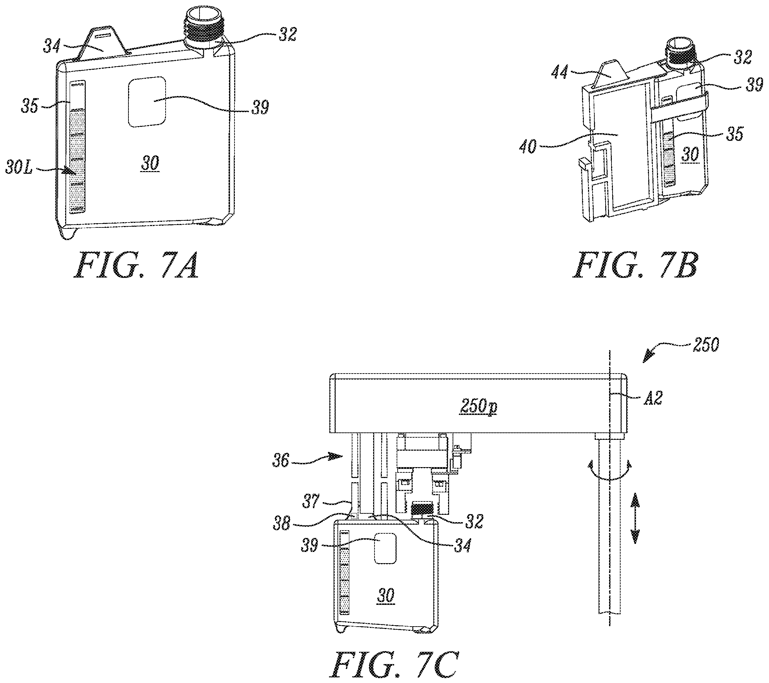

FIG. 2 illustrates a partial top view of the automated analyzer 10 with some components of the automated analyzer 10 not shown for illustrative purposes. The automatic analyzer 10 may analyze the one or more chemical components by measuring an optical characteristic of a reaction solution obtained by mixing and combining the biological sample and at least liquid consumables 30L (shown in FIG. 7A). The liquid consumables 30L are delivered to the automated analyzer 10 via one or more consumables containers 30.

Referring to FIGS. 1 and 2, the automated analyzer 10 further comprises at least one analyzer arrangement 20. The automated analyzer 10 further comprises the consumables container loading/unloading system 100. The consumables container loading/unloading system 100 comprises at least one storage magazine 120, a loading/unloading tray 150, and a transfer system 250.

The consumables container loading/unloading system 100 further comprises an operator access station 170 and a transfer system access station 180 separate from the operator access station 170. The operator access station 170 is configured to allow the operator to manually access the loading/unloading tray 150. The transfer system access station 180 is configured to allow the transfer system 250 to access the loading/unloading tray 150.

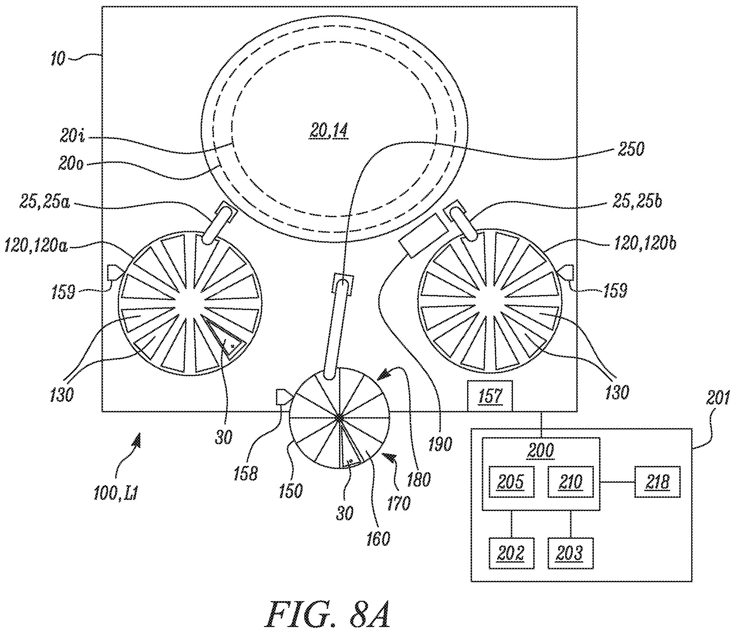

The at least one storage magazine 120 comprises a plurality of carriers 130. In some embodiments, the plurality of carriers 130 is arranged in a circular manner. The at least one storage magazine 120 may be configured to rotate about a magazine axis 121. Further, a magazine drive mechanism (not shown) may selectively rotate the at least one storage magazine 120 about the magazine axis 121. The magazine drive mechanism may be controlled by a controller 200 (shown in FIG. 8A). The at least one storage magazine 120 may be configured to rotate about the magazine axis 121 in a clockwise and/or in an anticlockwise direction. The magazine drive mechanism may include any conventional mechanism well known to those skilled in the art. For example, the magazine drive mechanism may include a servo or stepper motor coupled to the at least one storage magazine 120 through a system of belts, gears, or other similar arrangements known in the art.

Each of the plurality of carriers 130 is configured to removably hold at least one of the consumables containers 30. In the illustrated embodiment of FIG. 2, the at least one storage magazine 120 comprises a first storage magazine 120a and a second storage magazine 120b. Each of the first storage magazine 120a and the second storage magazine 120b comprises the plurality of carriers 130. In the illustrated embodiment of FIG. 2, each of the first storage magazine 120a and the second storage magazine 120b comprises nine carriers 130. Further, each of the plurality of carriers 130 is configured to removably hold about six of the consumables containers 30. Therefore, each of the first storage magazine 120a and the second storage magazine 120b may be configured to removably hold fifty-four of the consumables containers 30. In some other embodiments, each of the first storage magazine 120a and the second storage magazine 120b may be configured to removably hold any number of the consumables containers 30, as per desired application attributes. Further, in some other embodiments, the first storage magazine 120a and the second storage magazine 120b may be configured to removably hold different numbers of the consumables containers 30.

In some embodiments, the at least one storage magazine 120 is temperature controlled. The at least one storage magazine 120 may be temperature controlled in order to improve and/or ensure the shelf life of the liquid consumables 30L (shown in FIG. 7A) contained in the consumables containers 30 removably held by the at least one storage magazine 120. The at least one storage magazine 120 may be temperature controlled in order to prevent denaturation of the liquid consumables 30L.

The loading/unloading tray 150 is configured to manually receive one or more of the consumables containers 30 from the operator. Specifically, the loading/unloading tray 150 is configured to manually receive one or more of the consumables containers 30 from the operator through the operator access station 170.

In some embodiments, the loading/unloading tray 150 comprises a plurality of tray holding positions 160. In some embodiments, the plurality of tray holding positions 160 is arranged in a circular manner. Each of the plurality of tray holding positions 160 is configured to removably hold one or more of the consumables containers 30. Therefore, the operator may manually load one or more of the consumables containers 30 into at least one of the plurality of tray holding positions 160 of the loading/unloading tray 150. In the illustrated embodiment of FIG. 2, the loading/unloading tray 150 comprises twelve tray holding positions 160. Further, each of the twelve holding positions 160 is configured to removably hold one of the consumables containers 30. Therefore, the loading/unloading tray 150 is configured to removably hold twelve of the consumables containers 30. In some other embodiments, the loading/unloading tray 150 may be configured to removably hold any number of the consumables containers 30, as per desired application attributes.

In some embodiments, at least some of the plurality of tray holding positions 160 are accessible by the operator through the operator access station 170. In some embodiments, the loading/unloading tray 150 is configured to rotate about a tray axis A1 and thereby move the at least some of the plurality of tray holding positions 160 between the operator access station 170 and the transfer system access station 180. In some embodiments, the loading/unloading tray 150 has a controllable rotation mechanism (not shown), such as a servo or stepper motor. The loading/unloading tray 150 may be configured to rotate about the tray axis A1 in a clockwise and/or in an anticlockwise direction. The servo or stepper motor may be coupled to the loading/unloading tray 150 through a system of belts, gears, or other similar arrangements known in the art. The controllable rotation mechanism may be controlled by the controller 200 (shown in FIG. 8A).

In some embodiments, the loading/unloading tray 150 is temperature controlled. The loading/unloading tray 150 may be temperature controlled in order to improve and/or ensure the shelf life of the liquid consumables 30L (shown in FIG. 7A) contained in the consumables containers 30 removably held by the loading/unloading tray 150. The loading/unloading tray 150 may be temperature controlled in order to prevent denaturation of the liquid consumables 30L.

The transfer system 250 is configured to automatically transfer one or more of the consumables containers 30 at least between the loading/unloading tray 150 and the at least one storage magazine 120. In particular, the transfer system 250 is configured to automatically transfer one or more of the consumables containers 30 at least between the loading/unloading tray 150 and the first storage magazine 120a and/or between the loading/unloading tray 150 and the second storage magazine 120b. In some embodiments, the transfer system 250 is configured to transfer one or more of the consumables containers 30 between the first storage magazine 120a and the second storage magazine 120b.

Since the plurality of tray holding positions 160 is arranged in the circular manner, the transfer system 250 may be able to access each of the plurality of tray holding positions 160. However, the transfer system 250 may access the loading/unloading tray 150 only at the transfer system access station 180.

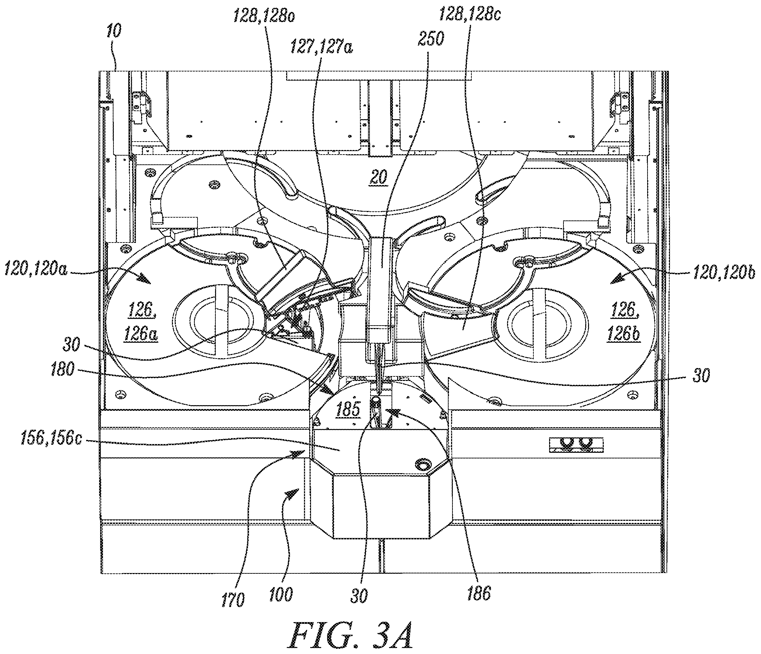

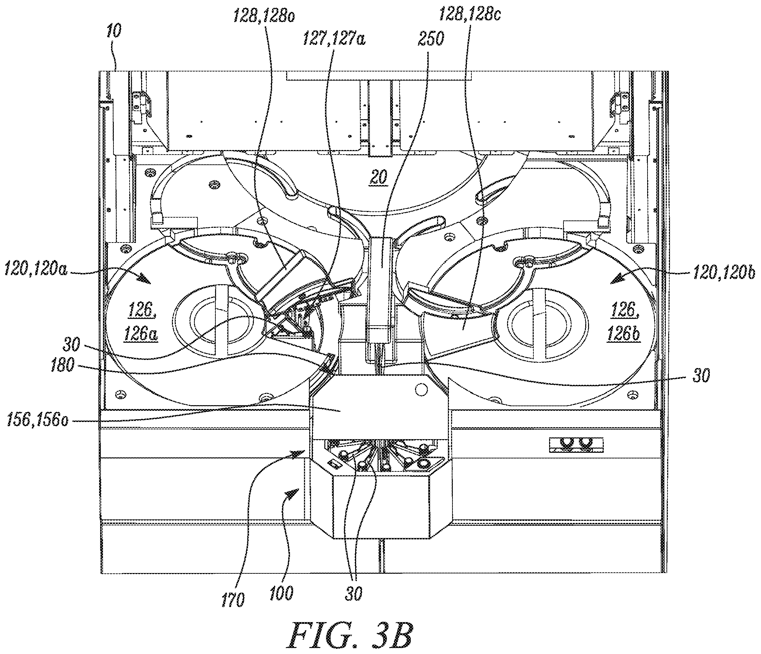

Referring to FIGS. 3A and 3B, in some embodiments, the operator access station 170 comprises a first cover 156. The first cover 156 is movable between an open position 156o and a closed position 156c. In the illustrated embodiment of FIG. 3A, the first cover 156 is in the closed position 156c. In the closed position 156c, the plurality of tray holding positions 160 (shown in FIG. 2) is inaccessible to the operator. In the illustrated embodiment of FIGS. 3A and 3B, the first cover 156 is a flap and hingedly attached to the operator access station 170. In some other embodiments, the first cover 156 may be a sliding cover.

In the illustrated embodiment of FIG. 3B, the first cover 156 is in the open position 156o. In the open position 156o, at least some of the plurality of tray holding positions 160 (shown in FIG. 2) are accessible to the operator. Therefore, the at least some of the plurality of tray holding positions 160 accessible to the operator may manually receive one or more of the consumables containers 30 from the operator. In the illustrated embodiment of FIG. 3B, the at least some of the plurality of tray holding positions 160 accessible to the operator are removably holding the consumables containers 30.

Referring to FIGS. 3A and 3B, in some embodiments, the consumables container loading/unloading system 100 comprises an interlock mechanism 157 (shown in FIG. 8A), such as an electric interlock and/or a mechanical interlock configured to releasably hold the loading/unloading tray 150 stationary when the first cover 156 is in the open position 156o and allow the loading/unloading tray 150 to move when the first cover 156 is in the closed position 156c. The interlock mechanism 157 may include various components, such as switches, latches, and so forth. The interlock mechanism 157 may be controlled by the controller 200 (shown in FIG. 8A). In some embodiments, moving the first cover 156 from the open position 156o to the closed position 156c may actuate the rotation of the loading/unloading tray 150.

In some embodiments, the first cover 156 remains in the closed position 156c when the loading/unloading tray 150 is moving between the operator access station 170 and the transfer system access station 180. This may restrict access of the operator to the plurality of tray holding positions 160 when the loading/unloading tray 150 is moving between the operator access station 170 and the transfer system access station 180, and may ensure that the operator is not injured by movement of the loading/unloading tray 150. Further, this may also prevent any damage to the loading/unloading tray 150 caused by an obstruction during the movement of the loading/unloading tray 150 between the operator access station 170 and the transfer system access station 180.

Referring to FIG. 3A, in some embodiments, the transfer system access station 180 comprises a second cover 185. In some embodiments, the second cover 185 may be attached to the transfer system access station 180 via fasteners.

The second cover 185 comprises an access opening 186 aligned with one or more of the plurality of tray holding positions 160 (shown in FIG. 2). In the illustrated embodiment of FIG. 3A, the access opening 186 is aligned with one of the plurality of tray holding positions 160. The one of the plurality of tray holding positions 160 aligned with the access opening 186 is removably holding one consumables container 30.

In some embodiments, the at least one storage magazine 120 comprises a third cover 126 configured to cover at least some of the plurality of carriers 130 (shown in FIG. 2). The third cover 126 comprises a storage opening 127 aligned with the remaining of the plurality of carriers 130.

In some embodiments, the third cover 126 further comprises a lid 128 attached to the third cover 126. The lid 128 is movable between an open position 128o and a closed position 128c. In the open position 128o of the lid 128, the remaining of the plurality of carriers 130 are accessible to the transfer system 250. In the closed position 128c of the lid 128, the plurality of carriers 130 is inaccessible to the transfer system 250. In the illustrated embodiment, the lid 128 is a flap and is hingedly attached to the third cover 126. In some other embodiments, the lid 128 may be a sliding lid.

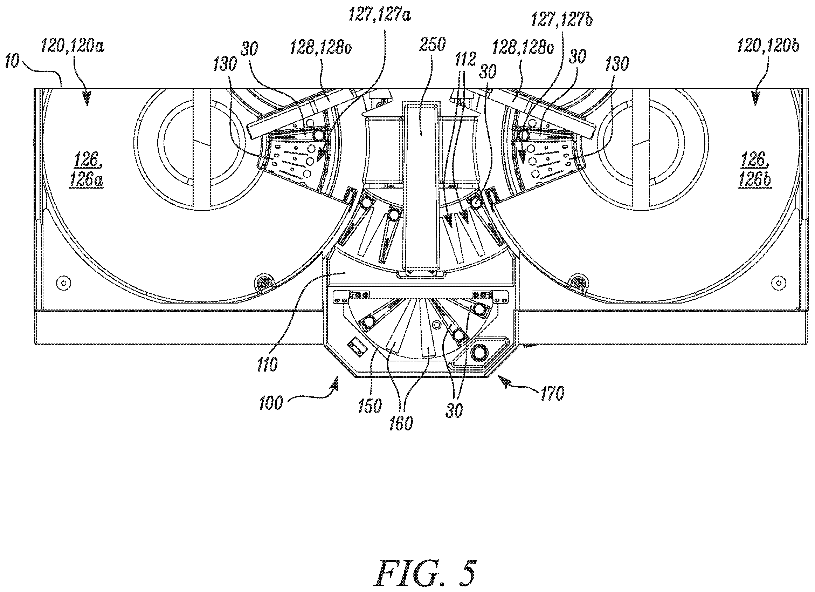

In the illustrated embodiment of FIGS. 3A and 3B, the first storage magazine 120a comprises a third cover 126a and the second storage magazine 120b comprises a third cover 126b. The third cover 126a comprises a storage opening 127a aligned with the remaining of the plurality of carriers 130 of the first storage magazine 120a and the third cover 126b comprises a storage opening 127b (shown in FIG. 5) aligned with the remaining of the plurality of carriers 130 of the second storage magazine 120b. The lid 128 of the third cover 126a is in the open position 128o and the lid 128 of the third cover 126b is in the closed position 128c. Therefore, the storage opening 127b of the third cover 126b is covered by the lid 128 of the third cover 126b in the closed position 128c and the plurality of carriers 130 of the second storage magazine 120b is inaccessible to the transfer system 250.

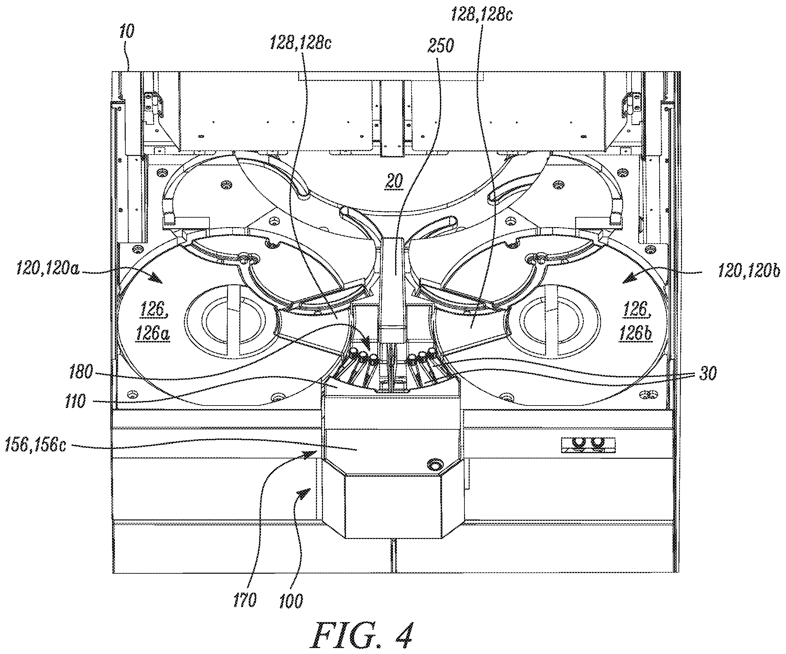

FIG. 4 illustrates a partial perspective view of the automated analyzer 10, according to another embodiment of the present disclosure. Some components of the automated analyzer 10 are not shown for illustrative purposes.

In some embodiments, the consumables container loading/unloading system 100 further comprises a buffer storage 110. The buffer storage 110 is configured to removably hold at least one of the consumables containers 30. In the illustrated embodiment of FIG. 4, the buffer storage 110 is removably holding six of the consumables containers 30. In some embodiments, the buffer storage 110 is also temperature controlled. The buffer storage 110 may be temperature controlled in order to improve and/or ensure the shelf life of the liquid consumables 30L (shown in FIG. 7A) contained in the consumables containers 30 removably held by the buffer storage 110. The buffer storage 110 may be temperature controlled in order to prevent denaturation of the liquid consumables 30L.

FIG. 5 illustrates a partial top view of the automated analyzer 10 according to an embodiment of the present disclosure. Some components of the automated analyzer 10 are not shown for illustrative purposes.

The buffer storage 110 comprises a plurality of buffer holding positions 112. As discussed above, the buffer storage 110 is configured to removably hold at least one of the consumables containers 30. Specifically, each of the plurality of buffer holding positions 112 is configured to removably hold at least one of the consumables containers 30. The transfer system 250 is configured to access each of the plurality of buffer holding positions 112. In the illustrated embodiment of FIG. 5, the buffer storage 110 comprises six buffer holding positions 112. Further, each of the six buffer holding positions 112 of the buffer storage 110 is configured to removably hold one of the consumables containers 30. Further, as shown in FIG. 5, the buffer storage 110 is removably holding three of the consumables containers 30. Therefore, three of the buffer holding positions 112 are occupied by the three of the consumables containers 30. Further, the remaining three of the buffer holding positions 112 are empty. In other words, the remaining three of the buffer holding positions 112 are available to receive and removably hold the consumables containers 30. In some other embodiments, the buffer storage 110 may be configured to removably hold any number of the consumables containers 30, as per desired application attributes.

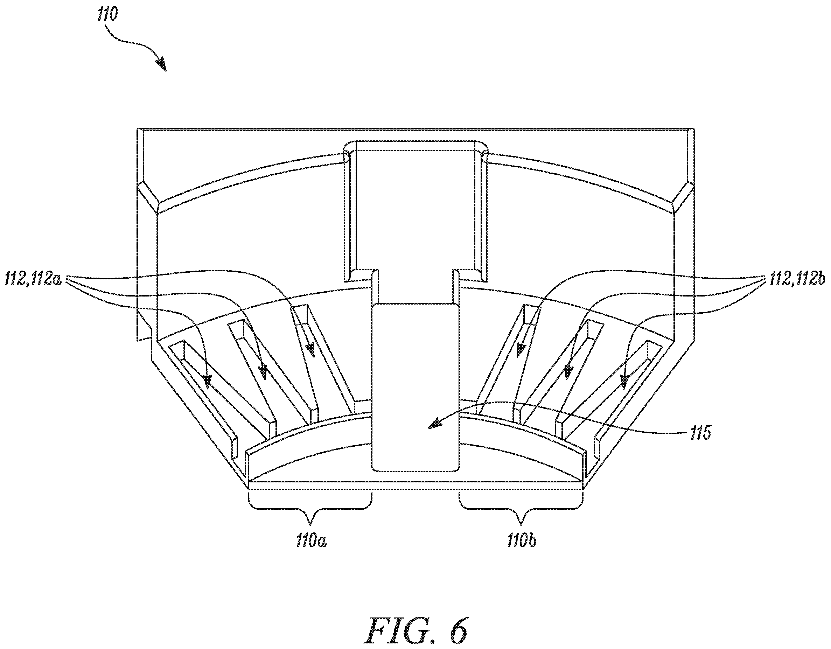

FIG. 6 illustrates a perspective view of the buffer storage 110, according to an embodiment of the present disclosure.

In some embodiments, the buffer storage 110 comprises a first portion 110a and a second portion 110b spaced apart from the first portion 110a. In some embodiments, the first portion 110a and the second portion 110b define a buffer opening 115 therebetween. The first portion 110a comprises a first set of buffer holding positions 112a from the plurality of buffer holding positions 112 and the second portion 110b comprises a second set of buffer holding positions 112b from the plurality of buffer holding positions 112.

As discussed above, the buffer storage 110 comprises six buffer holding positions 112. In the illustrated embodiment of FIG. 6, each of the first and second sets of buffer holding positions 112a, 112b comprises three buffer holding positions 112. In some other embodiments, the first and second sets of buffer holding positions 112a, 112b may comprise different numbers of the buffer holding positions 112. Further, the buffer storage 110 may comprise any number of the buffer holding positions 112, as per desired application attributes.

In the illustrated embodiment of FIG. 6, the plurality of buffer holding positions 112 is arranged in an arc-shape. However, in some other embodiments, the plurality of buffer holding positions 112 may be arranged in any other suitable shape, as per application attributes. For example, the plurality of buffer holding positions 112 may be linearly or circularly arranged.

Referring to FIGS. 3A and 6, in some embodiments, the buffer storage 110 may be removably placed on the second cover 185 of the transfer system access station 180, such that the access opening 186 is aligned with the buffer opening 115 of the buffer storage 110.

In some embodiments, the transfer system 250 is configured to access the loading/unloading tray 150 by moving vertically through the buffer opening 115 to transfer one or more of the consumables containers 30 between the loading/unloading tray 150 and the buffer storage 110 and/or between the loading/unloading tray 150 and the at least one storage magazine 120.

In some other embodiments, the transfer system 250 is configured to access the loading/unloading tray 150 by moving vertically through the buffer opening 115 and the access opening 186 to transfer one or more of the consumables containers 30 between the loading/unloading tray 150 and the buffer storage 110 and/or between the loading/unloading tray 150 and the at least one storage magazine 120.

In some embodiments, the buffer storage 110 may be attached to the second cover 185. In some embodiments, the buffer storage 110 may be removably attached to the second cover 185. The buffer storage 110 may be attached or removably attached to the second cover 185 of the transfer system access station 180 via any suitable attachment mechanisms, such as fasteners, adhesives, and so forth. However, in some other embodiments, the buffer storage 110 may be removably attached to any other component of the automated analyzer 10.

FIG. 7A illustrates a perspective view of one of the consumables containers 30, according to an embodiment of the present disclosure. In some embodiments, at least one of the consumables containers 30 comprises a neck 32 and/or a tab 34. In the illustrated embodiment of FIG. 7A, the consumables container 30 comprises both the neck 32 and the tab 34. Further, in some embodiments, the consumables container 30 may have a capacity of about 60 milliliters (mL). However in some other embodiments, the consumables container 30 may have a capacity of less than about 60 mL or a capacity of greater than about 60 mL. The consumables container 30 is at least partially filled with the liquid consumables 30L.

FIG. 7B illustrates a perspective view of one of the consumables containers 30, according to another embodiment of the present disclosure. In the illustrated embodiment of FIG. 7B, the consumables container 30 may contain a lesser volume of the liquid consumables 30L than the consumables container 30 shown in FIG. 7A. Therefore, the consumables container 30 shown in FIG. 7B may have different shape and/or dimensions than the consumables container 30 shown in FIG. 7A. In particular, the consumables container 30 shown in FIG. 7B may be smaller in size than the consumables container 30 shown in FIG. 7A. Further, the consumables container 30 shown in FIG. 7B may have a capacity of about 30 mL, about 15mL, or less than about 15mL.

In some cases, the consumables container 30 shown in FIG. 7B comprises the neck 32. However, the consumables container 30 does not include the tab 34 (shown in FIG. 7A). In such embodiments, the at least one of the consumables containers 30 is detachably coupled to an adapter 40. The adapter 40 comprises a tab 44.

Referring to FIGS. 7A and 7B, in some embodiments, at least one of the consumables containers 30 further comprises a window 35. The operator may visually inspect a level of the liquid consumables 30L remaining in the at least one of the consumables containers 30 via the window 35.

In some embodiments, each of the consumables containers 30 may further comprise one or more identifiers 39. The one or more identifiers 39 may include information related to the liquid consumables 30L contained in the consumables container 30. The information may include one or more analyses in which the liquid consumables 30L contained in consumables container 30 may be used, the name of the liquid consumables 30L, the expiration date of the liquid consumables 30L, the volume of the liquid consumables 30L, lot information, container information, and the like. In some embodiments, the one or more identifiers 39 may include a bar code, which may include encoded information and is optically read, as well as a Radio Frequency Identification (RFID) tag that may transmit the information stored via radio waves.

FIG. 7C illustrates a detailed side view of the transfer system 250, according to an embodiment of the present disclosure. In some embodiments, the transfer system 250 comprises a pick-and-place device 250p. The pick-and-place device 250p comprises a gripper 36.

In some embodiments, the gripper 36 is configured to engage the neck 32 and/or the tab 34 of at least one of the consumables containers 30 and thereby transfer the at least one of the consumables containers 30 to or from the at least one storage magazine 120 (shown in FIG. 5). In some embodiments, the gripper 36 is configured to engage the neck 32 and/or the tab 34 of at least one of the consumables containers 30 and thereby transfer the at least one of the consumables containers 30 to or from the loading/unloading tray 150 (shown in FIG. 5), or to or from the buffer storage 110 (shown in FIG. 5).

In some other embodiments, the gripper 36 is configured to engage the tab 44 (shown in FIG. 7B) of the adapter 40 detachably coupled to at least one of the consumables containers 30 and thereby transfer the at least one of the consumables containers 30 to or from the at least one storage magazine 120 (shown in FIG. 5). In some other embodiments, the gripper 36 is configured to engage the tab 44 (shown in FIG. 7B) of the adapter 40 detachably coupled to at least one of the consumables containers 30 and thereby transfer the at least one of the consumables containers 30 to or from the loading/unloading tray 150 (shown in FIG. 5), or to or from the buffer storage 110 (shown in FIG. 5).

In some embodiments, the pick-and-place device 250p further comprises an authenticator 37 disposed on the gripper 36. The authenticator 37 comprises a sensor 38 configured to authenticate one or more of the consumables containers 30 engaged by the gripper 36. In some embodiments, the transfer system 250 comprises a sensor disposed on the gripper 36 configured to read the one or more identifiers 39 of one or more of the consumables containers 30. The sensor may comprise a barcode reader, a QR code reader, or an RFID reader, which may read out information from the one or more identifiers 39 on the consumables containers 30. In some embodiments, the controller 200 (shown in FIG. 8A) may store the information in a memory 218 (shown in FIG. 8A) of the controller 200.

In some embodiments, the transfer system 250 is configured to rotate about a transfer axis A2. The transfer system 250 may be configured to rotate about the transfer axis A2 in a clockwise and/or in an anticlockwise direction. Further, in some embodiments, the transfer system 250 is further configured to move vertically along the transfer axis A2. Specifically, in some embodiments, the transfer system 250 is further configured to move vertically upwards and downwards along the transfer axis A2. The transfer system 250 may be configured to rotate about the transfer axis A2 and/or move vertically upwards and downwards along the transfer axis A2 by a transfer drive mechanism (not shown). The transfer drive mechanism may be controlled by the controller 200. The transfer drive mechanism may include any conventional mechanism well known to those skilled in the art. For example, the transfer drive mechanism may include one or more servo and/or stepper motors coupled to the pick-and-place device 250p of the transfer system 250 through a system of belts, gears, or other similar arrangements known in the art.

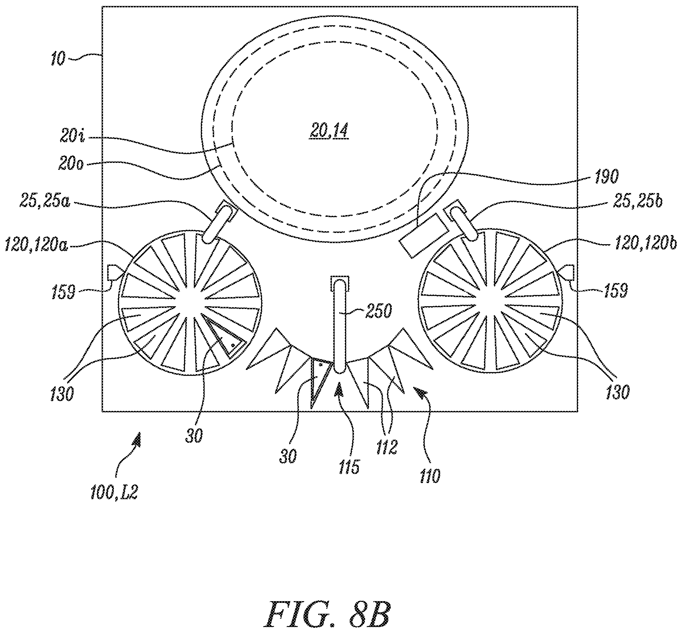

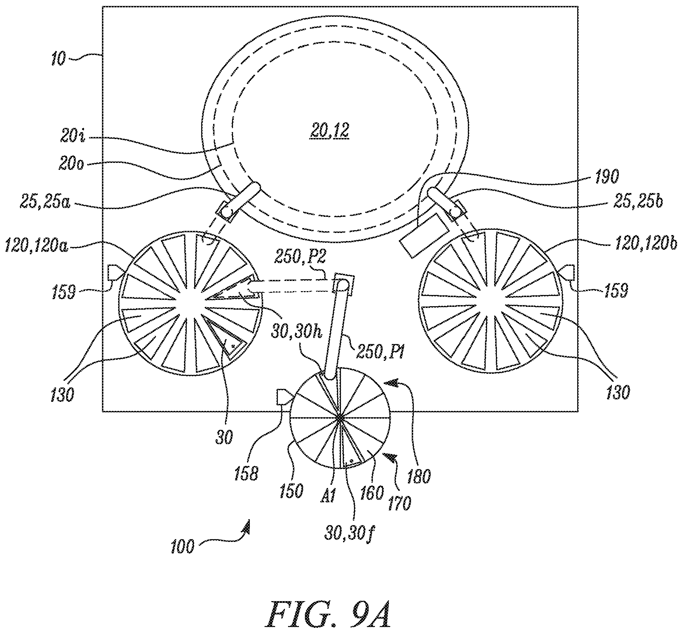

FIGS. 8A and 8B illustrate partial schematic top views of the automated analyzer 10 for different levels, according to an embodiment of the present disclosure. Some components of the automated analyzer 10 are not shown for illustrative purposes. Further, FIG. 8A shows a first level L1 of the consumables container loading/unloading system 100 and FIG. 8B shows a second level L2 of the consumables container loading/unloading system 100. Further, the at least one analyzer arrangement 20 has an active mode 12 (shown in FIG. 9A) and an idle mode 14.

In some embodiments, the automated analyzer 10 further comprises at least one reagent dispensing apparatus 25 corresponding to the at least one storage magazine 120. For example, the automated analyzer 10 comprises a first reagent dispensing apparatus 25a corresponding to the first storage magazine 120a and a second reagent dispensing apparatus 25b corresponding to the second storage magazine 120b. In some embodiments, the at least one reagent dispensing apparatus 25 may include an arm that may move vertically up and down and may be configured to rotate about a central axis (not shown). The arm may be configured to rotate about the central axis in a clockwise and/or in an anticlockwise direction. The arm may be controlled by the controller 200.

The at least one analyzer arrangement 20 is configured to consume the at least liquid consumables 30L (shown in FIG. 7A) when in the active mode 12. Further, the at least liquid consumables 30L are delivered to the at least one analyzer arrangement 20 via automated pipetting when the at least one analyzer arrangement 20 is in the active mode 12. Specifically, the at least liquid consumables 30L are delivered to the at least one analyzer arrangement 20 via automated pipetting by the at least one reagent dispensing apparatus 25 when the at least one analyzer arrangement 20 is in the active mode 12.

In the illustrated embodiment of FIGS. 8A and 8B, the at least one analyzer arrangement 20 is in the idle mode 14. In some embodiments, the at least one reagent dispensing apparatus 25 is inactive in the idle mode 14 of the at least one analyzer arrangement 20.

In some embodiments, the at least one analyzer arrangement 20 comprises a first analyzer arrangement 20i and a second analyzer arrangement 20o. Each of the first and second analyzer arrangements 20i, 20o comprises the active mode 12 and the idle mode 14, and is configured to consume the at least liquid consumables 30L when in the active mode 12. In the illustrated embodiment of FIG. 8A, the first analyzer arrangement 20i and the second analyzer arrangement 20o are arranged circularly in concentric circles.

In some examples, the first analyzer arrangement 20i corresponds to the first storage magazine 120a and the second analyzer arrangement 20o corresponds to the second storage magazine 120b. In such examples, the first analyzer arrangement 20i is configured to consume the at least liquid consumables 30L delivered to the first analyzer arrangement 20i via automated pipetting by the first reagent dispensing apparatus 25a when the first analyzer arrangement 20i is in the active mode 12. Further, the second analyzer arrangement 20o is configured to consume the at least liquid consumables 30L delivered to the second analyzer arrangement 20o via automated pipetting by the second reagent dispensing apparatus 25b when the second analyzer arrangement 20o is in the active mode 12.

The at least one storage magazine 120 is configured to manually receive one or more of the consumables containers 30 from the operator while the at least one analyzer arrangement 20 is in the idle mode 14. For example, the operator may manually load/unload the consumables containers 30 into or from the at least one storage magazine 120 in the morning or the start of a working day/shift. In some embodiments, the operator may manually load/unload the consumables containers 30 into or from the at least one storage magazine 120 when a number of the consumables containers 30 to be loaded into the at least one storage magazine 120 is substantially greater than a number of the at least some of the plurality of tray holding positions 160 accessible to the operator.

In some embodiments, the consumables container loading/unloading system 100 further comprises a first reading unit 158. As illustrated in FIG. 8A, the first reading unit 158 may be located proximal to the loading/unloading tray 150. In some embodiments, the consumables container loading/unloading system 100 further comprises at least one second reading unit 159 corresponding to the at least one storage magazine 120. For example, the consumables container loading/unloading system 100 further comprises one second reading unit 159 corresponding to the first storage magazine 120a and one second reading unit 159 corresponding to the second storage magazine 120b. Therefore, in the illustrated embodiment of FIGS. 8A and 8B, at least one second reading unit 159 comprises two second reading units 159. In some embodiments, the first and second reading units 158, 159 can, for example, comprise a barcode reader, a QR code reader, or an RFID reader, which may read out information from the one or more identifiers 39 (shown in FIG. 7A) on the consumables containers 30. In some other embodiments, the first and second reading units 158, 159 can comprise a digital camera which records a digital image of the consumables containers 30 and compares the digital image to corresponding information stored in the memory 218 in order to identify the different consumables containers 30.

In some embodiments, the consumables container loading/unloading system 100 further comprises a waste disposal station 190. In some embodiments, the at least one storage magazine 120 comprises one or more sensors (e.g., optical sensors, weight sensors, etc.) to determine a remaining volume of the liquid consumables 30L. The transfer system 250 transfers one or more of the consumables containers 30 from the at least one storage magazine 120 to the waste disposal station 190 upon detecting that the one or more of the consumables containers 30 contain the liquid consumables 30L below a predetermined threshold volume, i.e., when the remaining volume is less than the predetermined threshold volume. The predetermined threshold volume may be close to 0 mL, for example, 1 mL, 0.5 mL, 0.1 mL, and so forth. In some embodiments, the transfer system 250 transfers one or more of the consumables containers 30 from the at least one storage magazine 120 to the waste disposal station 190 upon detecting that the liquid consumables 30L contained in the one or more of the consumables containers 30 has exceeded the expiration date. In some embodiments, the remaining volume of the liquid consumables 30L may be determined based on the amount of the liquid consumables 30L used and the number of prior test orders corresponding to the liquid consumables 30L contained in the one or more of the consumables containers 30.

In some embodiments, the automated analyzer 10 further comprises the controller 200. In some embodiments, the controller 200 may be included in a computing device 201 communicably coupled to the automated analyzer 10. The computing device 201 may comprise an input unit 202 communicably coupled to the controller 200. The input unit 202 may comprise a keyboard, a mouse, and the like, and acquires various information necessary for the analysis the biological sample, instruction information for the analysis, the information related to the test orders, and the like from the operator. In some embodiments, the controller 200 may acquire the various information from an external device via a communication network (not shown). In some embodiments, the memory 218 may include a hard disk that magnetically or electronically stores information and electrically loads various programs related to a process from the hard disk when the controller 200 executes one or more operations. Further, the memory 218 may store information related to a result of the analysis of the biological sample. The memory 218 may include an auxiliary storage device that can read information stored in a storage medium, such as a CD-ROM, a DVD-ROM, or the like. The computing device 201 may comprise an output unit 203 communicably coupled to the controller 200 and configured to output various information including the result of the analysis of the sample. The output unit 203 may include a display, a printer, a speaker, and the like. The output unit 203 may output the various information to an external device via a communication network (not shown). The output unit 203 may also present information related to the test orders to the operator. The information may be used by the operator to perform operations, such as specifying analytical items and defining the consumables containers 30 to be removed from the automated analyzer 10.

In some embodiments, a scheduler 205 is included in the controller 200 of the automated analyzer 10. In some embodiments, the scheduler 205 includes software stored in a non-transient memory 210 of the controller 200. In some embodiments, the scheduler 205 includes software stored in the memory 218 of the computing device 201. The scheduler 205 may plan a workflow of the automated analyzer 10.

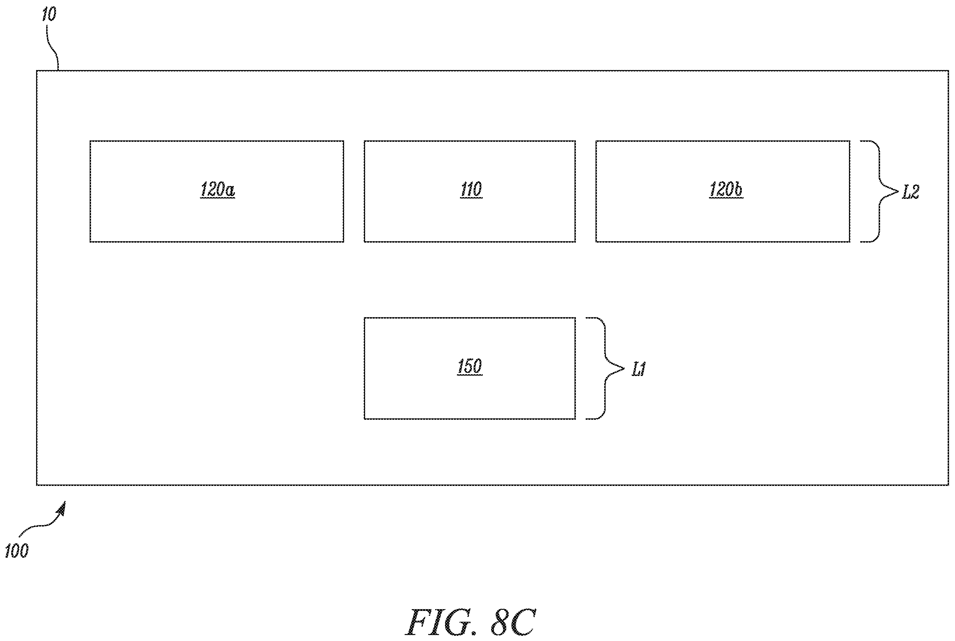

FIG. 8C illustrates a partial schematic side view of the automated analyzer 10, according to an embodiment of the present disclosure. As is apparent from FIG. 8C, the second level L2 of the consumables container loading/unloading system 100 is vertically located at a higher position than the first level L1 of the consumables container loading/unloading system 100.

Referring to FIGS. 8A-8C, the loading/unloading tray 150 and the buffer storage 110 are located at different levels of the consumables container loading/unloading system 100. Specifically, the buffer storage 110 is vertically located at a different level than the loading/unloading tray 150. In some embodiments, the buffer storage 110 is vertically located at a higher level than the loading/unloading tray 150. Therefore, the consumables container loading/unloading system 100 may be compact.

Further, in some embodiments, the buffer storage 110 is vertically located at a same level as the at least one storage magazine 120. Therefore, the loading/unloading tray 150 is vertically located at a different level than the at least one storage magazine 120.

In the illustrated embodiment of FIGS. 8A-8C, the loading/unloading tray 150 is located at the first level L1 and the buffer storage 110 is located at the second level L2. Further, both the buffer storage 110 and the at least one storage magazine 120 are located at the second level L2. Therefore, both the buffer storage 110 and the at least one storage magazine 120 are located at the second level L2. In some other embodiments, the loading/unloading tray 150 may be vertically located at a same level as the at least one storage magazine 120. For example, the loading/unloading tray 150 and the at least one storage magazine 120 may be located at the first level L1. In some other embodiments, the loading/unloading tray 150, the buffer storage 110, and the at least one storage magazine 120 may be located at different levels.

FIGS. 9A-9F illustrate partial schematic top views of the automated analyzer 10 in different configurations, according to an embodiment of the present disclosure. In the illustrated embodiment of FIGS. 9A-9F, the at least one analyzer arrangement 20 is in the active mode 12. In the active mode 12, the at least one analyzer arrangement 20 may automatically perform the analysis of the biological samples. The at least one analyzer arrangement 20 may be configured to rotate about a central analyzer axis (not shown) by an analyzer drive mechanism (not shown). The analyzer drive mechanism may include any conventional mechanism well known to those skilled in the art. For example, the analyzer drive mechanism may include one or more servo and/or stepper motors coupled to the at least one analyzer arrangement 20 through a system of belts, gears, or other similar arrangements known in the art. The analyzer drive mechanism may be controlled by the controller 200. In some embodiments, the first analyzer arrangement 20i and the second analyzer arrangement 20o may be configured to rotate about the central analyzer axis in a clockwise and/or in an anticlockwise direction. In some embodiments, the first analyzer arrangement 20i and the second analyzer arrangement 20o may be configured to rotate independently from each other.

As discussed above, the loading/unloading tray 150 is configured to manually receive one or more of the consumables containers 30 from the operator. Further, the loading/unloading tray 150 is configured to manually receive one or more of the consumables containers 30 from the operator at least while the at least one analyzer arrangement 20 is in the active mode 12. In some embodiments, the loading/unloading tray 150 is configured to manually receive one or more of the consumables containers 30 from the operator at least while at least one of the first and second analyzer arrangements 20i, 20o is in the active mode 12.

Since the loading/unloading tray 150 is configured to manually receive one or more of the consumables containers 30 from the operator at least while the at least one analyzer arrangement 20 is in the active mode 12, the operator access station 170 is configured to allow the operator to manually access the loading/unloading tray 150 at least while the at least one analyzer arrangement 20 is in the active mode 12. However, the transfer system access station 180 is inaccessible to the operator at least while the at least one analyzer arrangement 20 is in the active mode 12. This may ensure operational safety. Further, the operator may not have to pause or interrupt the one or more operations of the automated analyzer 10 in order to load/unload the one or more of the consumables containers 30 into or from the automated analyzer 10.

Further, the loading/unloading tray 150 is configured to move the at least some of the plurality of tray holding positions 160 between the operator access station 170 and the transfer system access station 180 at least while the at least one analyzer arrangement 20 is in the active mode 12. In particular, the loading/unloading tray 150 is configured to rotate about the tray axis A1 to move the at least some of the plurality of tray holding positions 160 between the operator access station 170 and the transfer system access station 180 at least while the at least one analyzer arrangement 20 is in the active mode 12. The rotation about the tray axis A1 may be controlled by the controller 200.

The transfer system 250 transfers one or more of the consumables containers 30 to or from the at least one storage magazine 120 at least while the loading/unloading tray 150 manually receives one or more of the consumables containers 30 from the operator.

In some embodiments, the transfer system 250 transfers one or more of the consumables containers 30 between the at least one storage magazine 120 and the loading/unloading tray 150 at least while the loading/unloading tray 150 manually receives one or more of the consumables containers 30 from the operator. In some embodiments, the transfer system 250 transfers one or more of the consumables containers 30 between the at least one storage magazine 120 and the loading/unloading tray 150 at least while the loading/unloading tray 150 manually receives one or more of the consumables containers 30 from the operator and the at least one analyzer arrangement 20 is in the active mode 12. In some embodiments, the scheduler 205 is configured to identify and/or create a container access period of the at least one storage magazine 120 when the at least one analyzer arrangement 20 is in the active mode 12. The transfer system 250 transfers at least one of the consumables containers 30 between the at least one storage magazine 120 and the loading/unloading tray 150 in the container access period without affecting a timing of the active mode 12. The container access period may be chosen such that an operation of the at least one analyzer arrangement 20 in the active mode 12 is not interrupted due to the transfer of the at least one of the consumables containers 30 between the at least one storage magazine 120 and the loading/unloading tray 150. In other words, the transfer of the at least one of the consumables containers 30 between the at least one storage magazine 120 and the loading/unloading tray 150 during the container access period may not interfere with the operation of the at least one analyzer arrangement 20 in the active mode 12.

For example, the transfer system 250 may move from a position P1 to a position P2 to transfer one or more of the consumables containers 30 to the first storage magazine 120a from the loading/unloading tray 150 at least while the loading/unloading tray 150 manually receives one or more of the consumables containers 30 from the operator.

The one or more of the consumables containers 30 received by the loading/unloading tray 150 from the operator to be transferred or loaded into the automated analyzer 10 may be referred to as one or more of the consumables containers 30f. Further, the one or more of the consumables containers 30 that are being transferred or loaded into the automated analyzer 10 may be referred to as one or of the consumables containers 30h. The liquid consumables 30L (shown in FIG. 7A) contained in the one or more of the consumables containers 30f may be required for analysis of the biological samples of the current test orders.

In the illustrated embodiment of FIG. 9A, the transfer system 250 moves from the position P1 to the position P2 to transfer the consumables container 30h to the first storage magazine 120a from the loading/unloading tray 150 at least while the loading/unloading tray 150 manually receives one or more of the consumables containers 30f from the operator. The consumables container 30h may be previously received by the loading/unloading tray 150 from the operator to be transferred or loaded into the automated analyzer 10.

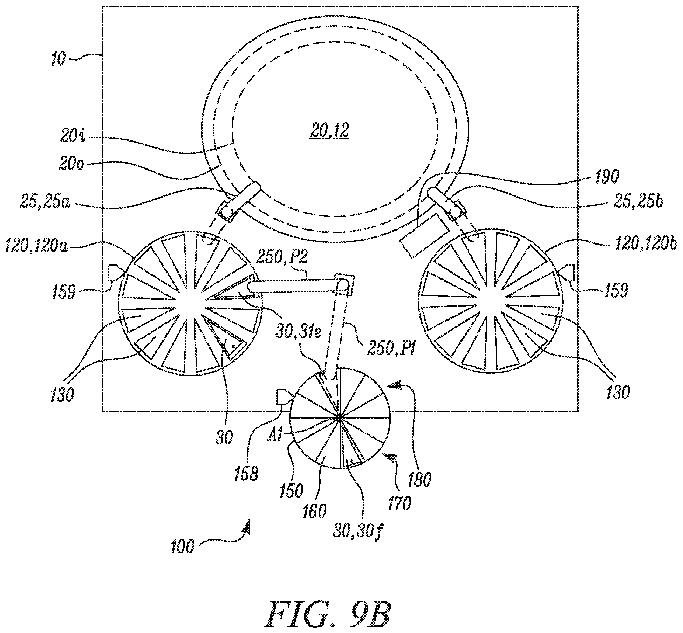

The one or more of the consumables containers 30 to be removed or unloaded from the automated analyzer 10 may be referred to as one or more of the consumables containers 30e (shown in FIG. 9B). The liquid consumables 30L (shown in FIG. 7A) contained in the one or more of the consumables containers 30e may not be required for the analysis of the biological samples of the current test orders. In some embodiments, the one or more of the consumables containers 30e may be infrequently used. In some embodiments, the one or more of the consumables containers 30e may contain the liquid consumables 30L less than the predetermined threshold volume. In some embodiments, the one or more of the consumables containers 30e may contain liquid consumables 30L which exceeded the expiration date.

The transfer system 250 may move from the position P2 to the position P1 to transfer one or more of the consumables containers 30 from the first storage magazine 120a to the loading/unloading tray 150 at least while the loading/unloading tray 150 manually receives one or more of the consumables containers 30 from the operator. In the illustrated embodiment of FIG. 9B, the transfer system 250 moves from the position P2 to the position P1 to transfer the consumables container 30e to the loading/unloading tray 150 from the first storage magazine 120a at least while the loading/unloading tray 150 manually receives one or more of the consumables containers 30f from the operator. The consumables container 30e may further be removed or unloaded from the automated analyzer 10 via the loading/unloading tray 150.

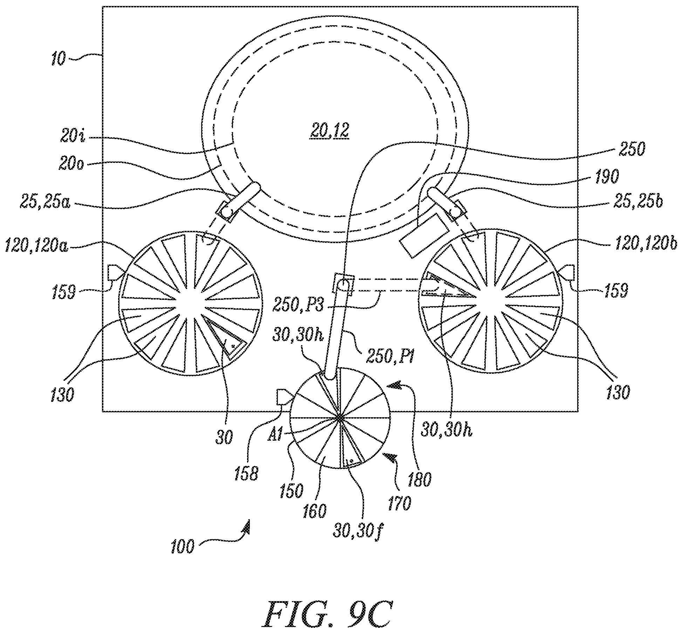

In another example, the transfer system 250 may move from the position P1 to a position P3 (shown in FIG. 9C) to transfer one or more of the consumables containers 30 to the second storage magazine 120b from the loading/unloading tray 150 at least while the loading/unloading tray 150 manually receives one or more of the consumables containers 30 from the operator. In the illustrated embodiment of FIG. 9C, the transfer system 250 moves from the position P1 to the position P3 to transfer the consumables container 30h to the second storage magazine 120b from the loading/unloading tray 150 at least while the loading/unloading tray 150 manually receives one or more of the consumables containers 30f from the operator. The consumables container 30h may be previously received by the loading/unloading tray 150 from the operator to be transferred or loaded into the automated analyzer 10.

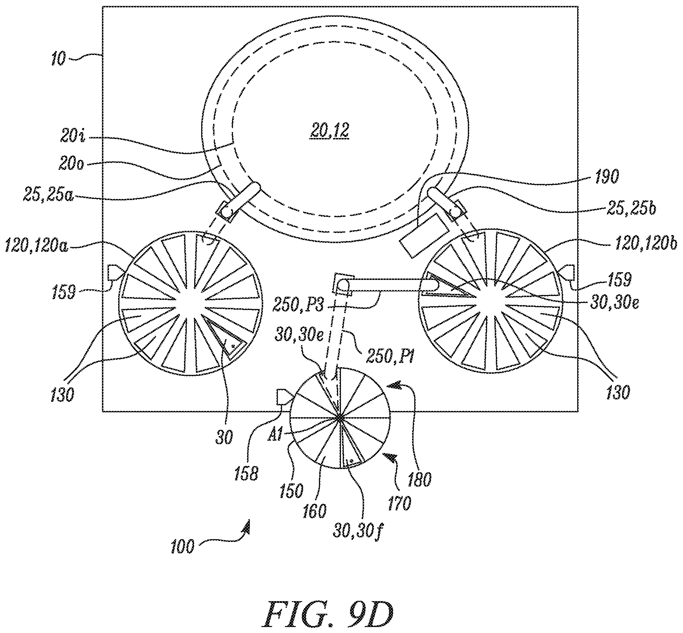

Similarly, the transfer system 250 may move from the position P3 to the position P1 to transfer one or more of the consumables containers 30 from the second storage magazine 120b to the loading/unloading tray 150 at least while the loading/unloading tray 150 manually receives one or more of the consumables containers 30 from the operator. In the illustrated embodiment of FIG. 9D, the transfer system 250 moves from the position P3 to the position P1 to transfer the consumables container 30e to the loading/unloading tray 150 from the second storage magazine 120b at least while the loading/unloading tray 150 manually receives one or more of the consumables containers 30f from the operator. The consumables container 30e may further be removed or unloaded from the automated analyzer 10 via the loading/unloading tray 150.

In some embodiments, the transfer system 250 is further configured to transfer one or more of the consumables containers 30 between the first storage magazine 120a and the second storage magazine 120b at least while the loading/unloading tray 150 manually receives one or more of the consumables containers 30 from the operator.

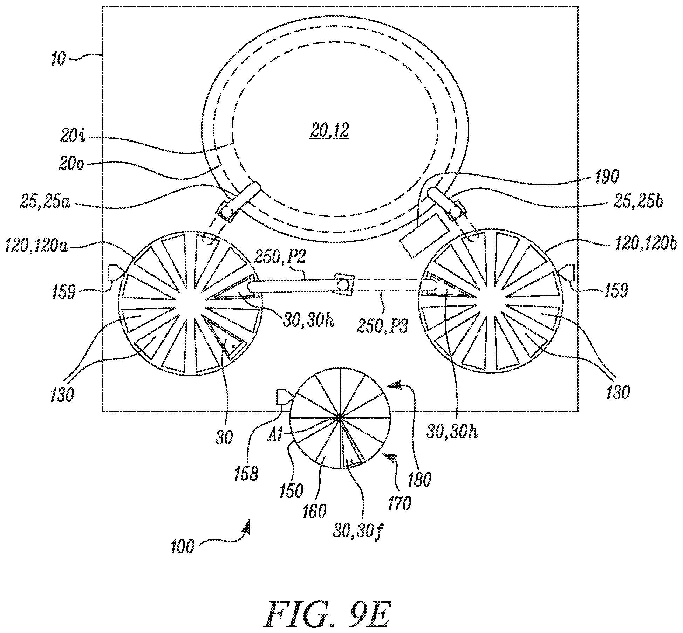

For example, the transfer system 250 may move between the positions P2 and P3 to transfer one or more of the consumables containers 30 between the first and the second storage magazines 120a, 120b at least while the loading/unloading tray 150 manually receives one or more of the consumables containers 30 from the operator. In the illustrated embodiment of FIG. 9E, the transfer system 250 moves from the position P2 to the position P3 to transfer the consumables container 30h to the second storage magazine 120b from the first storage magazine 120a at least while the loading/unloading tray 150 manually receives one or more of the consumables containers 30f from the operator. The consumables container 30h may be transferred from the first storage magazine 120a to the second storage magazine 120b to improve a throughput of the automated analyzer 10. In particular, the consumables container 30h may be transferred from the first storage magazine 120a to the second storage magazine 120b to balance the test orders between the first analyzer arrangement 20i and the second analyzer arrangement 20o.

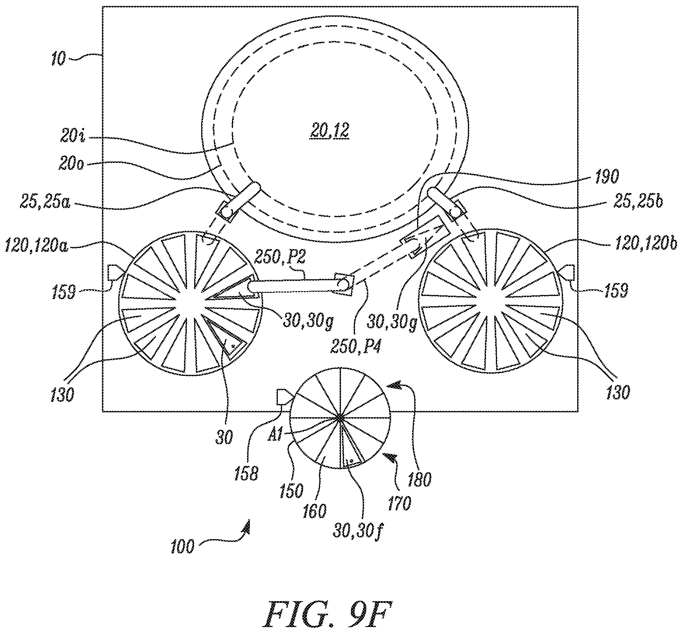

The one or more of the consumables containers 30 that contain the liquid consumables 30L (shown in FIG. 7A) below the predetermined threshold volume may be referred to as one or more of the consumables containers 30g (shown in FIG. 9F).

In some embodiments, the transfer system 250 may move from the positions P2 and/or P3 to a position P4 to transfer one or more of the consumables containers 30 from the first and/or second storage magazines 120a, 120b to the waste disposal station 190 at least while the loading/unloading tray 150 manually receives one or more of the consumables containers 30 from the operator. In the illustrated embodiment of FIG. 9F, the transfer system 250 may move from the position P2 to the position P4 to transfer the consumables container 30g from the first storage magazine 120a to the waste disposal station 190 at least while the loading/unloading tray 150 manually receives one or more of the consumables containers 30f from the operator. Similarly, the transfer system 250 may move from the position P3 (shown in FIG. 9E) to the position P4 to transfer the consumables container 30g from the second storage magazine 120b to the waste disposal station 190 at least while the loading/unloading tray 150 manually receives one or more of the consumables containers 30f from the operator.

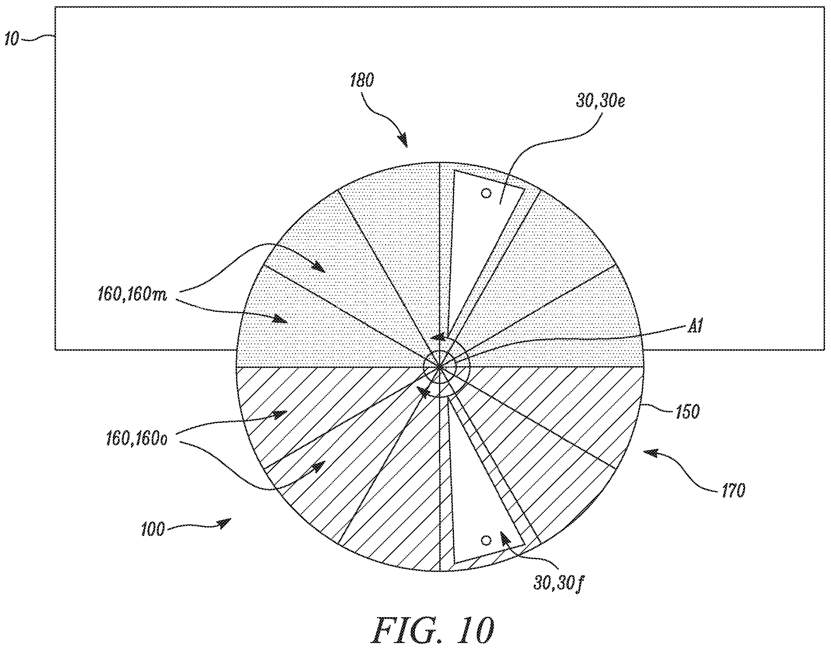

FIG. 10 illustrates a schematic top view of the loading/unloading tray 150, according to another embodiment of the present disclosure.

In some embodiments, the plurality of tray holding positions 160 comprises a first set of tray holding positions 160o and a second set of tray holding positions 160m. The first set of tray holding positions 160o is reserved to manually receive one or more of the consumables containers 30 from the operator and is unable to receive one or more of the consumables containers 30 from the transfer system 250. Specifically, the first set of tray holding positions 160o is reserved to manually receive one or more of the consumables containers 30f from the operator and is unable to receive one or more of the consumables containers 30e from the transfer system 250.

Further, the second set of tray holding positions 160m is reserved to receive one or more of the consumables containers 30 from the transfer system 250 (shown in FIG. 2) and is unable to manually receive one or more of the consumables containers 30 from the operator. Specifically, the second set of tray holding positions 160m is reserved to receive one or more of the consumables containers 30e from the transfer system 250 and is unable to manually receive one or more of the consumables containers 30 from the operator.

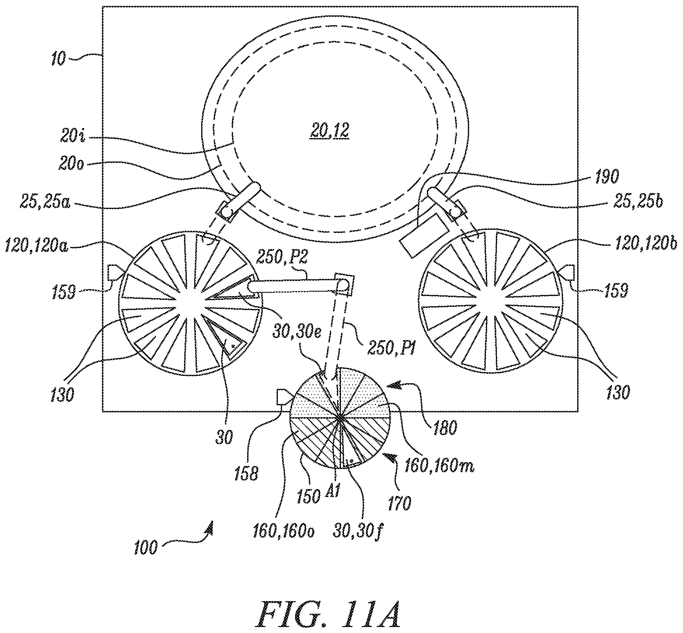

FIGS. 11A-11B illustrate partial schematic top views of the automated analyzer 10 in different configurations, according to an embodiment of the present disclosure. In the illustrated embodiment of FIGS. 11A-11B, the at least one analyzer arrangement 20 is in the active mode 12. The consumables container loading/unloading system 100 comprises the loading/unloading tray 150 as shown in FIG. 10.

As illustrated in FIG. 11A, in some embodiments, the loading/unloading tray 150 selectively moves the first set of tray holding positions 160o to the operator access station 170 for manually receiving one or more of the consumables containers 30 from the operator. In some embodiments, the transfer system 250 transfers one or more of the consumables containers 30 from the at least one storage magazine 120 to the second set of tray holding positions 160m at least while the first set of tray holding positions 160o of the loading/unloading tray 150 manually receives one or more of the consumables containers 30 from the operator. For example, as shown in FIG. 11A, the transfer system 250 may move from the position P2 to the position P1 to transfer the consumables container 30e to the loading/unloading tray 150 from the first storage magazine 120a at least while the loading/unloading tray 150 manually receives one or more of the consumables containers 30f from the operator. The consumables container 30e may further be removed or unloaded from the automated analyzer 10 via the second set of tray holding positions 160m of the loading/unloading tray 150.

In some embodiments, the loading/unloading tray 150 selectively moves the second set of tray holding positions 160m to the transfer system access station 180 for receiving one or more of the consumables containers 30e from the transfer system 250. For example, upon determining that the one or more of the consumables containers 30e need to be removed from the at least one storage magazine 120, the loading/unloading tray 150 selectively moves the second set of tray holding positions 160m to the transfer system access station 180 for receiving one or more of the consumables containers 30e from the transfer system 250. In some embodiments, the one or more of the consumables containers 30e that need to be removed from the at least one storage magazine 120 may be determined by the operator. In some embodiments, the one or more of the consumables containers 30e that need to be removed from the at least one storage magazine 120 may be determined automatically by the controller 200.

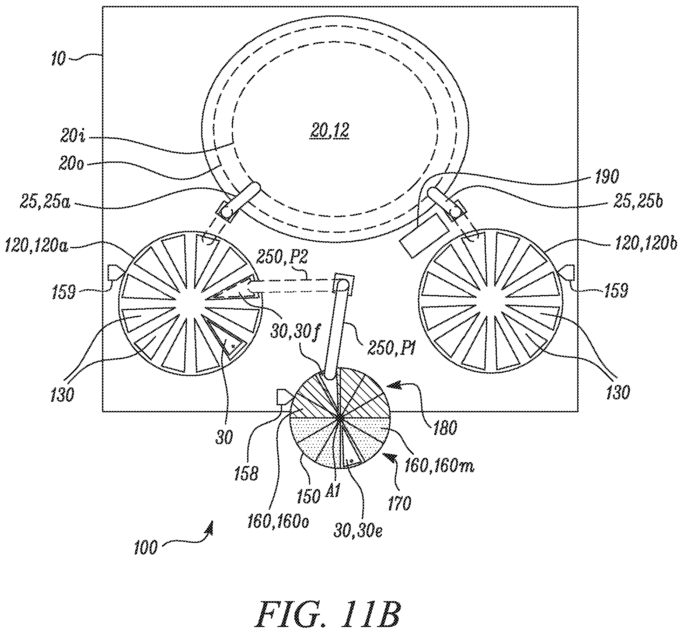

As illustrated in FIG. 11B, the loading/unloading tray 150 selectively moves the first set of tray holding positions 160o to the transfer system access station 180 for removal of one or more of the consumables containers 30f from the first set of tray holding positions 160o by the transfer system 250 after manually receiving one or more of the consumables containers 30f from the operator. In some embodiments, the loading/unloading tray 150 selectively moves the second set of tray holding positions 160m to the operator access station 170 for manual removal of one or more of the consumables containers 30e from the second set of tray holding positions 160m by the operator.

In some embodiments, the transfer system 250 transfers one or more of the consumables containers 30f from the first set of tray holding positions 160o at least while the operator manually removes one or more of the consumables containers 30e from the second set of tray holding positions 160m of the loading/unloading tray 150. For example, as shown in FIG. 11B, the transfer system 250 may move from the position P1 to the position P2 to transfer the one or more of consumables containers 30f from the loading/unloading tray 150 to the first storage magazine 120a at least while the operator manually removes or unloads the consumables container 30e from the second set of tray holding positions 160m of the loading/unloading tray 150.

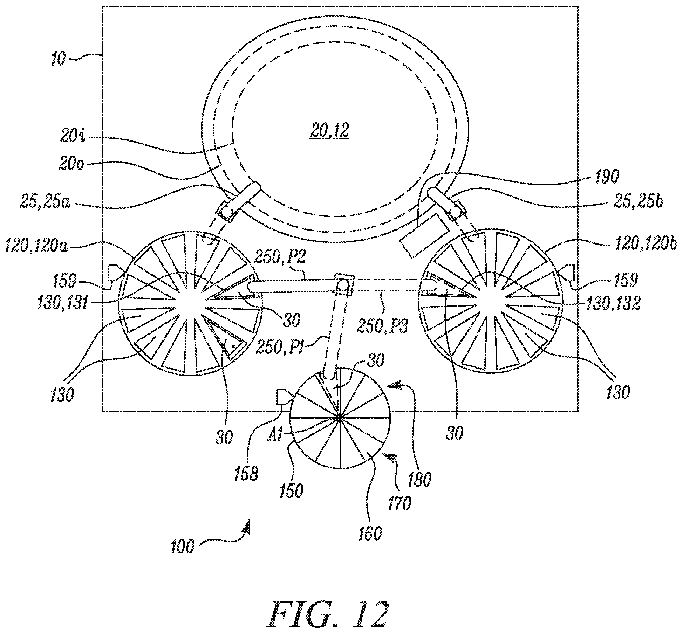

FIG. 12 illustrates a partial schematic top view of the automated analyzer 10, according to an embodiment of the present disclosure. In the illustrated embodiment of FIG. 12, the at least one analyzer arrangement 20 is in the active mode 12.

In some embodiments, the transfer system 250 and the loading/unloading tray 150 are configured to rearrange at least one of the consumables containers 30 removably held by the at least one storage magazine 120 in a first holding position by transferring the at least one of the consumables containers 30 to the loading/unloading tray 150 and transferring the at least one of the consumables containers 30 to the at least one storage magazine 120 in a second holding position.

For example, as illustrated in FIG. 12, the transfer system 250 and the loading/unloading tray 150 are configured to rearrange the consumables container 30 removably held by the first storage magazine 120a in a first holding position 131 by transferring the consumables container 30 to the loading/unloading tray 150, and then transferring the consumables containers 30 from the loading/unloading tray 150 to the second storage magazine 120b in a second holding position 132. Specifically, the transfer system 250 moves from the position P2 to the position P1 for transferring the consumables container 30 from the first holding position 131 of the first storage magazine 120a to the loading/unloading tray 150. Further, the transfer system 250 moves from the position P1 to the position P3 for transferring the consumables container 30 from the loading/unloading tray 150 to the second holding position 132 of the second storage magazine 120b.

In the illustrated example, the first and second holding positions 131, 132 are in the first and second storage magazines 120a,120b, respectively. However, in some other examples, both the first and second holding positions 131, 132 may be in the first storage magazine 120a or in the second storage magazine 120b.

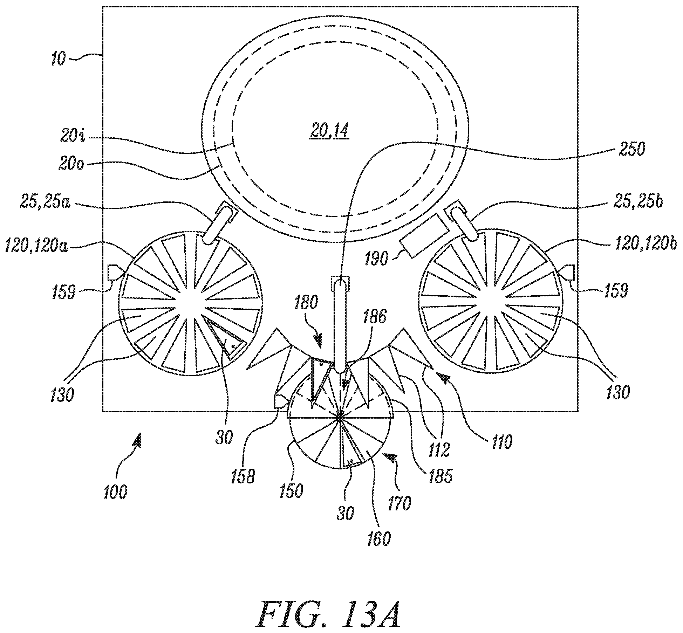

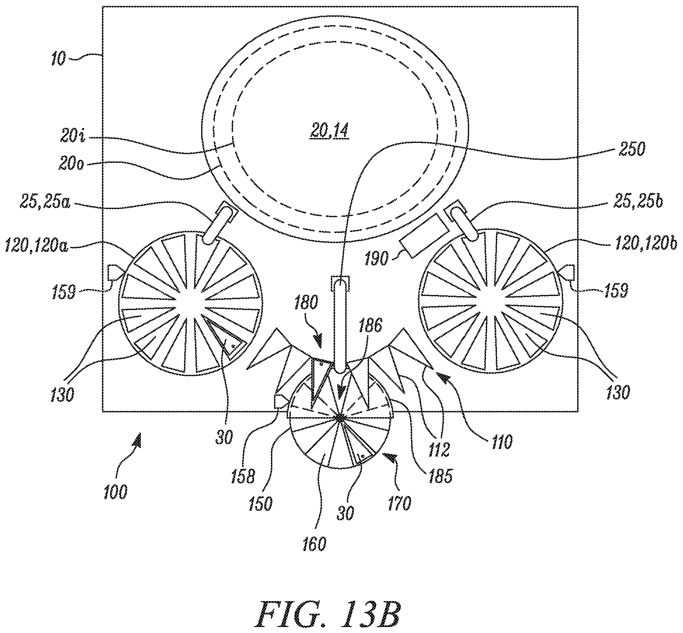

FIGS. 13A and 13B illustrate schematic top views of the loading/unloading tray 150 with the buffer storage 110, according to different embodiments of the present disclosure.

Referring to FIG. 13A, in some embodiments, the loading/unloading tray 150 of the consumables container loading/unloading system 100 may have to rotate (in the clockwise and/or in the anticlockwise direction), such that one or more of the plurality of tray holding positions 160 is aligned with the buffer opening 115 (shown in FIG. 8B). Specifically, the loading/unloading tray 150 of the consumables container loading/unloading system 100 may have to rotate, such that one or more of the plurality of tray holding positions 160 is aligned with the access opening 186 of the second cover 185, which is aligned with the with the buffer opening 115 of the buffer storage 110. Once the one or more of the plurality of tray holding positions 160 is aligned with the access opening 186 of the second cover 185, the transfer system 250 may move vertically through the buffer opening 115 to access the one or more of the plurality of tray holding positions 160 aligned with the access opening 186. The transfer system 250 may transfer one or more of the consumable containers 30 to or from the one or more of the plurality of tray holding positions 160 via the access opening 186.

Referring now to FIG. 13B, in some embodiments, the loading/unloading tray 150 of the consumables container loading/unloading system 100 may be angled, such that one or more of the plurality of tray holding positions 160 is aligned with the buffer opening 115. Specifically, the loading/unloading tray 150 may be angled, such that one or more of the plurality of tray holding positions 160 is aligned with the access opening 186 of the second cover 185, which is aligned with the with the buffer opening 115 of the buffer storage 110. Hence, the loading/unloading tray 150 may not have to rotate in order to align one or more of the plurality of tray holding positions 160 with the access opening 186 of the second cover 185. Therefore, the transfer system 250 may move vertically through the buffer opening 115 to access the one or more of the plurality of tray holding positions 160 aligned with the access opening 186. The transfer system 250 may transfer one or more of the consumable containers 30 to or from the one or more of the plurality of tray holding positions 160 via the access opening 186.

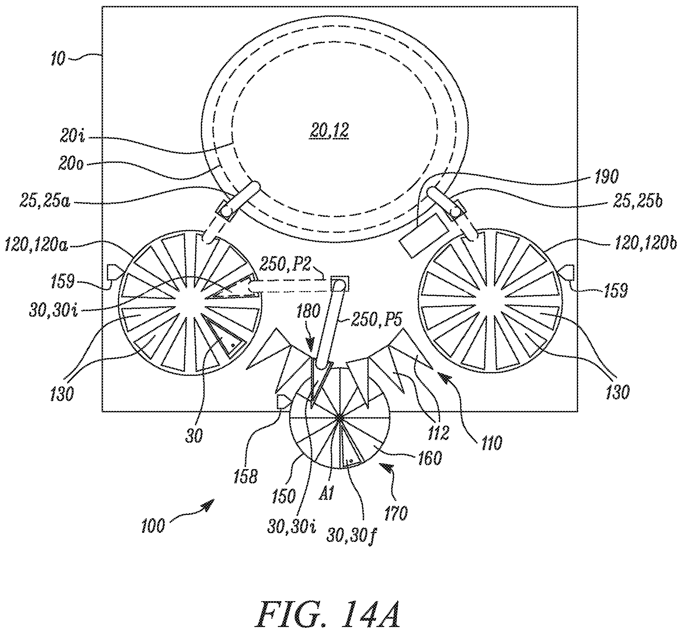

FIGS. 14A-14F illustrate partial schematic top views of the automated analyzer 10 in different configurations, according to another embodiment of the present disclosure. In the illustrated embodiment of FIGS. 14A-14F, the at least one analyzer arrangement 20 is in the active mode 12. In this embodiment, the consumables container loading/unloading system 100 further comprises the buffer storage 110. In some embodiments, the consumables container loading/unloading system 100 may include the loading/unloading tray 150 as illustrated in FIG. 13A. In some other embodiments, the consumables container loading/unloading system 100 may include the loading/unloading tray 150 as illustrated in FIG. 13B.

In some embodiments, the transfer system 250 is configured to automatically transfer one or more of the consumables containers 30 between the loading/unloading tray 150 and the buffer storage 110 at least while the at least one analyzer arrangement 20 is in the active mode 12.

In some embodiments, the transfer system 250 transfers one or more of the consumables containers 30 between the at least one storage magazine 120 and the buffer storage 110 at least while the liquid consumables 30L (shown in FIG. 7A) are delivered from the at least one storage magazine 120 to the at least one analyzer arrangement 20 via automated pipetting. In other words, the transfer system 250 transfers one or more of the consumables containers 30 between the at least one storage magazine 120 and the buffer storage 110 at least while the at least one reagent dispensing apparatus 25 is operational or active.

In some embodiments, the scheduler 205 is configured to identify and/or create a container access period of the at least one storage magazine 120 when the at least one analyzer arrangement 20 is in the active mode 12. The transfer system 250 transfers at least one of the consumables containers 30 between the at least one storage magazine 120 and the buffer storage 110 in the container access period without affecting a timing of the active mode 12. Further, the transfer system 250 transfers at least one of the consumables containers 30 between the at least one storage magazine 120 and the loading/unloading tray 150 in the container access period without affecting the timing of the active mode 12. Therefore, the transfer of the at least one of the consumables containers 30 between the at least one storage magazine 120 and the buffer storage 110 and/or between the at least one storage magazine 120 and the loading/unloading tray 150 during the container access period may ensure that the operation of the at least one analyzer arrangement 20 in the active mode 12 is not disrupted.

In some embodiments, the transfer system 250 transfers one or more of the consumables containers 30 between the at least one storage magazine 120 and the buffer storage 110 at least while the loading/unloading tray 150 manually receives one or more of the consumables containers 30 from the operator. The one or more of the consumables containers 30 removably held by the buffer storage 110 may be referred to as one or more of the consumables containers 30i. For example, in the illustrated embodiment of FIG. 14A, the transfer system 250 moves to the position P2 from a position P5 to transfer the consumables container 30i to the first storage magazine 120a from the buffer storage 110 at least while the loading/unloading tray 150 manually receives one or more of the consumables containers 30f from the operator. The consumables container 30i may be previously received by the loading/unloading tray 150 from the operator to be transferred or loaded into the automated analyzer 10. Further, the consumables container 30i may be previously transferred from the loading/unloading tray 150 to the buffer storage 150 by the transfer system 250.

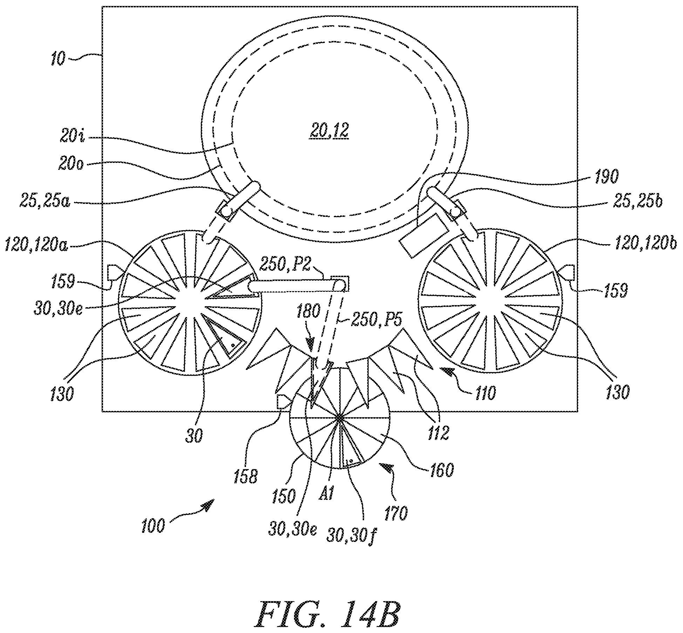

Similarly, the transfer system 250 may move from the position P2 to the position P5 to transfer one or more of the consumables containers 30 from the first storage magazine 120a to the buffer storage 110 at least while the loading/unloading tray 150 manually receives one or more of the consumables containers 30 from the operator. In the illustrated embodiment of FIG. 14B, the transfer system 250 moves from the position P2 to the position P5 to transfer the consumables container 30e to the buffer storage 110 from the first storage magazine 120a at least while the loading/unloading tray 150 manually receives one or more of the consumables containers 30f from the operator. The consumables container 30e may further be removed or unloaded from the automated analyzer 10 via the loading/unloading tray 150.

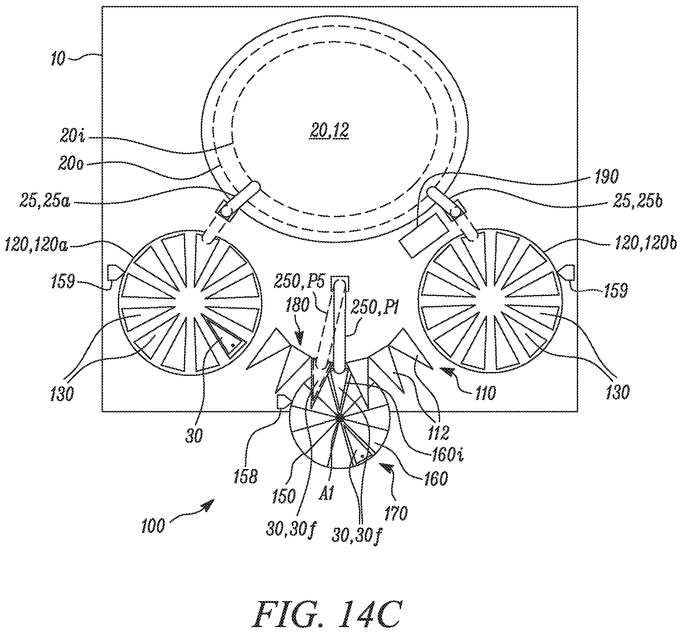

In some embodiments, the transfer system 250 transfers one or more of the consumables containers 30 between the loading/unloading tray 150 and the buffer storage 110 at least while the loading/unloading tray 150 manually receives one or more of the consumables containers 30 from the operator. For example, in the illustrated embodiment of FIG. 14C, the transfer system 250 moves to the position P5 from the position P1 to transfer the consumables container 30f to the buffer storage 110 from the loading/unloading tray 150 at least while the loading/unloading tray 150 manually receives one or more of the consumables containers 30f from the operator. Specifically, the transfer system 250 moves to the position P5 from the position P1 to transfer the consumables container 30f to the buffer storage 110 from a tray holding position 160i from the plurality of tray holding positions 160 of the loading/unloading tray 150 accessible by the transfer system 250 through the transfer system access station 180 at least while one or more tray holding positions 160 from the plurality of tray holding positions 160 of the loading/unloading tray 150 manually receives one or more of the consumables containers 30f from the operator through the operator access station 170. The consumables container 30f may be previously received by the loading/unloading tray 150 from the operator to be transferred or loaded into the automated analyzer 10.

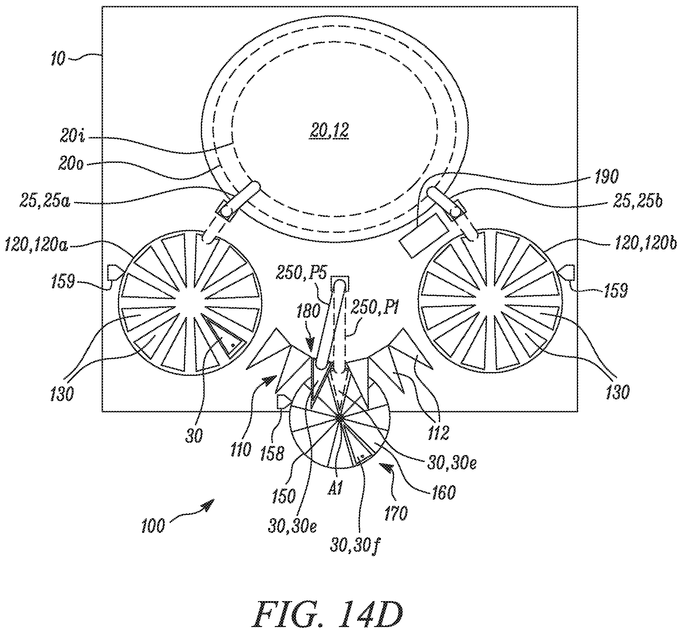

Similarly, the transfer system 250 may move from the position P5 to the position P1 to transfer one or more of the consumables containers 30 from the buffer storage 110 to the loading/unloading tray 150 at least while the loading/unloading tray 150 manually receives one or more of the consumables containers 30 from the operator. In the illustrated embodiment of FIG. 14D, the transfer system 250 moves from the position P5 to the position P1 to transfer the consumables container 30e to the loading/unloading tray 150 from the buffer storage 110 at least while the loading/unloading tray 150 manually receives one or more of the consumables containers 30f from the operator. The consumables container 30e may previously be transferred from the at least one storage magazine 120 to the buffer storage 110 by the transfer system 250. The consumables container 30e may further be removed or unloaded from the automated analyzer 10 via the loading/unloading tray 150.

In some embodiments, the transfer system 250 transfers one or more of the consumables containers 30 directly between the at least one storage magazine 120 and the loading/unloading tray 150 at least while the loading/unloading tray 150 manually receives one or more of the consumables containers 30 from the operator. The transfer system 250 therefore bypasses the buffer storage 110 during direct transfer of the one or more of the consumables containers 30 between the at least one storage magazine 120 and the loading/unloading tray 150.

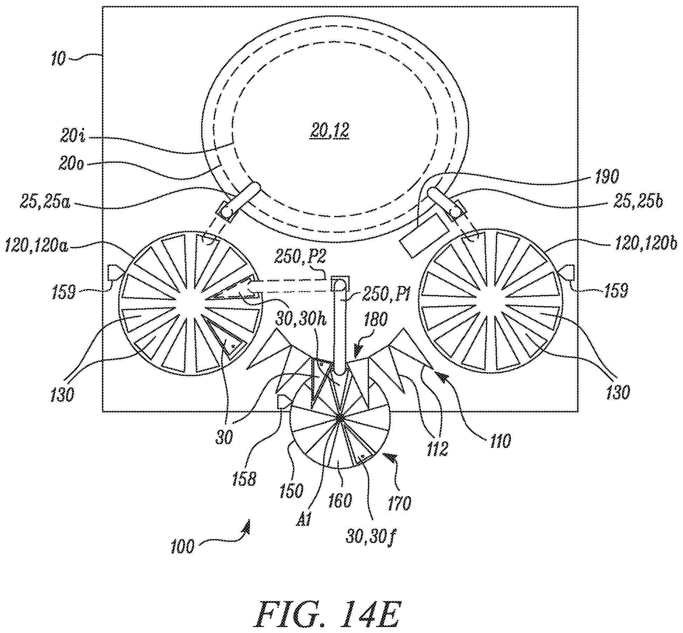

For example, in the illustrated embodiment of FIG. 14E, the transfer system 250 moves from the position P1 to the position P2 to directly transfer the consumables container 30h to the first storage magazine 120a from the loading/unloading tray 150 at least while the loading/unloading tray 150 manually receives one or more of the consumables containers 30f from the operator. The consumables container 30h may be previously received by the loading/unloading tray 150 from the operator to be transferred or loaded into the automated analyzer 10.

Similarly, the transfer system 250 may move from the position P1 to the position P3 (shown in FIG. 9C) to directly transfer the consumables container 30h to the second storage magazine 120b from the loading/unloading tray 150 at least while the loading/unloading tray 150 manually receives one or more of the consumables containers 30f from the operator.

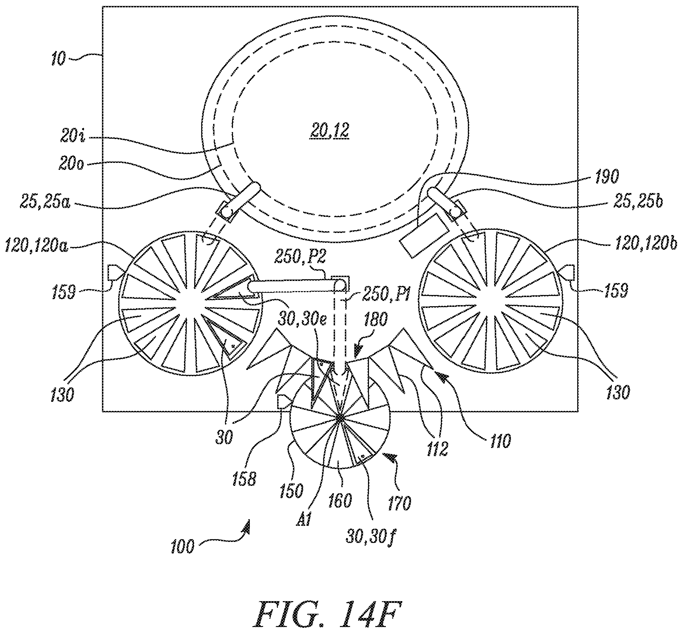

Further, the transfer system 250 may directly move from the position P2 to the position P1 to directly transfer one or more of the consumables containers 30 from the first storage magazine 120a to the loading/unloading tray 150 at least while the loading/unloading tray 150 manually receives one or more of the consumables containers 30 from the operator. For example, in the illustrated embodiment of FIG. 14F, the transfer system 250 moves from the position P2 to the position P1 to directly transfer the consumables container 30e to the loading/unloading tray 150 from the first storage magazine 120a at least while the loading/unloading tray 150 manually receives one or more of the consumables containers 30f from the operator. The consumables container 30e may further be removed or unloaded from the automated analyzer 10 via the loading/unloading tray 150.

Similarly, the transfer system 250 may move from the position P3 (shown in FIG. 9D) to the position P1 to directly transfer the consumables container 30e to the loading/unloading tray 150 from the second storage magazine 120b at least while the loading/unloading tray 150 manually receives one or more of the consumables containers 30f from the operator.

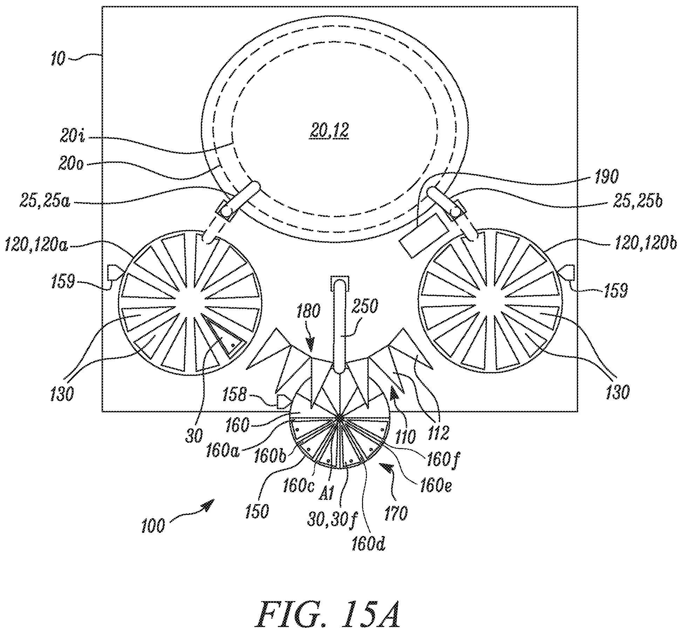

FIGS. 15A to 15C illustrate partial schematic top views of the automated analyzer 10 in different configurations, according to an embodiment of the present disclosure. In the illustrated embodiment of FIGS. 15A to 15C, the at least one analyzer arrangement 20 is in the active mode 12.

In some embodiments, after receiving a maximum number of the consumable containers 30 that the at least some of the plurality of tray holding positions 160, accessible by the operator through the operator access station 170, can removably hold, the consumables container loading/unloading system 100 may determine that the loading/unloading tray 150 is unavailable to manually receive additional consumables containers 30.

In some embodiments, upon determining that the loading/unloading tray 150 is unavailable to manually receive the additional consumables containers 30, the loading/unloading tray 150 moves the at least some of the plurality of tray holding positions 160 from the operator access station 170 to the transfer system access station 180.

Further, in some embodiments, the transfer system 250 removes one or more of the consumables containers 30 from the at least some of the plurality of tray holding positions 160 to the buffer storage 110. However, in some other embodiments, the transfer system 250 may not remove all of the one or more of the consumables containers 30 from the at least some of the plurality of tray holding positions 160 to the buffer storage 110. For example, in some embodiments, the transfer system 250 may remove some of the one or more of the consumables containers 30 from the at least some of the plurality of tray holding positions 160 to the at least one storage magazine 120.

Furthermore, in some embodiments, after transfer of the one or more of the consumables containers 30 from the at least some of the plurality of tray holding positions 160, the loading/unloading tray 150 is configured to move the at least some of the plurality of tray holding positions 160 to the operator access station 170 for manually receiving the additional consumables containers 30 from the operator.

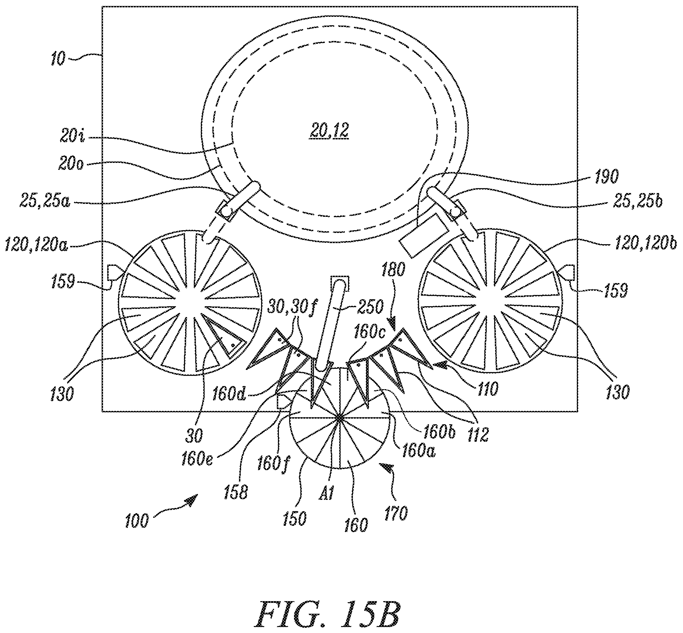

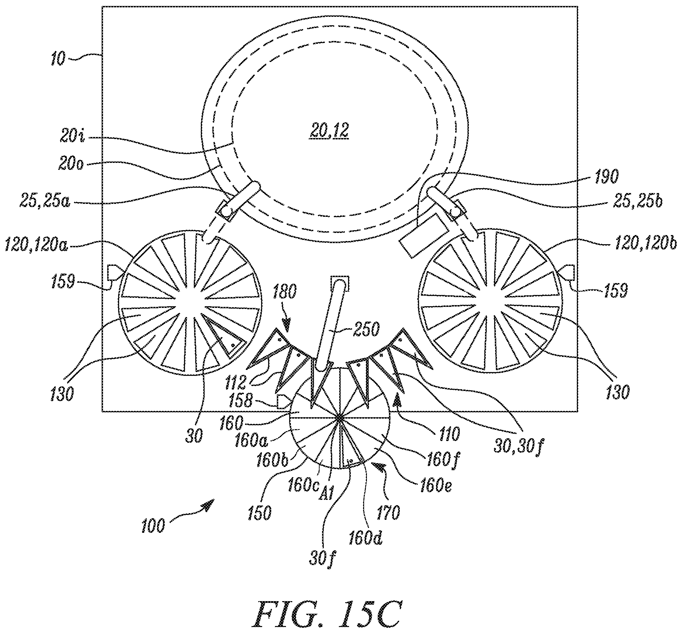

For example, after receiving a maximum number of the consumable containers 30f that tray holding positions 160a, 160b, 160c, 160d, 160e, 160f, accessible by the operator through the operator access station 170, can removably hold, the consumables container loading/unloading system 100 may determine that the loading/unloading tray 150 is unavailable to manually receive additional consumables containers 30f (shown in FIG. 15A). Further, upon determining that the loading/unloading tray 150 is unavailable to manually receive the additional consumables containers 30f, the loading/unloading tray 150 moves the tray holding positions 160a, 160b, 160c, 160d, 160e, 160f from the operator access station 170 to the transfer system access station 180 (shown in FIG. 15B). The transfer system 250 removes all of the consumables containers 30f from the at least some of the tray holding positions 160a, 160b, 160c, 160d, 160e, 160f to the buffer storage 110. After transfer of all of the consumables containers 30f from the tray holding positions 160a, 160b, 160c, 160d, 160e, 160f, the loading/unloading tray 150 is configured to move the tray holding positions 160a, 160b, 160c, 160d, 160e, 160f to the operator access station 170 for manually receiving the additional consumables containers 30f from the operator (shown in FIG. 15C).

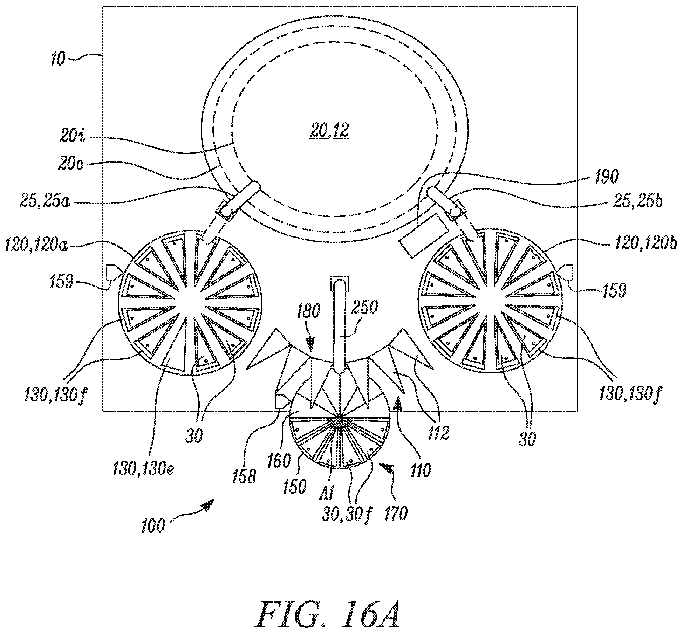

FIGS. 16A to 16C illustrate partial schematic top views of the automated analyzer 10 in different configurations, according to an embodiment of the present disclosure. In the illustrated embodiment of FIGS. 16A to 16C, the at least one analyzer arrangement 20 is in the active mode 12.

The at least one storage magazine 120 comprises occupied carriers 130f from the plurality of carriers 130 and empty carriers 130e from the plurality of carriers 130. In some cases, the at least one storage magazine 120 may not include a sufficient number of the empty carriers 130e to accommodate the one or more manually received consumables containers 30f. Particularly, the at least one storage magazine 120 may include a number of the empty carriers 130e less than a number of the one or more manually received consumables containers 30f.

For example, in the illustrated embodiment of FIG. 16A, the at least one storage magazine 120 includes one empty carrier 130e and a number of the one or more manually received consumables containers 30f is six. Therefore, the at least one storage magazine 120 includes a number of the empty carriers 130e less than the number of the one or more manually received consumables containers 30f.

In some embodiments, the controller 200 may generate a warning if the plurality of carriers 130 of the at least one storage magazine 120 currently does not include the sufficient number of the empty carriers 130e to accommodate the one or more manually received consumables containers 30f. In some embodiments, the output unit 203 (shown in FIG. 8A) may output the warning. In some embodiments, the warning may be an audible warning, a visual warning, or a notification on the output unit 203.

In some embodiments, the operator may define the consumables containers 30 to be removed from the occupied carriers 130f of the plurality of carriers 130 of the at least one storage magazine 120 and provide an operator input via the input unit 202 (shown in FIG. 8A) if the plurality of carriers 130 of the at least one storage magazine 120 currently does not include the sufficient number of the empty carriers 130e to accommodate the one or more manually received consumables containers 30f.

In some embodiments, the transfer system 250 is configured to transfer a required number of the consumables containers 30 from the at least one storage magazine 120 to the buffer storage 110 upon determining that the plurality of carriers 130 of the at least one storage magazine 120 does not currently include the sufficient number of the empty carriers 130e to accommodate the one or more manually received consumables containers 30f. In other words, the transfer system 250 is configured to remove the required number of the consumables containers 30 from the occupied carriers 130f of the at least one storage magazine 120 to the buffer storage 110 upon determining that the plurality of carriers 130 of the at least one storage magazine 120 does not currently include the sufficient number of the empty carriers 130e to accommodate the one or more manually received consumables containers 30f. In some embodiments, the transfer system 250 is configured to transfer the required number of the consumables containers 30 from the at least one storage magazine 120 to the buffer storage 110 at least while the at least one analyzer arrangement 20 is in the active mode 12.

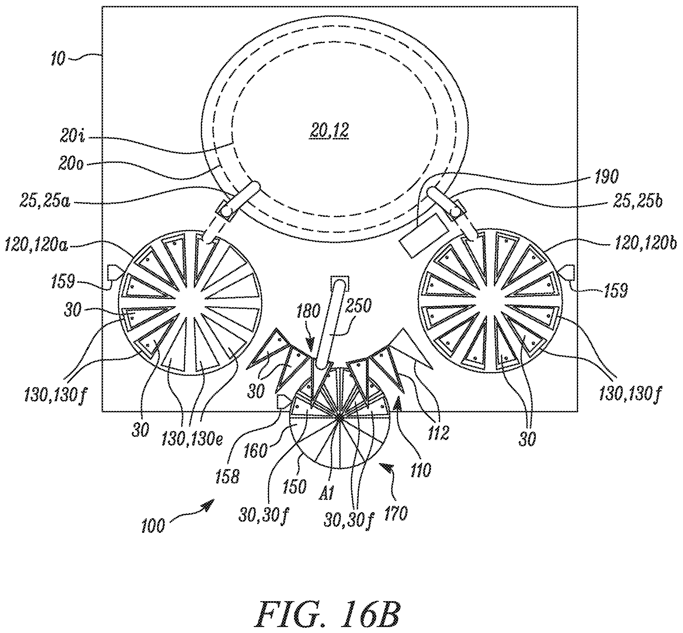

For example, in the illustrated embodiment of FIG. 16B, the transfer system 250 is configured to transfer five of the consumables containers 30 from the at least one storage magazine 120 to the buffer storage 110 upon determining that the plurality of carriers 130 of the at least one storage magazine 120 does not currently include the sufficient number of the empty carriers 130e to accommodate the one or more manually received consumables containers 30f. The transfer system 250 transfers five of the consumables containers from the at least one storage magazine 120 to provide the sufficient number of the empty carriers 130e to accommodate the one or more manually received consumables containers 30f.

The transfer system 250 is further configured to transfer the one or more manually received consumables containers 30f from the at least one of the plurality of tray holding positions 160 to the plurality of carriers 130 of the at least one storage magazine 120 after removal of the required number of the consumables containers 30. In some embodiments, the transfer system 250 is configured to transfer the one or more manually received consumables containers 30f from the at least one of the plurality of tray holding positions 160 to the plurality of carriers 130 of the at least one storage magazine 120 after removal of the required number of the consumables containers 30 at least while the at least one analyzer arrangement 20 is in the active mode 12.

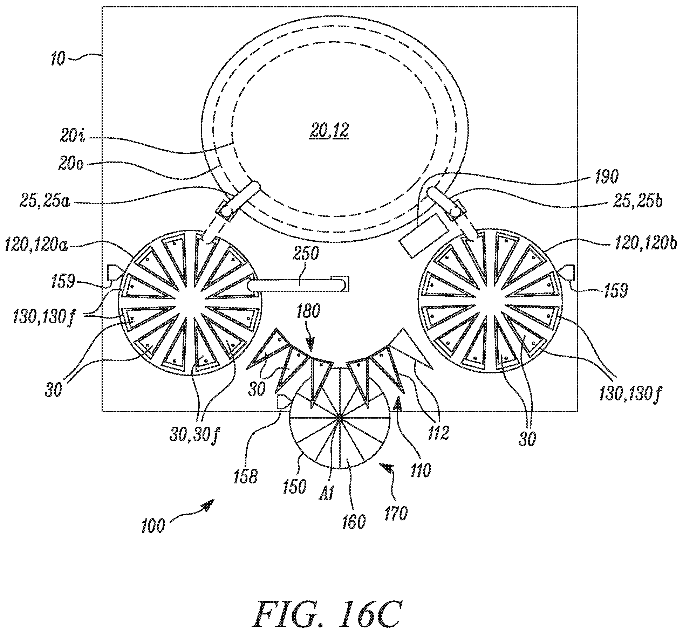

For example, in the illustrated embodiment of FIG. 16C, the transfer system 250 transfers the one or more manually received consumables containers 30f from the at least one of the plurality of tray holding positions 160 to the plurality of carriers 130 of the at least one storage magazine 120 after removal of the required number of the consumables containers 30. Specifically, the transfer system 250 transfers the six manually received consumables containers 30f from the at least one of the plurality of tray holding positions 160 to the empty carriers 130e (shown in FIG. 16B) of the at least one storage magazine 120.

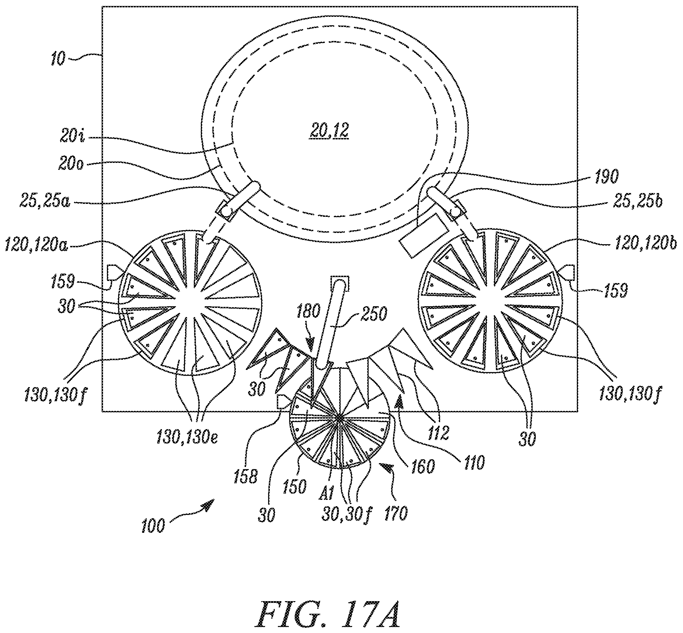

FIGS. 17A to 17D illustrate partial schematic top views of the automated analyzer 10 in different configurations, according to an embodiment of the present disclosure. In the illustrated embodiment of FIGS. 17A to 17D, the at least one analyzer arrangement 20 is in the active mode 12. Referring to FIGS. 16A and 17A, in some other embodiments, the transfer system 250 is configured to transfer at least some of the required number of the consumables containers 30 removed from the occupied carriers 130f to the loading/unloading tray 150. In some embodiments, the transfer system 250 is configured to transfer at least some of the required number of the consumables containers 30 removed from the occupied carriers 130f to the buffer storage 110.

For example, in the illustrated embodiment of FIG. 17A, the transfer system 250 is configured to transfer two of the consumables containers 30 from the at least one storage magazine 120 to the loading/unloading tray 150 and three of the consumables containers 30 from the at least one storage magazine 120 to the buffer storage 110 upon determining that the plurality of carriers 130 of the at least one storage magazine 120 does not currently include the sufficient number of the empty carriers 130e to accommodate the one or more manually received consumables containers 30f. The transfer system 250 transfers five of the consumables containers from the at least one storage magazine 120 to provide the sufficient number of the empty carriers 130e to accommodate the one or more manually received consumables containers 30f.

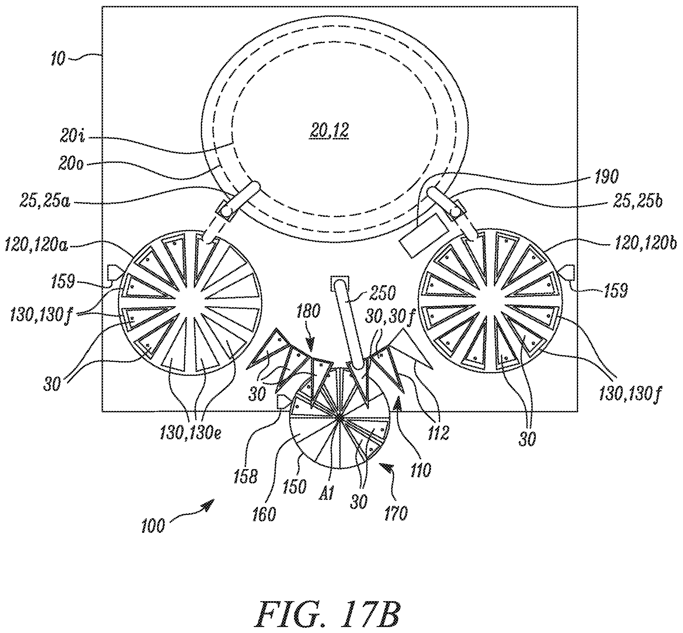

Referring now to FIGS. 17A and 17B, in some embodiments, the transfer system 250 is configured to transfer at least some of the one or more manually received consumables containers 30f from the at least one of the plurality of tray holding positions 160 to the buffer storage 110 prior to transfer to the plurality of carriers 130 of the at least one storage magazine 120.

For example, in the illustrated embodiment of FIG. 17B, the transfer system 250 transfers two of the one or more manually received consumables containers 30f from the at least one of the plurality of tray holding positions 160 to the buffer storage 110 prior to transfer to the plurality of carriers 130 of the at least one storage magazine 120.

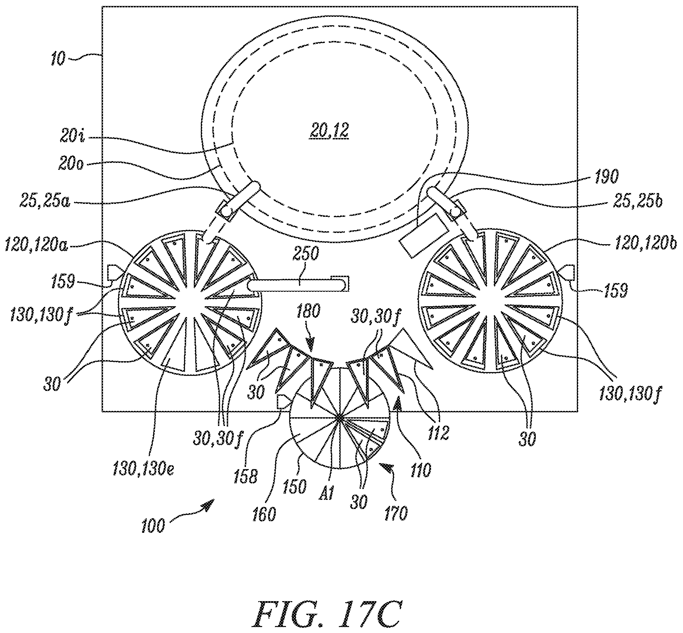

Further, as shown in FIG. 17C, the transfer system 250 transfers four of the one or more manually received consumables containers 30f from the at least one of the plurality of tray holding positions 160 to the plurality of carriers 130 of the at least one storage magazine 120.

In some embodiments, the four of the one or more manually received consumables containers 30f transferred from the at least one of the plurality of tray holding positions 160 to the plurality of carriers 130 of the at least one storage magazine 120 may have a higher priority and the two of the one or more manually received consumables containers 30f transferred from the at least one of the plurality of tray holding positions 160 to the buffer storage 110 may have a lower priority. In some embodiments, the priority may be based on a requirement of the liquid consumables 30L (shown in FIG. 7A) contained in the consumables containers 30. In some embodiments, the priority may be based on a number of the current test orders. In some embodiments, the priority may be based on a number of a type of the consumables containers 30 in the automated analyzer 10. For example, if a number of a type of the consumables containers 30 in the automated analyzer 10 is greater, its priority may be lower. In some embodiments, the priority may be based on an order of test orders. For example, if a first type of the liquid consumables 30L is required earlier than a second type of the liquid consumables 30L, the priority of the first type of the liquid consumables 30L may be higher.

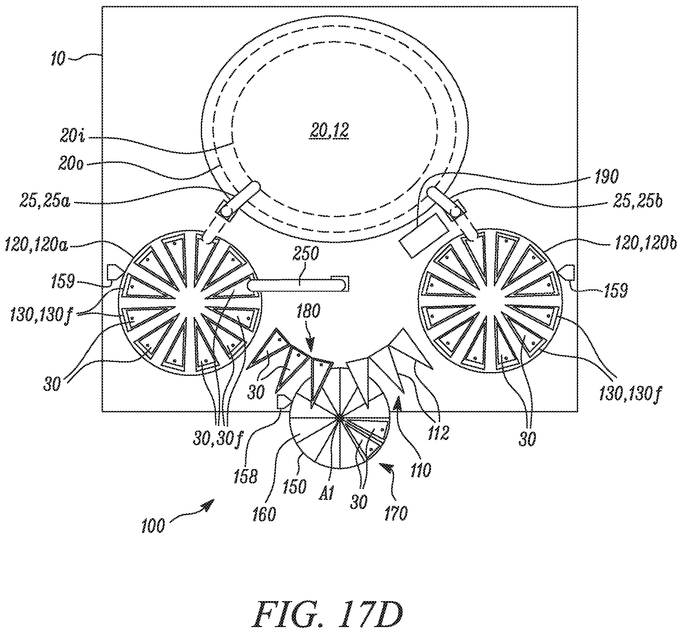

Furthermore, as shown in FIG. 17D, the transfer system 250 transfers the two of the one or more manually received consumables containers 30f transferred earlier to the buffer storage 110 to the plurality of carriers 130 of the at least one storage magazine 120. In some embodiments, the two of the consumables containers 30 transferred from the at least one storage magazine 120 to the loading/unloading tray 150 may be manually removed or unloaded by the operator.

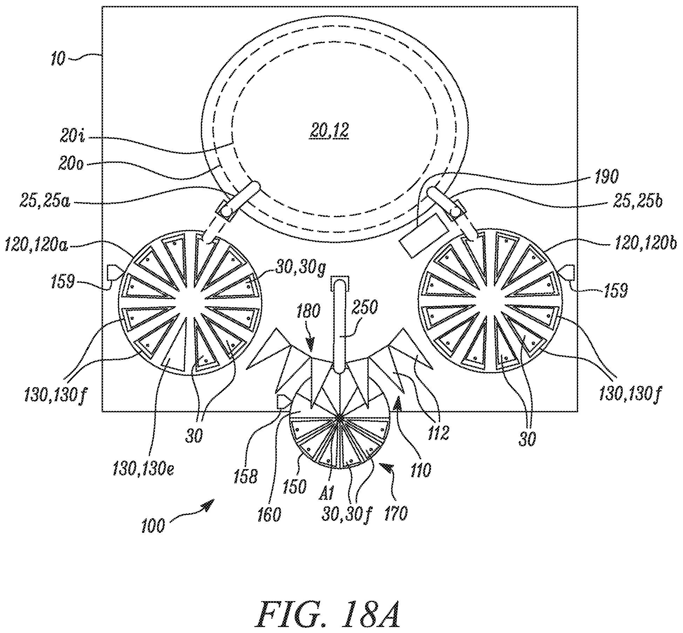

FIGS. 18A to 18C illustrate partial schematic top views of the automated analyzer 10 in different configurations, according to an embodiment of the present disclosure. In the illustrated embodiment of FIGS. 18A to 18C, the at least one analyzer arrangement 20 is in the active mode 12. Referring to FIGS. 18A-18C, in some cases, some of the occupied carriers 130f of the at least one storage magazine 120 may comprise the consumables containers 30g which contain the liquid consumables 30L (shown in FIG. 7A) below the predetermined threshold volume.

In some embodiments, the transfer system 250 is configured to transfer at least some of the required number of the consumables containers 30 removed from the occupied carriers 130f to the waste disposal station 190. In particular, the transfer system 250 is configured to transfer at least some of the consumables containers 30g removed from the occupied carriers 130f to the waste disposal station 190.

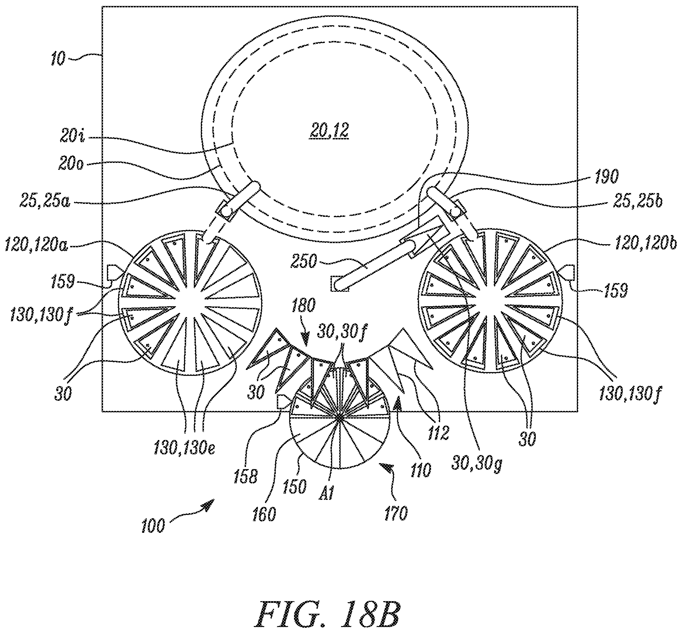

For example, as illustrated in FIG. 18B, the transfer system 250 transfers one of the required number of the consumables containers 30 removed from the occupied carriers 130f to the waste disposal station 190. Specifically, the transfer system 250 transfers the consumables container 30g removed from the occupied carriers 130f to the waste disposal station 190. Further, the transfer system 250 transfers three of the consumables containers 30 from the at least one storage magazine 120 to the buffer storage 110.

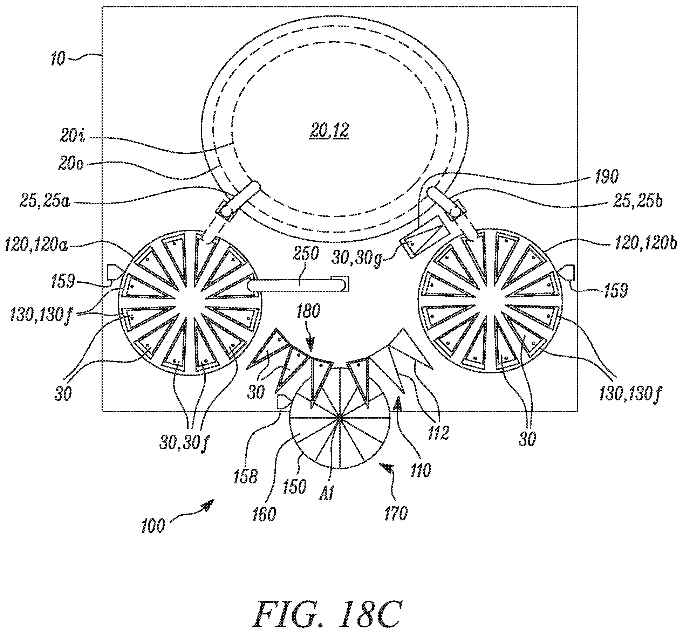

Moreover, as illustrated in FIG. 18C, the transfer system 250 is further configured to transfer the one or more manually received consumables containers 30f from the at least one of the plurality of tray holding positions 160 to the plurality of carriers 130 of the at least one storage magazine 120 after removal of the required number of the consumables containers 30.

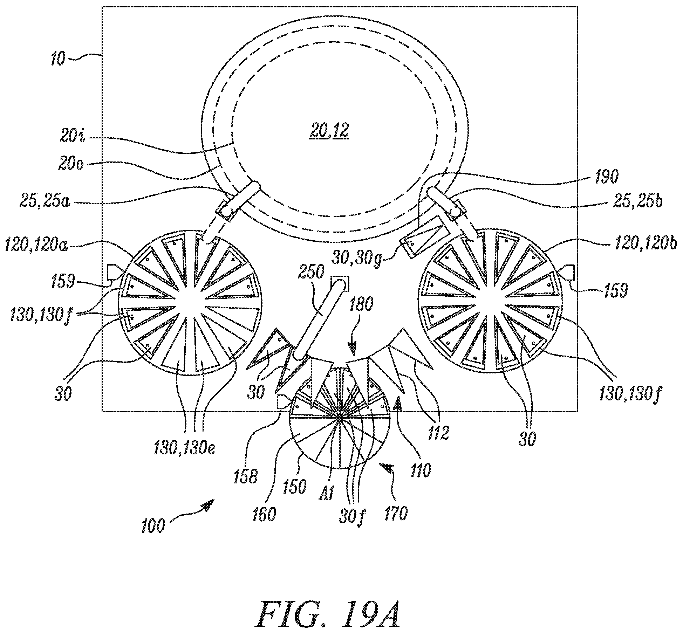

FIGS. 19A to 19D illustrate partial schematic top views of the automated analyzer 10 in different configurations, according to another embodiment of the present disclosure. In the illustrated embodiment of FIGS. 19A to 19D, the at least one analyzer arrangement 20 is in the active mode 12.

Referring to FIG. 18A, as discussed above, in some cases, the at least one storage magazine 120 may not include the sufficient number of the empty carriers 130e to accommodate the one or more manually received consumables containers 30f.

In some embodiments, the transfer system 250 is configured to transfer a permissible number of the consumables containers 30 from the at least one storage magazine 120.

For example, as shown in FIG. 19A, the transfer system 250 transfers three of the consumables containers 30 from the at least one storage magazine 120. In the illustrated embodiment of FIG. 19A, one of the three of the consumables containers 30 is transferred to the waste disposal station 190 and two of the three of the consumables containers 30 are transferred to the buffer storage 110.

In some embodiments, the transfer system 250 is configured to transfer some of the one or more manually loaded consumables containers 30f from the at least one of the plurality of tray holding positions 160 to available empty carriers 130e of the plurality of carriers 130 of the at least one storage magazine 120 after removal of at least the permissible number of the consumables containers 30.

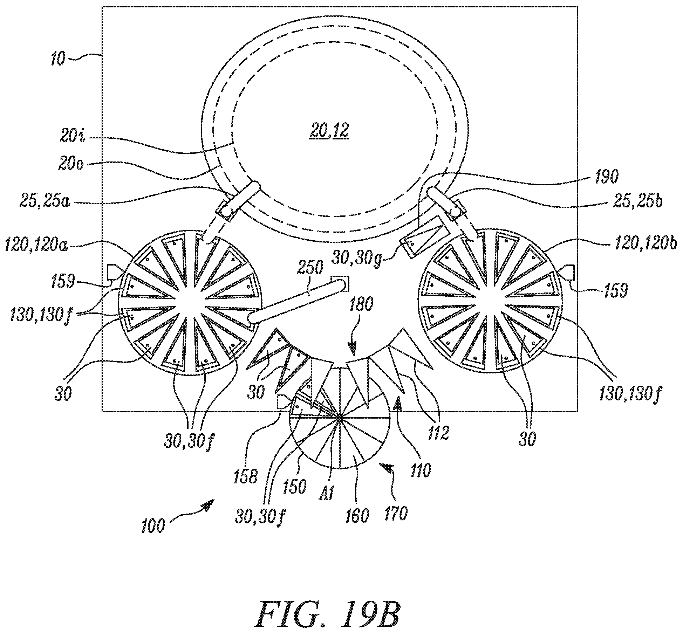

For example, as shown in FIG. 19B, the transfer system 250 transfers four of the one or more manually loaded consumables containers 30f from the at least one of the plurality of tray holding positions 160 to four available empty carriers 130e of the plurality of carriers 130 of the at least one storage magazine 120 after removal of the three of the consumables containers 30.

In some embodiments, the transfer system 250 is configured to transfer the remaining of the one or more manually received consumables containers 30f from the at least one of the tray holding positions 160 to the buffer storage 110.

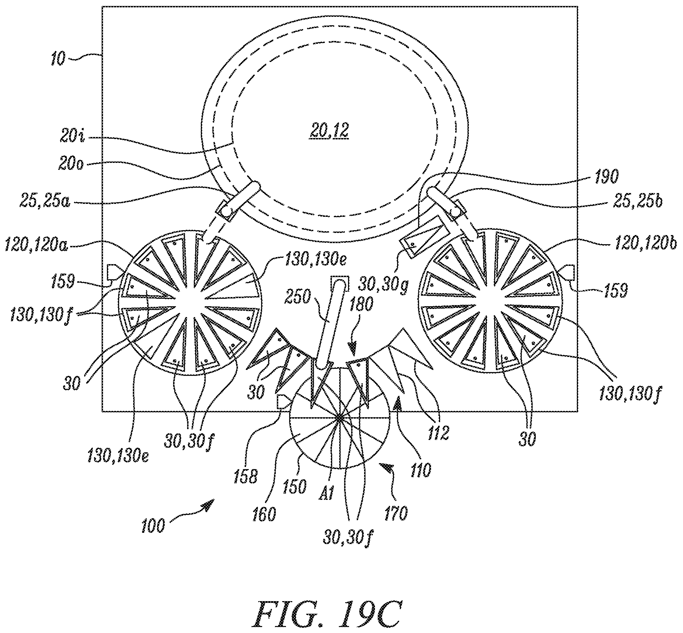

For example, as shown in FIG. 19C, the transfer system 250 transfers the remaining two of the one or more manually received consumables containers 30f from the at least one of the tray holding positions 160 to the buffer storage 110.

In some embodiments, the consumables container loading/unloading system 100 is configured to determine that the at least one storage magazine 120 currently comprises a sufficient number of the empty carriers 130e to accommodate the remaining of the one or more manually received consumables containers 30f. In some embodiments, upon determining that the at least one storage magazine 120 currently comprises the sufficient number of the empty carriers 130e to accommodate the remaining of the one or more manually received consumables containers 30f, the transfer system 250 is configured to transfer the remaining of the one or more manually received consumables containers 30f from the buffer storage 110 to the at least one storage magazine 120.

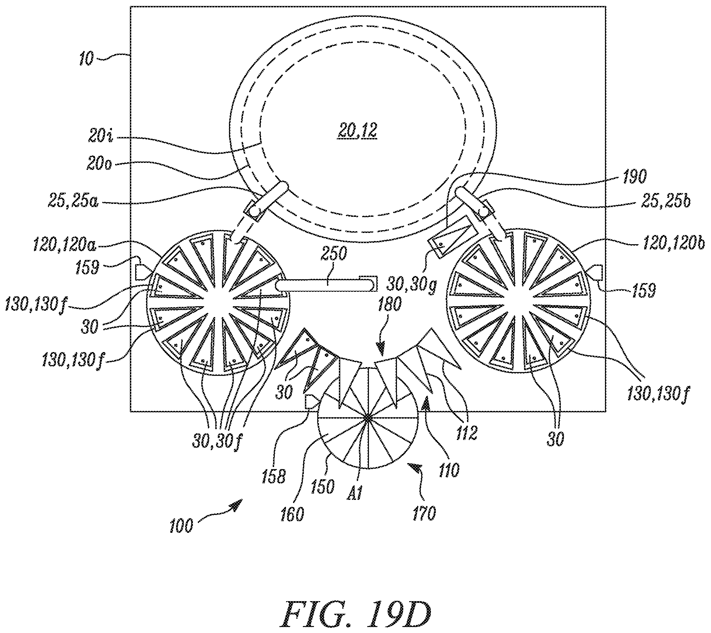

For example, as shown in FIG. 19D, upon determining that the at least one storage magazine 120 currently comprises two of the empty carriers 130e (shown in FIG. 19C) to accommodate the remaining two of the one or more manually received consumables containers 30f, the transfer system 250 is configured to transfer the remaining two of the one or more manually received consumables containers 30f from the buffer storage 110 to the at least one storage magazine 120.

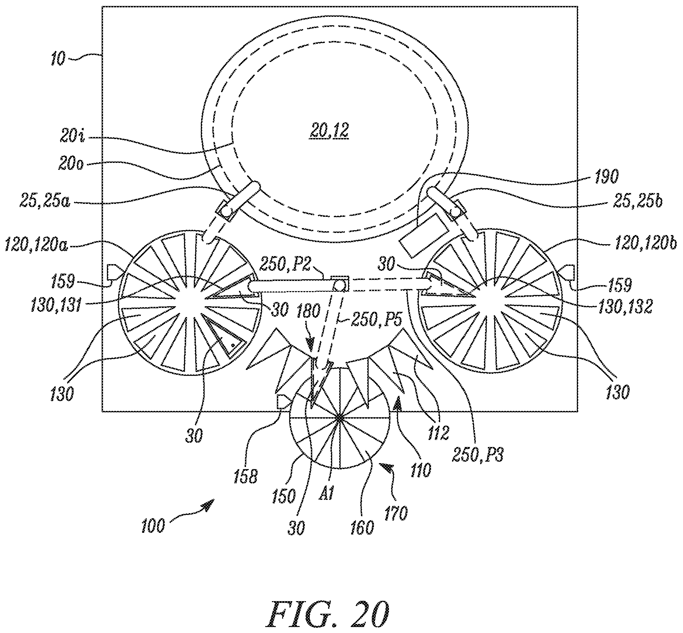

FIG. 20 illustrates a partial schematic top view of the automated analyzer 10, according to an embodiment of the present disclosure. In the illustrated embodiment of FIG. 20, the at least one analyzer arrangement 20 is in the active mode 12.

In some embodiments, the transfer system 250 and the buffer storage 110 are configured to rearrange at least one of the consumables containers 30 removably held by the at least one storage magazine 120 in a first holding position by transferring the at least one of the consumables containers 30 to the buffer storage 110 and transferring the at least one of the consumables containers 30 to the at least one storage magazine 120 in a second holding position.

For example, as illustrated in FIG. 20, the transfer system 250 and the buffer storage 110 are configured to rearrange the consumables container 30 removably held by the first storage magazine 120a in the first holding position 131 by transferring the consumables container 30 to the buffer storage 110, and then transferring the consumables containers 30 from the buffer storage 110 to the second storage magazine 120b in the second holding position 132. Specifically, the transfer system 250 moves from the position P2 to the position P5 for transferring the consumables container 30 from the first holding position 131 of the first storage magazine 120a to the buffer storage 110. Further, the transfer system 250 moves from the position P5 to the position P3 for transferring the consumables container 30 from the buffer storage 110 to the second holding position 132 of the second storage magazine 120b.

In the illustrated example, the first and second holding positions 131, 132 are in the first and second storage magazines 120a,120b, respectively. However, in some other examples, both the first and second holding positions 131, 132 may be in the first storage magazine 120a or in the second storage magazine 120b.

In some embodiments, the at least one of the consumables containers 30 removably held by the at least one storage magazine 120 is rearranged to correspond to a test order.

In some embodiments, the at least one of the consumables containers 30 removably held by the at least one storage magazine 120 is rearranged to correct a location of the at least one of the consumables containers 30.

Therefore, rearranging the at least one of the consumables containers 30 may optimize the workflow of the automated analyzer 10 and may consequently improve the throughput of the automated analyzer 10.

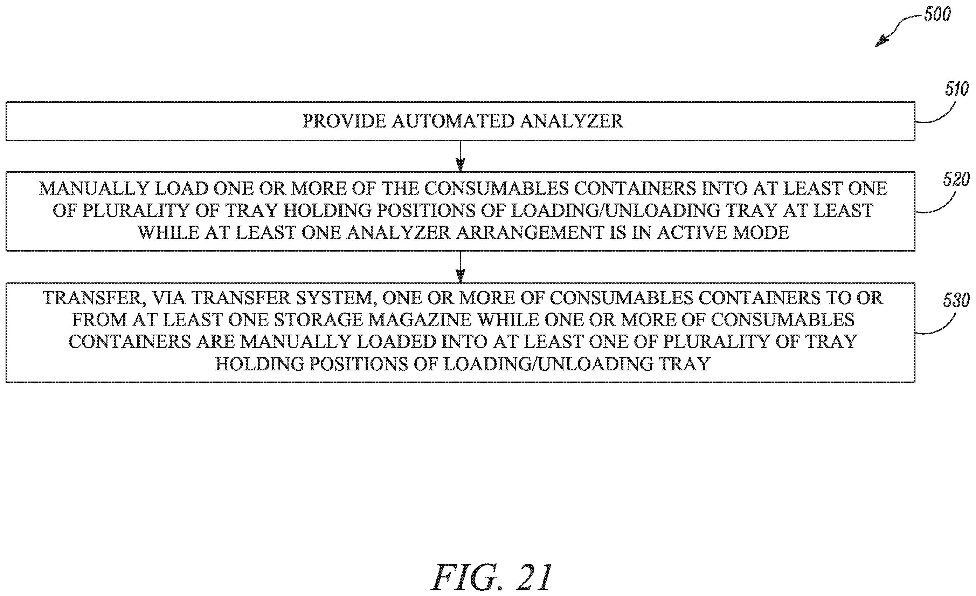

FIG. 21 is a flowchart illustrating a method 500 of loading/unloading one or more of the consumables containers 30 for the automated analyzer 10, according to an embodiment of the present disclosure. The method 500 will be further described with reference to FIGS. 1 to 20. The method 500 includes operations 510, 520, and 530.

At operation 510, the method 500 comprises providing the automated analyzer 10. The automated analyzer 10 comprises the at least one analyzer arrangement 20 that consumes the at least liquid consumables 30L delivered to the automated analyzer 10 via one or more of the consumables containers 30. The at least one analyzer arrangement 20 further comprises the active mode 12 and the idle mode 14. The at least one analyzer arrangement 20 consumes the at least liquid consumables 30L when the at least one analyzer arrangement 20 is in the active mode 12. The automated analyzer 10 further comprises the at least one storage magazine 120, the loading/unloading tray 150, and the transfer system 250.

At operation 520, the method 500 comprises manually loading one or more of the consumables containers 30 into at least one of the plurality of tray holding positions 160 of the loading/unloading tray 150 at least while the at least one analyzer arrangement 20 is in the active mode 12.

At operation 530, the method 500 comprises transferring, via the transfer system 250, one or more of the consumables containers 30 to or from the at least one storage magazine 120 while one or more of the consumables containers 30 are manually loaded into the at least one of the plurality of tray holding positions 160 of the loading/unloading tray 150.

In some embodiments, the method 500 further comprises transferring, via the transfer system 250, one or more of the consumables containers 30 between the at least one storage magazine 120 and the loading/unloading tray 150 at least while one or more of the consumables containers 30 are manually loaded into the at least one of the plurality of tray holding positions 160 of the loading/unloading tray 150.

In some embodiments, the method 500 further comprises automatically transferring, via the transfer system 250, one or more of the consumables containers 30 between the loading/unloading tray 150 and the first and second storage magazines 120a, 120b.

In some embodiments, the method 500 further comprises transferring one or more of the consumables containers 30, via the transfer system 250, between the first storage magazine 120a and the second storage magazine 120b.

In some embodiments, the method 500 further comprises transferring, via the transfer system 250, one or more of the consumables containers 30 between the at least one storage magazine 120 and the buffer storage 110 vertically located at the different level than the loading/unloading tray 150 at least while one or more of the consumables containers 30 are manually loaded into the at least one of the plurality of tray holding positions 160 of the loading/unloading tray 150.

In some embodiments, the transfer system 250 transfers one or more of the consumables containers 30 between the at least one storage magazine 120 and the buffer storage 110 at least while the at least one analyzer arrangement 20 consumes the at least liquid consumables 30L.

In some embodiments, the method 500 further comprises identifying and/or creating, via the scheduler 205, the container access period of the at least one storage magazine 120, and transferring, via the transfer system 250, at least one of the consumables containers 30 between the at least one storage magazine 120 and the loading/unloading tray 150 and/or between the at least one storage magazine 120 and the buffer storage 110 in the container access period without affecting a timing of the active mode 12.

In some embodiments, the method 500 further comprises moving the transfer system 250 vertically through the buffer opening 115 of the buffer storage 110 in order to access the loading/unloading tray 150 to transfer one or more of the consumables containers 30 between the loading/unloading tray 150 and the buffer storage 110 and/or between the loading/unloading tray 150 and the at least one storage magazine 120.

In some embodiments, the method 500 further comprises moving, via the loading/unloading tray 150, at least some of the plurality of tray holding positions 160 of the loading/unloading tray 150 between the operator access station 170 and the transfer system access station 180 at least while the at least one analyzer arrangement 20 is in the active mode 12 when the first cover 156 of the operator access station 170 is in the closed position 156c. As discussed above, the first cover 156 remains in the closed position 156c when the at least some of the plurality of tray holding positions 160 are moving between the operator access station 170 and the transfer system access station 180.

In some embodiments, the method 500 further comprises opening the first cover 156 to the open position 156o to access the at least some of the plurality of tray holding positions 160 configured to manually receive one of more of the consumables containers 30 at least while the at least one analyzer arrangement 20 is in the active mode 12.

In some embodiments, the method 500 further comprises releasably holding, via the interlock mechanism 157, the loading/unloading tray 150 stationary when the first cover 156 is in the open position 156o. As discussed above, the interlock mechanism 157 allows the loading/unloading tray 150 to move when the first cover 156 is in the closed position 156c.

In some embodiments, the method 500 further comprises moving the at least some of the plurality of tray holding positions 160 from the operator access station 170 to the transfer system access station 180 upon determining that the at least some of the plurality of tray holding positions 160 of the loading/unloading tray 150 are unavailable for manually loading the additional consumables containers. The method 500 further comprises removing, via the transfer system 250, one or more of the consumables containers 30 from the at least some of the plurality of tray holding positions 160 to the buffer storage 110. The method 500 further comprises moving the at least some of the plurality of tray holding positions 160 to the operator access station 170 for manually loading the additional consumables containers 30 after transfer of the one or more of the consumables containers 30 from the at least some of the plurality of tray holding positions 160.

In some embodiments, the method 500 further comprises determining that the plurality of carriers 130 of the at least one storage magazine 120 does not currently include the sufficient number of the empty carriers 130e to accommodate the one or more manually loaded consumables containers 30f. The method 500 further comprises removing, via the transfer system 250, at least the required number of the consumables containers 30 from the occupied carriers 130f from the plurality of carriers 130 of the at least one storage magazine 120 to prepare at least the sufficient number of the empty carriers 130e to receive the one or more manually loaded consumable containers 30. The method 500 further comprises transferring, via the transfer system 250, the one or more manually loaded consumables containers 30f from the at least one of the plurality of tray holding positions 160 to the plurality of carriers 130 of the at least one storage magazine 120.

In some embodiments, at least removing at least the required number of the consumables containers 30 from the occupied carriers 130f occurs when the at least one analyzer arrangement 20 is in the active mode 12.

In some embodiments, transferring the one or more manually loaded consumables containers 30f from the at least one of the plurality of tray holding positions 160 to the plurality of carriers 130 occurs when the at least one analyzer arrangement 20 is in the active mode 12.

In some embodiments, the method 500 further comprises transferring, via the transfer system 250, at least some of the required number of the consumables containers 30 removed from the occupied carriers 130f to the loading/unloading tray 150.

In some embodiments, the method 500 further comprises transferring, via the transfer system 250, at least some of the required number of the consumables containers 30 removed from the occupied carriers 130f to the buffer storage 110.

In some embodiments, the method 500 further comprises transferring, via the transfer system 250, at least some of the one or more manually loaded consumables containers 30f from the at least one of the plurality of tray holding positions 160 to the buffer storage 110 prior to transfer to the plurality of carriers 130 of the at least one storage magazine 120.

In some embodiments, the method 500 further comprises transferring, via the transfer system 250, at least one of the one or more manually loaded consumables containers 30f, having the higher priority, from the at least one of the plurality of tray holding positions 160 to the plurality of carriers 130 of the at least one storage magazine 120. The method 500 further comprises transferring, via the transfer system 250, at least some of the one or more manually loaded consumables containers 30f, having the lower priority, from the at least one of the plurality of tray holding positions 160 to the buffer storage 110 prior to transferring the at least some of the one or more manually loaded consumables containers 30f having the lower priority to the plurality of carriers 130 of the at least one storage magazine 120.

In some embodiments, the method 500 further comprises transferring, via the transfer system 250, at least some of the required number of the consumables containers 30 removed from the occupied carriers 130f to the waste disposal station 190 upon detecting that the one or more of the consumables containers 30 contain the liquid consumables 30L below the predetermined threshold volume.

In some embodiments, the method 500 further comprises determining that the plurality of carriers 130 of the at least one storage magazine 120 does not currently include the sufficient number of the empty carriers 130e to accommodate the one or more manually loaded consumables containers 30f. In some embodiments, the method 500 further comprises removing, via the transfer system 250, at least the permissible number of the consumables containers 30 from the occupied carriers 130f of the plurality of carriers 130 of the at least one storage magazine 120 without affecting a timing of the active mode 12 of the at least one analyzer arrangement 20. In some embodiments, the method 500 further comprises transferring, via the transfer system 250, some of one or more manually loaded consumables containers 30f from the at least one of the plurality of tray holding positions 160 to the available empty carriers 130e of the plurality of carriers 130 of the at least one storage magazine 120 after removal of at least the permissible number of the consumables containers 30. In some embodiments, the method 500 further comprises transferring, via the transfer system 250, the remaining of the one or more manually loaded consumables containers 30f from the at least one of the tray holding positions 160 to the buffer storage 110.

In some embodiments, the method 500 further comprises determining that the plurality of carriers 130 of the at least one storage magazine 120 currently includes the sufficient number of the empty carriers 130e to accommodate the remaining of the one or more manually loaded consumables containers 30f, and transferring, via the transfer system 250, the remaining of the one or more manually loaded consumables containers 30f from the buffer storage 110 to the sufficient number of the empty carriers 130e of the at least one storage magazine 120.

In some embodiments, the method 500 further comprises warning the operator if the plurality of carriers 130 of the at least one storage magazine 120 currently does not include the sufficient number of the empty carriers 130e to accommodate the one or more manually loaded consumables containers 30f.

In some embodiments, the method 500 further comprises collecting the operator input from the operator if the plurality of carriers 130 of the at least one storage magazine 120 currently does not include the sufficient number of the empty carriers 130e to accommodate the one or more manually loaded consumables containers 30f. In some embodiments, the operator input comprises defining the consumables containers 30 to be removed from the occupied carriers 130f of the plurality of carriers 130 of the at least one storage magazine 120.

In some embodiments, the method 500 further comprises reserving the first set of tray holding positions 160o from the plurality of tray holding positions 160 of the loading/unloading tray 150 for manual loading of one or more of the consumables containers 30, such that the first set of tray holding positions 160o is unable to receive one or more of the consumables containers 30 from the transfer system 250. The method 500 further comprises reserving the second set of tray holding positions 160m from the plurality of tray holding positions 160 of the loading/unloading tray 150 for receiving one or more of the consumables containers 30 from the transfer system 250, such that the second set of tray holding positions 160m is unavailable for manual loading of one or more of the consumables containers 30.

In some embodiments, the method 500 further comprises moving the first set of tray holding positions 160o to the operator access station 170 for manual loading of one or more of the consumables containers 30 and moving the first set of tray holding positions 160o to the transfer system access station 180 for removal of one or more of the consumables containers 30 from the first set of tray holding positions 160o by the transfer system 250 after manual loading.

In some embodiments, the method 500 further comprises moving the second set of tray holding positions 160m to the transfer system access station 180 for receiving one or more of the consumables containers 30 from the transfer system 250 and moving the second set of tray holding positions 160m to the operator access station 170 for manual removal of one or more of the consumables containers 30 from the second set of tray holding positions 160m.

In some embodiments, the method 500 further comprises transferring, via the transfer system 250, one or more of the consumables containers 30 from the at least one storage magazine 120 to the second set of tray holding positions 160m at least while one or more of the consumables containers 30 are manually loaded into the at least one of the plurality of tray holding positions 160 of the loading/unloading tray 150.

In some embodiments, the method 500 further comprises moving the lid 128 of the third cover 126 between the open position 128o and the closed position 128c. In the open position 128o of the lid 128, at least some of the plurality of carriers 130 are accessible to the transfer system 250. In the closed position 128c of the lid 128, the plurality of carriers 130 is inaccessible to the transfer system 250.

In some embodiments, the method 500 further comprises opening the third cover 126 to access the plurality of carriers 130 of the at least one storage magazine 120 when the at least one analyzer arrangement 20 is in the idle mode 14.

In some embodiments, the method 500 further comprises reading respective identifiers 39 of one or more of the consumables containers 30. In some embodiments, the transfer system 250 comprises the sensor disposed on the gripper 36 configured to read the identifiers 39 of one or more of the consumables containers 30.

In some embodiments, the method 500 further comprises automatically transferring, via the transfer system 250, one or more of the consumables containers 30 between the loading/unloading tray 150 and the first and second storage magazines 120a, 120b.

In some embodiments, the method 500 further comprises rearranging at least one of the consumables containers 30 removably held by the at least one storage magazine 120 in the first holding position by transferring the at least one of the consumables containers 30 to the loading/unloading tray 150 or the buffer storage 110, and transferring the at least one of the consumables containers 30 to the at least one storage magazine 120 in the second holding position.

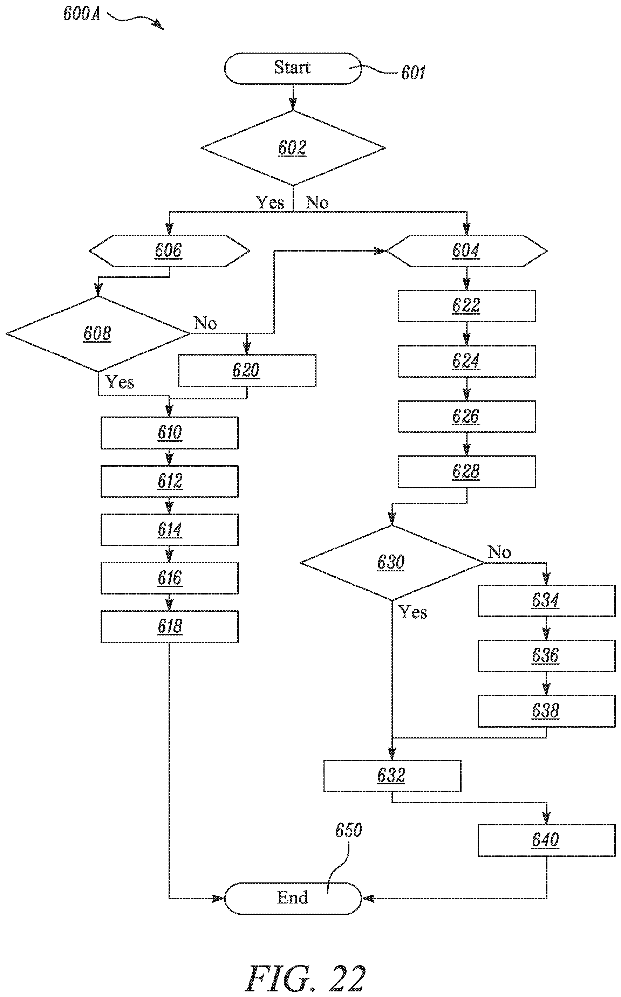

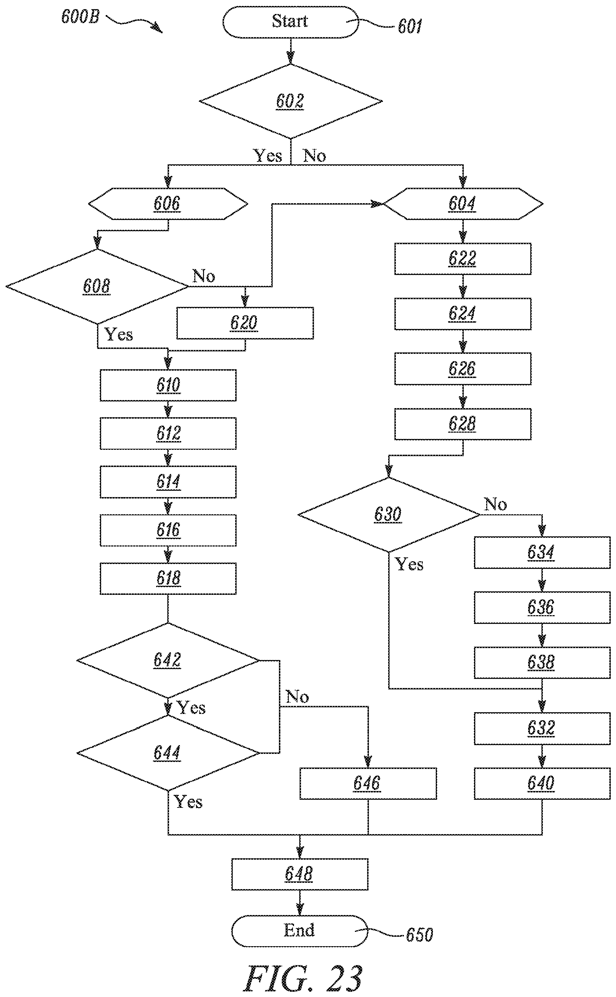

FIGS. 22 and 23 are flowcharts illustrating respective methods 600A, 600B of loading/unloading one or more of the consumables containers 30 for the automated analyzer 10, according to an embodiment of the present disclosure. The methods 600A, 600B will be further described with reference to FIGS. 1 to 20. The methods 600A, 600B start at block 601.

Referring to FIG. 22, at block 602, the method 600A comprises determining a number of the one or more of the consumables containers 30 to be manually loaded into the automated analyzer 10.

If the number of the one or more of the consumables containers 30 to be manually loaded into the automated analyzer 10 is less than the maximum number of the consumable containers 30 that the at least some of the plurality of tray holding positions 160, accessible by the operator through the operator access station 170, can removably hold, the method 600A moves to block 604.

If the number of the one or more of the consumables containers 30 to be manually loaded into the automated analyzer 10 is greater than the maximum number of the consumable containers 30 that the at least some of the plurality of tray holding positions 160, accessible by the operator through the operator access station 170, can removably hold, the method 600A moves to block 606.

At block 606, the method 600A comprises proceeding with steps of manually loading the consumables containers 30 into the at least one storage magazine 120.

At block 608, the method 600A comprises determining if the at least one analyzer arrangement 20 is in the idle mode 14.

If the at least one analyzer arrangement 20 is in the idle mode 14, the method 600A moves to block 610.

At block 610, the method 600A comprises opening the third cover 126 of the at least one storage magazine 120.

At block 612, the method 600A comprises manually removing at least the required number of the consumables containers 30 from the occupied carriers 130f of the plurality of carriers 130 of the at least one storage magazine 120.

At block 614, the method 600A comprises manually loading the consumables containers 30 into the at least one storage magazine 120. For example, the operator may manually load the consumables containers 30 into the at least one storage magazine 120 after removing the third cover 126.

At block 616, the method 600A comprises closing the third cover 126 of the at least one storage magazine 120.

At block 618, the method 600A comprises reading the respective identifiers 39 of one or more of the consumables containers 30.

If the at least one analyzer arrangement 20 is not in the idle mode 14, the method 600A moves to block 620 or block 604.

At block 620, the method 600A comprises pausing the at least one analyzer arrangement 20. The method 600A then moves to block 610.

At block 604, the method 600A comprises proceeding with steps of manually loading one or more of the consumables containers 30 at least while the at least one analyzer arrangement 20 is in the active mode 12.

At block 622, the method 600A comprises opening the first cover 156 of the operator access station 170.

At block 624, the method 600A comprises manually loading one or more of the consumables containers 30 into at least one of the plurality of tray holding positions 160 of the loading/unloading tray 150 at least while the at least one analyzer arrangement 20 is in the active mode 12.

At block 626, the method 600A comprises closing the first cover 156 of the operator access station 170.

At block 628, the method 600A comprises reading the respective identifiers 39 of one or more of the consumables containers 30.

At block 630, the method 600A comprises determining if the at least one storage magazine 120 comprises the sufficient number of the empty carriers 130e to accommodate the one or more manually loaded consumables containers 30f.

If the at least one storage magazine 120 comprises the sufficient number of the empty carriers 130e to accommodate the one or more manually loaded consumables containers 30f, the method 600A moves to block 632.

At block 632, the method 600A comprises transferring the one or more manually loaded consumables containers 30f to the at least one storage magazine 120.

If the at least one storage magazine 120 does not comprises the sufficient number of the empty carriers 130e to accommodate the one or more manually loaded consumables containers 30f, the method 600A moves to block 634.

At block 634, the method 600A comprises warning the operator.

At block 636, the method 600A comprises collecting the operator input from the operator.

At block 638, the method 600A comprises transferring the consumables containers 30 from the occupied carriers 130e of the plurality of carriers 130 of the at least one storage magazine 120 to the loading/unloading tray 150 and/or the buffer storage 110.

At block 640, the method 600A comprises removing the consumables containers 30 from the loading/unloading tray 150.

Referring to FIG. 23, the method 600B is substantially similar to the method 600A described with reference to FIG. 22. The common steps have been provided with same reference numbers.

The method 600B additionally include blocks 642, 644, 646, and 648.

At block 642, the method 600B comprises determining if the consumables containers 30 are at correct locations.

If the consumables containers 30 are at the correct locations, the method 600B moves to block 644.

At block 644, the method 600B comprises determining if the consumables containers 30 are at locations which improves throughput of the automated analyzer 10.

If the consumables containers 30 are at the locations which improves throughput of the automated analyzer 10, the method 600B moves to block 648.

At block 648, the method 600B comprises qualitative and quantitative analyses of the biological sample.

If the consumables containers 30 are not at the correct locations, the method 600B moves to block 646.

At block 646, the method 600B comprises transferring the consumables containers 30 that are not at the correct locations to respective correct locations of the at least one storage magazine 120.

The methods 600A, 600B end at block 650.

The rearrangement of the consumables containers 30 may correct loading errors. The rearrangement of the consumables containers 30 may further balance out or distribute test orders between the at least one analyzer arrangement 20, and therefore optimize the workflow of the automatic analyzer 10. This may further improve the throughput of the automatic analyzer 10.

Unless otherwise indicated, all numbers expressing feature sizes, amounts, and physical properties used in the specification and claims are to be understood as being modified by the term "about". Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims.

## Claims

1. A consumables container loading/unloading system (100) for an automated analyzer (10),
the automated analyzer (10) having at least one analyzer arrangement (20, 20i, 20o) with an active mode (12) and an idle mode (14),
the at least one analyzer arrangement (20, 20i, 20o) configured to consume at least liquid consumables (30L) when in the active mode (12), the liquid consumables (30L) delivered to the automated analyzer (10) via one or more consumables containers (30) and delivered to the at least one analyzer arrangement (20, 20i, 20o) via automated pipetting when the at least one analyzer arrangement (20, 20i, 20o) is in the active mode (12),
the consumables container loading/unloading system (100) comprising:
at least one storage magazine (120, 120a, 120b) comprising a plurality of carriers (130), each of the plurality of carriers (130) configured to removably hold at least one of the consumables containers (30), the at least one storage magazine (120, 120a, 120b) configured to manually receive one or more of the consumables containers (30) from an operator while the at least one analyzer arrangement (20, 20i, 20o) is in the idle mode (14);
a loading/unloading tray (150) configured to manually receive one or more of the consumables containers (30) from the operator at least while the at least one analyzer arrangement (20, 20i, 20o) is in the active mode (12); and
a transfer system (250) configured to automatically transfer one or more of the consumables containers (30) at least between the loading/unloading tray (150) and the at least one storage magazine (120, 120a, 120b);
wherein the transfer system (250) is configured to transfer one or more of the consumables containers (30)
to or from the at least one storage magazine (120, 120a, 120b) at least while the loading/unloading tray (150) manually receives one or more of the consumables containers (30) from the operator, and/or
between the loading/unloading tray (150) and a buffer storage (110) and/or between the loading/unloading tray (150) and the at least one storage magazine (120, 120a, 120b) at least while the at least one analyzer arrangement (20, 20i, 20o) is in the active mode (12).

2. The consumables container loading/unloading system (100) of claim 1,
wherein the transfer system (250) transfers one or more of the consumables containers (30) between the at least one storage magazine (120, 120a, 120b) and the loading/unloading tray (150) at least while the loading/unloading tray (150) manually receives one or more of the consumables containers (30) from the operator, and/or
further comprising a buffer storage (110) comprising a plurality of buffer holding positions (112), each of the plurality of buffer holding positions (112) configured to removably hold at least one of the consumables containers (30), wherein the transfer system (250) transfers one or more of the consumables containers (30) between the at least one storage magazine (120, 120a, 120b) and the buffer storage (110) at least while the loading/unloading tray (150) manually receives one or more of the consumables containers (30) from the operator, in particular,
wherein the transfer system (250) transfers one or more of the consumables containers (30) between the at least one storage magazine (120, 120a, 120b) and the buffer storage (110) at least while the liquid consumables (30L) are delivered from the at least one storage magazine (120, 120a, 120b) to the automated analyzer (10) via automated pipetting, and/or
wherein the buffer storage (110) is vertically located at a different level than the loading/unloading tray (150), in particular, wherein the buffer storage (110) is vertically located at a higher level than the loading/unloading tray (150), and/or
wherein the buffer storage (110) comprises a first portion (110a) and a second portion (110b) spaced apart from the first portion (110a), wherein the first portion (110a) and the second portion (110b) define a buffer opening (115) therebetween, and wherein the first portion (110a) comprises a first set of buffer holding positions (112a) from the plurality of buffer holding positions (112) and the second portion (110b) comprises a second set of buffer holding positions (112b) from the plurality of buffer holding positions (112), in particular, wherein the transfer system (250) is configured to access the loading/unloading tray (150) by moving vertically through the buffer opening (115) to transfer one or more of the consumables containers (30) between the loading/unloading tray (150) and the buffer storage (110) and/or between the loading/unloading tray (150) and the at least one storage magazine (120, 120a, 120b).

3. The consumables container loading/unloading system (100) of any of claims 1 or 2 further comprising: an operator access station (170) configured to allow the operator to manually access the loading/unloading tray (150) at least while the at least one analyzer arrangement (20, 20i, 20o) is in the active mode (12); and a transfer system access station (180) separate from the operator access station (170) and configured to allow the transfer system (250) to access the loading/unloading tray (150), wherein the transfer system access station (180) is inaccessible to the operator at least while the at least one analyzer arrangement (20, 20i, 20o) is in the active mode (12),
in particular, wherein the loading/unloading tray (150) comprises a plurality of tray holding positions (160), wherein each of the plurality of tray holding positions (160) is configured to removably hold one or more of the consumables containers (30), wherein at least some of the plurality of tray holding positions (160) are accessible by the operator through the operator access station (170), and wherein the loading/unloading tray (150) is configured to move the at least some of the plurality of tray holding positions (160) between the operator access station (170) and the transfer system access station (180) at least while the at least one analyzer arrangement (20, 20i, 20o) is in the active mode (12), in particular,
wherein the system is configured such that: upon determining that the loading/unloading tray (150) is unavailable to manually receive additional consumables containers (30), the loading/unloading tray (150) moves the at least some of the plurality of tray holding positions (160) from the operator access station (170) to the transfer system access station (180); the transfer system (250) removes one or more of the consumables containers (30) from the at least some of the plurality of tray holding positions (160) to the buffer storage (110); and after transfer of the one or more of the consumables containers (30) from the at least some of the plurality of tray holding positions (160), the loading/unloading tray (150) is configured to move the at least some of the plurality of tray holding positions (160) to the operator access station (170) for manually receiving the additional consumables containers (30) from the operator, or
wherein the transfer system (250) is configured to transfer a required number of the consumables containers (30) from the at least one storage magazine (120, 120a, 120b) to the buffer storage (110) upon determining that the plurality of carriers (130) of the at least one storage magazine (120, 120a, 120b) does not currently include a sufficient number of empty carriers to accommodate the one or more manually received consumables containers (30), and wherein the transfer system (250) is configured to transfer the one or more manually received consumables containers (30) from at least one of the plurality of tray holding positions (160) to the plurality of carriers (130) of the at least one storage magazine (120, 120a, 120b) after removal of the required number of the consumables containers (30), and/or
wherein the plurality of tray holding positions (160) comprises a first set of tray holding positions (160o) and a second set of tray holding positions (160m), wherein the first set of tray holding positions (160o) is reserved to manually receive one or more of the consumables containers (30) from the operator and is unable to receive one or more of the consumables containers (30) from the transfer system (250), and wherein the second set of tray holding positions (160m) is reserved to receive one or more of the consumables containers (30) from the transfer system (250) and is unable to manually receive one or more of the consumables containers (30) from the operator, in particular
wherein the system is configured such that the loading/unloading tray (150) selectively moves the first set of tray holding positions (160o) to the operator access station (170) for manually receiving one or more of the consumables containers (30) from the operator, and wherein the loading/unloading tray (150) selectively moves the first set of tray holding positions (160o) to the transfer system access station (180) for removal of one or more of the consumables containers (30) from the first set of tray holding positions (160o) by the transfer system (250) after manually receiving one or more of the consumables containers (30) from the operator, and/or
wherein the system is configured such that the loading/unloading tray (150) selectively moves the second set of tray holding positions (160m) to the transfer system access station (180) for receiving one or more of the consumables containers (30) from the transfer system (250), and wherein the loading/unloading tray (150) selectively moves the second set of tray holding positions (160m) to the operator access station (170) for manual removal of one or more of the consumables containers (30) from the second set of tray holding positions (160m) by the operator, and/or
wherein the system is configured such that the transfer system (250) transfers one or more of the consumables containers (30) from the at least one storage magazine (120, 120a, 120b) to the second set of tray holding positions (160m) at least while the first set of tray holding positions (160o) manually receives one or more of the consumables containers (30) from the operator, and/or
wherein the loading/unloading tray (150) is configured to rotate about a tray axis (AI) and thereby move the at least some of the plurality of tray holding positions (160) between the operator access station (170) and the transfer system access station (180), and/or
wherein the operator access station (170) comprises a first cover (156) movable between an open position (156o) and a closed position (156c), wherein in the open position (156o), the at least some of the plurality of tray holding positions (160) are accessible to the operator, and in the closed position, the plurality of tray holding positions (160) is inaccessible to the operator, and wherein the first cover (156) remains in the closed position (156c) when the loading/unloading tray (150) is moving between the operator access station (170) and the transfer system access station (180), in particular, further comprising an interlock mechanism (157) configured to releasably hold the loading/unloading tray (150) stationary when the first cover (156) is in the open position (156o) and allow the loading/unloading tray (150) to move when the first cover (156) is in the closed position (156c), and/or
wherein the transfer system access station (180) comprises a second cover (185), wherein the second cover (185) comprises an access opening (186) aligned with one or more of the plurality of tray holding positions (160), and wherein the access opening (186) is aligned with the buffer opening (115) of the buffer storage (110), in particular, wherein the transfer system (250) is configured to access the loading/unloading tray (150) by moving vertically through the buffer opening (115) and the access opening (186) to transfer one or more of the consumables containers (30) between the loading/unloading tray (150) and the buffer storage (110) and/or between the loading/unloading tray (150) and the at least one storage magazine (120, 120a, 120b).

4. The consumables container loading/unloading system (100) of any of claims 1 to 3,
wherein the at least one storage magazine (120, 120a, 120b) comprises a third cover (126, 126a, 126b) configured to cover at least some of the plurality of carriers (130), and wherein the third cover (126, 126a, 126b) comprises a storage opening (127, 127a, 127b) aligned with the remaining of the plurality of carriers (130),
in particular, wherein the third cover (126, 126a, 126b) further comprises a lid (128) attached to the third cover (126, 126a, 126b), wherein the lid (128) is movable between an open position (128o and a closed position (128c), wherein in the open position (128o of the lid (128), the remaining of the plurality of carriers (130) are accessible to the transfer system (250), and wherein in the closed position (128c) of the lid (128), the plurality of carriers (130) is inaccessible to the transfer system (250), and/or
wherein the transfer system (250) comprises a pick-and-place device (250p), wherein at least one of the consumables containers (30) comprises a neck (32) and/or a tab (34), and wherein the pick-and-place device (250p) comprises a gripper (36) configured to engage the neck (32) and/or the tab (34) and thereby transfer the at least one of the consumables containers (30) to or from the at least one storage magazine (120, 120a, 120b), in particular, wherein the pick-and-place device (250p) further comprises an authenticator (37) disposed on the gripper (36), and wherein the authenticator (37) comprises a sensor (38) configured to authenticate one or more of the consumables containers (30) engaged by the gripper (36), and/or
wherein the transfer system (250) comprises a pick-and-place device (250p), wherein at least one of the consumables containers (30) is detachably coupled to an adapter (40), wherein the adapter (40) comprises a tab (44), and wherein the pick-and-place device (250p) comprises a gripper (36) configured to engage the tab (44) and thereby transfer the at least one of the consumables containers (30) to or from the at least one storage magazine (120, 120a, 120b), in particular, wherein the pick-and-place device (250p) further comprises an authenticator (37) disposed on the gripper (36), and wherein the authenticator (37) comprises a sensor (38) configured to authenticate one or more of the consumables containers (30) engaged by the gripper (36).

5. The consumables container loading/unloading system (100) of any of claims 1 to 4,
wherein the transfer system (250) is configured to rotate about a transfer axis (A2), and/or
wherein the loading/unloading tray (150) is temperature controlled, in particular, the consumables container loading/unloading system (100) comprising the buffer storage (110) of claim 2 wherein the buffer storage (110) is temperature controlled, and/or
wherein the at least one analyzer arrangement (20) comprises a first analyzer arrangement (20i) and a second analyzer arrangement (20o), each of the first and second analyzer arrangements (20i, 20o) comprises the active mode (12) and the idle mode (14) and is configured to consume the at least liquid consumables (30L) when in the active mode (12), and wherein the loading/unloading tray (150) is configured to manually receive one or more of the consumables containers (30) from the operator at least while at least one of the first and second analyzer arrangements (20i, 20o) is in the active mode (12), and/or
wherein the at least one storage magazine (120, 120a, 120b) comprises a first storage magazine (120a) and a second storage magazine (120b), each of the first storage magazine (120a) and the second storage magazine (120b) comprising the plurality of carriers (130), and wherein the transfer system (250) is further configured to automatically transfer one or more of the consumables containers (30) between the loading/unloading tray (150) and the first and second storage magazines (120a, 120b),
in particular, wherein the transfer system (250) is configured to transfer one or more of the consumables containers (30) between the first storage magazine (120a) and the second storage magazine (120b).

6. The consumables container loading/unloading system (100) of any of claims 1 to 5,
wherein the transfer system (250) and the loading/unloading tray (150) are configured to rearrange at least one of the consumables containers (30) removably held by the at least one storage magazine (120, 120a, 120b) in a first holding position by transferring the at least one of the consumables containers (30) to the loading/unloading tray (150) and transferring the at least one of the consumables containers (30) to the at least one storage magazine (120, 120a, 120b) in a second holding position, and/or
wherein the consumables container loading/unloading system (100) comprising the buffer storage (110) of claim 2 and wherein the transfer system (250) and the buffer storage (110) are configured to rearrange at least one of the consumables containers (30) removably held by the at least one storage magazine (120, 120a, 120b) in a first holding position by transferring the at least one of the consumables containers (30) to the buffer storage (110) and transferring the at least one of the consumables containers (30) to the at least one storage magazine (120, 120a, 120b) in a second holding position,
in particular, wherein the system is configured such that the at least one of the consumables containers (30) removably held by the at least one storage magazine (120, 120a, 120b) is rearranged to correspond to a test order, and/or
in particular, wherein the system is configured such that at least one of the consumables containers (30) removably held by the at least one storage magazine (120, 120a, 120b) is rearranged to correct a location of the at least one of the consumables containers (30).

7. The consumables container loading/unloading system (100) of any of claims 1 to 6 further comprising a waste disposal station (190), wherein the transfer system (250) transfers one or more of the consumables containers (30) from the at least one storage magazine (120, 120a, 120b) to the waste disposal station (190) upon detecting that the one or more of the consumables containers (30) contain the liquid consumables (30L) below a predetermined threshold volume,
in particular, the consumables container loading/unloading system (100) comprising the buffer storage (110) of claim 2 and further comprising a scheduler (205) configured to identify and/or create a container access period of the at least one storage magazine (120, 120a, 120b) when the at least one analyzer arrangement (20, 20i, 20o) is in the active mode (12), wherein the transfer system (250) transfers at least one of the consumables containers (30) between the at least one storage magazine (120, 120a, 120b) and the loading/unloading tray (150) and/or between the at least one storage magazine (120, 120a, 120b) and the buffer storage (110) in the container access period without affecting a timing of the active mode (12), in particular, wherein the scheduler (205) is included in a controller (200) of the automated analyzer (10), in particular, wherein the scheduler (205) includes software stored in a non-transient memory (210) of the controller (200).

8. The consumables container loading/unloading system (100) according to any of the preceding claims, comprising the buffer storage (110), wherein the buffer storage is vertically located at a different level than the loading/unloading tray (150) and comprises a plurality of buffer holding positions (112), each of the plurality of buffer holding positions (112) configured to removably hold at least one of the consumables containers (30),
in particular, wherein the buffer storage (110) is vertically located at a same level as the at least one storage magazine (120, 120a, 120b) and/or wherein the loading/unloading tray (150) is vertically located at a different level than the at least one storage magazine (120, 120a, 120b).

9. A method (500) of loading/unloading one or more consumables containers (30) using the consumables container loading/unloading system (100) for an automated analyzer (10) according to any of the claims 1-9, the method (500) comprising:
providing (510) the automated analyzer (10);
manually loading (520) one or more of the consumables containers (30) into at least one of the plurality of tray holding positions (160) of the loading/unloading tray (150) at least while the at least one analyzer arrangement (20, 20i, 20o) is in the active mode (12); and
transferring (530), via the transfer system (250), one or more of the consumables containers (30) to or from the at least one storage magazine (120, 120a, 120b) while one or more of the consumables containers (30) are manually loaded into the at least one of the plurality of tray holding positions (160) of the loading/unloading tray (150).

10. The method (500) of claim 9
further comprising transferring, via the transfer system (250), one or more of the consumables containers (30) between the at least one storage magazine (120, 120a, 120b) and the loading/unloading tray (150) at least while one or more of the consumables containers (30) are manually loaded into the at least one of the plurality of tray holding positions (160) of the loading/unloading tray (150), and/or
further comprising transferring, via the transfer system (250), one or more of the consumables containers (30) between the at least one storage magazine (120, 120a, 120b) and a buffer storage (110) vertically located at a different level than the loading/unloading tray (150) at least while one or more of the consumables containers (30) are manually loaded into the at least one of the plurality of tray holding positions (160) of the loading/unloading tray (150), in particular,
wherein the transfer system (250) transfers one or more of the consumables containers (30) between the at least one storage magazine (120, 120a, 120b) and the buffer storage (110) at least while the at least one analyzer arrangement (20, 20i, 20o) consumes the at least liquid consumables (30L), and/or
further comprising moving the transfer system (250) vertically through a buffer opening (115) of the buffer storage (110) in order to access the loading/unloading tray (150) to transfer one or more of the consumables containers (30) between the loading/unloading tray (150) and the buffer storage (110) and/or between the loading/unloading tray (150) and the at least one storage magazine (120, 120a, 120b).

11. The method (500) of any of claim 9 or 10 further comprising moving, via the loading/unloading tray (150), at least some of the plurality of tray holding positions (160) of the loading/unloading tray (150) between an operator access station (170) and a transfer system access station (180) at least while the at least one analyzer arrangement (20, 20i, 20o) is in the active mode (12) when a first cover (156) of the operator access station (170) is in a closed position (156c), and wherein the first cover (156) remains in the closed position (156c) when the at least some of the plurality of tray holding positions (160) are moving between the operator access station (170) and the transfer system access station (180), in particular
further comprising opening the first cover (156) to an open position (156o) to access the at least some of the plurality of tray holding positions (160) configured to manually receive one of more of the consumables containers (30) at least while the at least one analyzer arrangement (20, 20i, 20o) is in the active mode (12), in particular, further comprising releasably holding, via an interlock mechanism (157), the loading/unloading tray (150) stationary when the first cover (156) is in the open position (156o), wherein the interlock mechanism (157) allows the loading/unloading tray (150) to move when the first cover (156) is in the closed position (156c), and/or
further comprising: moving the at least some of the plurality of tray holding positions (160) from the operator access station (170) to the transfer system access station (180) upon determining that the at least some of the plurality of tray holding positions (160) of the loading/unloading tray (150) are unavailable for manually loading additional consumables containers (30); removing, via the transfer system (250), one or more of the consumables containers (30) from the at least some of the plurality of tray holding positions (160) to the buffer storage (110); and moving the at least some of the plurality of tray holding positions (160) to the operator access station (170) for manually loading the additional consumables containers (30) after transfer of the one or more of the consumables containers (30) from the at least some of the plurality of tray holding positions (160).

12. The method (500) of any of claims 9 to 11 further comprising: determining that the plurality of carriers (130) of the at least one storage magazine (120, 120a, 120b) does not currently include a sufficient number of empty carriers to accommodate the one or more manually loaded consumables containers (30); removing, via the transfer system (250), at least a required number of the consumables containers (30) from occupied carriers from the plurality of carriers (130) of the at least one storage magazine (120, 120a, 120b) to prepare at least the sufficient number of empty carriers to receive the one or more manually loaded consumable containers (30); and transferring, via the transfer system (250), the one or more manually loaded consumables containers (30) from the at least one of the plurality of tray holding positions (160) to the plurality of carriers (130) of the at least one storage magazine (120, 120a, 120b), in particular
wherein at least removing at least the required number of the consumables containers (30) from the occupied carriers occurs when the at least one analyzer arrangement (20, 20i, 20o) is in the active mode (12), and/or
wherein transferring the one or more manually loaded consumables containers from the at least one of the plurality of tray holding positions (160) to the plurality of carriers (130) occurs when the at least one analyzer arrangement (20, 20i, 20o) is in the active mode (12), and/or
further comprising transferring, via the transfer system (250), at least some of the required number of the consumables containers (30) removed from the occupied carriers to the loading/unloading tray (150), and/or
further comprising transferring, via the transfer system (250), at least some of the required number of the consumables containers (30) removed from the occupied carriers to the buffer storage (110), and/or
further comprising transferring, via the transfer system (250), at least some of the one or more manually loaded consumables containers (30) from the at least one of the plurality of tray holding positions (160) to the buffer storage (110) prior to transfer to the plurality of carriers (130) of the at least one storage magazine (120, 120a, 120b), and/or
further comprising: transferring, via the transfer system (250), at least one of the one or more manually loaded consumables containers (30) having a higher priority from the at least one of the plurality of tray holding positions (160) to the plurality of carriers (130) of the at least one storage magazine (120, 120a, 120b); and transferring, via the transfer system (250), at least some of the one or more manually loaded consumables containers (30) having a lower priority from the at least one of the plurality of tray holding positions (160) to the buffer storage (110) prior to transferring the at least some of the one or more manually loaded consumables containers (30) having the lower priority to the plurality of carriers (130) of the at least one storage magazine (120, 120a, 120b), and/or
further comprising transferring, via the transfer system (250), at least some of the required number of the consumables containers (30) removed from the occupied carriers to a waste disposal station (190) upon detecting that the one or more of the consumables containers (30) contain the liquid consumables (30L) below a predetermined threshold volume.

13. The method (500) of any of claims 9 to 12
further comprising: determining that the plurality of carriers (130) of the at least one storage magazine (120, 120a, 120b) does not currently include a sufficient number of empty carriers to accommodate the one or more manually loaded consumables containers (30); removing, via the transfer system (250), at least a permissible number of the consumables containers (30) from occupied carriers of the plurality of carriers (130) of the at least one storage magazine (120, 120a, 120b) without affecting a timing of the active mode (12) of the at least one analyzer arrangement (20, 20i, 20o); transferring, via the transfer system (250), some of one or more manually loaded consumables containers (30) from the at least one of the plurality of tray holding positions (160) to available empty carriers of the plurality of carriers (130) of the at least one storage magazine (120, 120a, 120b) after removal of at least the permissible number of the consumables containers (30); and transferring, via the transfer system (250), the remaining of the one or more manually loaded consumables containers (30) from the at least one of the tray holding positions to the buffer storage (110),
in particular, further comprising: determining that the plurality of carriers (130) of the at least one storage magazine (120, 120a, 120b) currently includes a sufficient number of empty carriers to accommodate the remaining of the one or more manually loaded consumables containers (30); and transferring, via the transfer system (250), the remaining of the one or more manually loaded consumables containers (30) from the buffer storage (110) to the sufficient number of empty carriers of the at least one storage magazine (120, 120a, 120b), and/or
further comprising warning an operator if the plurality of carriers (130) of the at least one storage magazine (120, 120a, 120b) currently does not include the sufficient number of empty carriers to accommodate the one or more manually loaded consumables containers (30), and/or
further comprising collecting an operator input from an operator if the plurality of carriers (130) of the at least one storage magazine (120, 120a, 120b) currently does not include the sufficient number of empty carriers to accommodate the one or more manually loaded consumables containers (30), in particular, wherein the operator input comprises defining the consumables containers (30) to be removed from the occupied carriers of the plurality of carriers (130) of the at least one storage magazine (120, 120a, 120b), and/or
further comprises: reserving a first set of tray holding positions (160o) from the plurality of tray holding positions (160) of the loading/unloading tray (150) for manual loading of one or more of the consumables containers (30), such that the first set of tray holding positions (160o) is unable to receive one or more of the consumables containers (30) from the transfer system (250); and reserving a second set of tray holding positions (160m) from the plurality of tray holding positions (160) of the loading/unloading tray (150) for receiving one or more of the consumables containers (30) from the transfer system (250), such that the second set of tray holding positions (160m) is unavailable for manual loading of one or more of the consumables containers (30), in particular
further comprising: moving the first set of tray holding positions (160o) to the operator access station (170) for manual loading of one or more of the consumables containers (30); and moving the first set of tray holding positions (160o) to the transfer system access station (180) for removal of one or more of the consumables containers (30) from the first set of tray holding positions (160o) by the transfer system (250) after manual loading, and/or
further comprising: moving the second set of tray holding positions (160m) to the transfer system access station (180) for receiving one or more of the consumables containers (30) from the transfer system (250); and moving the second set of tray holding positions (160m) to the operator access station (170) for manual removal of one or more of the consumables containers (30) from the second set of tray holding positions (160m), and/or
further comprising transferring, via the transfer system (250), one or more of the consumables containers (30) from the at least one storage magazine (120, 120a, 120b) to the second set of tray holding positions (160m) at least while one or more of the consumables containers (30) are manually loaded into the at least one of the plurality of tray holding positions (160) of the loading/unloading tray (150), and/or
wherein the transfer system access station (180) comprises a second cover (185), wherein the second cover (185) comprises an access opening (186) aligned with one or more of the plurality of tray holding positions (160), and wherein the access opening (186) is aligned with the buffer opening (115) of the buffer storage (110).

14. The method (500) of any of claim 9 to 13,
wherein the at least one storage magazine (120, 120a, 120b) comprises a third cover (126, 126a, 126b) configured to cover at least some of the plurality of carriers (130), and wherein the third cover (126, 126a, 126b) comprises a storage opening (127, 127a, 127b) aligned with remaining of the plurality of carriers (130), in particular
further comprising moving a lid (128) of the third cover (126, 126a, 126b) between an open position (128o) and a closed position (128c), wherein in the open position (128o) of the lid (128), at least some of the plurality of carriers (130) are accessible to the transfer system (250), and wherein in the closed position (128c) of the lid (128), the plurality of carriers (130) is inaccessible to the transfer system (250), and/or
further comprising opening the third cover (126, 126a, 126b) to access the plurality of carriers (130) of the at least one storage magazine (120, 120a, 120b) when the at least one analyzer arrangement (20, 20i, 20o) is in the idle mode (14), and/or
further comprising reading respective identifiers (39) of one or more of the consumables containers (30), in particular, wherein the transfer system (250) comprises a sensor disposed on a gripper (36) configured to read the identifiers (39) of one or more of the consumables containers (30).

15. The method (500) of any of claims 9 to 14,
wherein the at least one storage magazine (120, 120a, 120b) comprises a first storage magazine (120a) and a second storage magazine (120b), each of the first storage magazine (120a) and the second storage magazine (120b) comprising the plurality of carriers (130), wherein the method (500)
further comprises automatically transferring, via the transfer system (250), one or more of the consumables containers (30) between the loading/unloading tray (150) and the first and second storage magazines (120a, 120b), in particular, further comprising transferring one or more of the consumables containers (30), via the transfer system (250), between the first storage magazine (120a) and the second storage magazine (120b), and/or
further comprising rearranging at least one of the consumables containers (30) removably held by the at least one storage magazine (120, 120a, 120b) in a first holding position by transferring the at least one of the consumables containers (30) to the loading/unloading tray (150) or the buffer storage (110) and transferring the at least one of the consumables containers (30) to the at least one storage magazine (120, 120a, 120b) in a second holding position, and/or
further comprising identifying and/or creating, via a scheduler (205), a container access period of the at least one storage magazine (120, 120a, 120b), and transferring, via the transfer system (250), at least one of the consumables containers (30) between the at least one storage magazine (120, 120a, 120b) and the loading/unloading tray (150) and/or between the at least one storage magazine (120, 120a, 120b) and the buffer storage (110) in the container access period.

## Patentansprüche

1. System zum Laden/Entladen von Verbrauchsmaterialbehältern (100) für einen automatisierten Analysator (10),
wobei der automatisierte Analysator (10) mindestens eine Analysatoranordnung (20, 20i, 20o) mit einem Aktivmodus (12) und einem Leerlaufmodus (14) aufweist,
wobei die mindestens eine Analysatoranordnung (20, 20i, 20o) so ausgebildet ist, dass sie mindestens flüssige Verbrauchsmaterialien (30L) verbraucht, wenn sie sich im Aktivmodus (12) befindet, wobei die flüssigen Verbrauchsmaterialien (30L) an den automatisierten Analysator (10) über einen oder mehrere Verbrauchsmaterialbehälter (30) abgegeben werden und an die mindestens eine Analysatoranordnung (20, 20i, 20o) über automatisiertes Pipettieren abgegeben werden, wenn sich die mindestens eine Analysatoranordnung (20, 20i, 20o) im Aktivmodus (12) befindet,
wobei das System zum Laden/Entladen von Verbrauchsmaterialbehältern (100) Folgendes umfasst:
mindestens ein Speichermagazin (120,120a, 120b), das eine Vielzahl von Trägern (130) umfasst, wobei jeder der Vielzahl von Trägern (130) so ausgebildet ist, dass er mindestens einen der Verbrauchsmaterialbehälter (30) lösbar hält, wobei das mindestens eine Speichermagazin (120, 120a, 120b) so ausgebildet ist, dass es einen oder mehrere der Verbrauchsmaterialbehälter (30) manuell von einem Bediener aufnimmt, während sich die mindestens eine Analysatoranordnung (20, 20i, 20o) im Leerlaufmodus (14) befindet;
ein Lade-/Entladetablett (150), das so ausgebildet ist, dass es einen oder mehrere der Verbrauchsmaterialbehälter (30) manuell von dem Bediener aufnimmt, mindestens während sich die mindestens eine Analysatoranordnung (20, 20i, 20o) im Aktivmodus (12) befindet; und
ein Transfersystem (250), das so ausgebildet ist, dass es einen oder mehrere der Verbrauchsmaterialbehälter (30) automatisch mindestens zwischen dem Lade-/Entladetablett (150) und dem mindestens einen Speichermagazin (120, 120a, 120b) transferiert;
wobei das Transfersystem (250) so ausgebildet ist, dass es einen oder mehrere der Verbrauchsmaterialbehälter (30)
zu oder von dem mindestens einen Speichermagazin (120, 120a, 120b) transferiert, mindestens während das Lade-/Entladetablett (150) einen oder mehrere der Verbrauchsmaterialbehälter (30) manuell von dem Bediener aufnimmt, und/oder
zwischen dem Lade-/Entladetablett (150) und einem Pufferlager (110) und/oder zwischen dem Lade-/Entladetablett (150) und dem mindestens einen Speichermagazin (120, 120a, 120b), mindestens während sich die mindestens eine Analysatoranordnung (20, 20i, 20o) im Aktivmodus (12) befindet.

2. System zum Laden/Entladen von Verbrauchsmaterialbehältern (100) nach Anspruch 1,
wobei das Transfersystem (250) einen oder mehrere der Verbrauchsmaterialbehälter (30) zwischen dem mindestens einen Speichermagazin (120, 120a, 120b) und dem Lade-/Entladetablett (150) transferiert, mindestens während das Lade-/Entladetablett (150) einen oder mehrere der Verbrauchsmaterialbehälter (30) manuell von dem Bediener aufnimmt, und/oder
weiter umfassend ein Pufferlager (110), das eine Vielzahl von Puffer-Haltepositionen (112) umfasst, wobei jede der Vielzahl von Puffer-Haltepositionen (112) so ausgebildet ist, dass sie mindestens einen der Verbrauchsmaterialbehälter (30) lösbar hält, wobei das Transfersystem (250) einen oder mehrere der Verbrauchsmaterialbehälter (30) zwischen dem mindestens einen Speichermagazin (120, 120a, 120b) und dem Pufferlager (110) transferiert, mindestens während das Lade-/Entladetablett (150) einen oder mehrere der Verbrauchsmaterialbehälter (30) manuell von dem Bediener aufnimmt, insbesondere,
wobei das Transfersystem (250) einen oder mehrere der Verbrauchsmaterialbehälter (30) zwischen dem mindestens einen Speichermagazin (120, 120a, 120b) und dem Pufferlager (110) transferiert, mindestens während die flüssigen Verbrauchsmaterialien (30L) von dem mindestens einen Speichermagazin (120, 120a, 120b) an den automatisierten Analysator (10) über automatisiertes Pipettieren abgegeben werden, und/oder
wobei das Pufferlager (110) vertikal auf einer anderen Ebene angeordnet ist als das Lade-/Entladetablett (150), insbesondere, wobei das Pufferlager (110) vertikal auf einer höheren Ebene angeordnet ist als das Lade-/Entladetablett (150), und/oder
wobei das Pufferlager (110) einen ersten Abschnitt (110a) und einen zweiten Abschnitt (110b) umfasst, der von dem ersten Abschnitt (110a) beabstandet ist,
wobei der erste Abschnitt (110a) und der zweite Abschnitt (110b) dazwischen eine Pufferöffnung (115) definieren, und wobei der erste Abschnitt (110a) einen ersten Satz von Puffer-Haltepositionen (112a) aus der Vielzahl von Puffer-Haltepositionen (112) umfasst
und der zweite Abschnitt (110b) einen zweiten Satz von Puffer-Haltepositionen (112b) aus der Vielzahl von Puffer-Haltepositionen (112) umfasst, insbesondere, wobei das Transfersystem (250) so ausgebildet ist, dass es auf das Lade-/Entladetablett (150) zugreift, indem es sich vertikal durch die Pufferöffnung (115) bewegt, um einen oder mehrere der Verbrauchsmaterialbehälter (30) zwischen dem Lade-/Entladetablett (150) und dem Pufferlager (110) und/oder zwischen dem Lade-/Entladetablett (150) und dem mindestens einen Speichermagazin (120, 120a, 120b) zu transferieren.

3. System zum Laden/Entladen von Verbrauchsmaterialbehältern (100) nach einem der Ansprüche 1 oder 2, weiter umfassend: eine Bedienerzugriffsstation (170), die so ausgebildet ist, dass sie es dem Bediener ermöglicht, auf das Lade-/Entladetablett (150) manuell zuzugreifen, mindestens während sich die mindestens eine Analysatoranordnung (20, 20i, 20o) im Aktivmodus (12) befindet;
eine Transfersystem-Zugriffsstation (180), die von der Bedienerzugriffsstation (170) getrennt ist und so ausgebildet ist, dass sie es dem Transfersystem (250) ermöglicht, auf das Lade-/Entladetablett (150) zuzugreifen, wobei die Transfersystem-Zugriffsstation (180) für den Bediener unzugänglich ist, mindestens während sich die mindestens eine Analysatoranordnung (20, 20i, 20o) im Aktivmodus (12) befindet,
insbesondere, wobei das Lade-/Entladetablett (150) eine Vielzahl von Tablett-Haltepositionen (160) umfasst, wobei jede der Vielzahl von Tablett-Haltepositionen (160) so ausgebildet ist, dass sie einen oder mehrere der Verbrauchsmaterialbehälter (30) lösbar hält, wobei mindestens einige der Vielzahl von Tablett-Haltepositionen (160) für den Bediener durch die Bedienerzugriffsstation (170) zugänglich sind, und wobei das Lade-/Entladetablett (150) so ausgebildet ist, dass es die mindestens einigen der Vielzahl von Tablett-Haltepositionen (160) zwischen der Bedienerzugriffsstation (170) und der Transfersystem-Zugriffsstation (180) bewegt, mindestens während sich die mindestens eine Analysatoranordnung (20, 20i, 20o) im Aktivmodus (12) befindet, insbesondere,
wobei das System derart ausgebildet ist, dass: bei Bestimmen, dass das Lade-/Entladetablett (150) nicht verfügbar ist, zusätzliche Verbrauchsmaterialbehälter (30) manuell aufzunehmen, das Lade-/Entladetablett (150) die mindestens einigen der Vielzahl von Tablett-Haltepositionen (160) von der Bedienerzugriffsstation (170) zu der Transfersystem-Zugriffsstation (180) bewegt; das Transfersystem (250) einen oder mehrere der Verbrauchsmaterialbehälter (30) von den mindestens einigen der Vielzahl von Tablett-Haltepositionen (160) zu dem Pufferlager (110) entfernt; und nach Transfer des einen oder der mehreren der Verbrauchsmaterialbehälter (30) von den mindestens einigen der Vielzahl von Tablett-Haltepositionen (160) das Lade-/Entladetablett (150) so ausgebildet ist, dass es die mindestens einigen der Vielzahl von Tablett-Haltepositionen (160) zu der Bedienerzugriffsstation (170) bewegt, um die zusätzlichen Verbrauchsmaterialbehälter (30) manuell von dem Bediener aufzunehmen, oder
wobei das Transfersystem (250) so ausgebildet ist, dass es eine erforderliche Anzahl der Verbrauchsmaterialbehälter (30) von dem mindestens einen Speichermagazin (120, 120a, 120b) zu dem Pufferlager (110) transferiert, bei Bestimmen, dass die Vielzahl von Trägern (130) des mindestens einen Speichermagazins (120, 120a, 120b) gegenwärtig keine ausreichende Anzahl von leeren Trägern einschließt, um den einen oder die mehreren manuell aufgenommenen Verbrauchsmaterialbehälter (30) aufzunehmen, und wobei das Transfersystem (250) so ausgebildet ist, dass es den einen oder die mehreren manuell aufgenommenen Verbrauchsmaterialbehälter (30) von mindestens einer der Vielzahl von Tablett-Haltepositionen (160) zu der Vielzahl von Trägern (130) des mindestens einen Speichermagazins (120, 120a, 120b) nach Entfernen der erforderlichen Anzahl der Verbrauchsmaterialbehälter (30) transferiert, und/oder
wobei die Vielzahl von Tablett-Haltepositionen (160) einen ersten Satz von Tablett-Haltepositionen (160o) und einen zweiten Satz von Tablett-Haltepositionen (160m) umfasst, wobei der erste Satz von Tablett-Haltepositionen (160o) reserviert ist, um einen oder mehrere der Verbrauchsmaterialbehälter (30) manuell von dem Bediener aufzunehmen, und nicht in der Lage ist, einen oder mehrere der Verbrauchsmaterialbehälter (30) von dem Transfersystem (250) aufzunehmen, und wobei der zweite Satz von Tablett-Haltepositionen (160m) reserviert ist, um einen oder mehrere der Verbrauchsmaterialbehälter (30) von dem Transfersystem (250) aufzunehmen, und nicht in der Lage ist, einen oder mehrere der Verbrauchsmaterialbehälter (30) manuell von dem Bediener aufzunehmen, insbesondere
wobei das System so ausgebildet ist, dass das Lade-/Entladetablett (150) den ersten Satz von Tablett-Haltepositionen (160o) selektiv zu der Bedienerzugriffsstation (170) bewegt, um einen oder mehrere der Verbrauchsmaterialbehälter (30) manuell von dem Bediener aufzunehmen, und wobei das Lade-/Entladetablett (150) den ersten Satz von Tablett-Haltepositionen (160o) selektiv zu der Transfersystem-Zugriffsstation (180) bewegt, um einen oder mehrere der Verbrauchsmaterialbehälter (30) von dem ersten Satz von Tablett-Haltepositionen (160o) durch das Transfersystem (250) nach manuellem Aufnehmen eines oder mehrerer der Verbrauchsmaterialbehälter (30) von dem Bediener zu entfernen, und/oder
wobei das System so ausgebildet ist, dass das Lade-/Entladetablett (150) den zweiten Satz von Tablett-Haltepositionen (160m) selektiv zu der Transfersystem-Zugriffsstation (180) bewegt, um einen oder mehrere der Verbrauchsmaterialbehälter (30) von dem Transfersystem (250) aufzunehmen, und wobei das Lade-/Entladetablett (150) den zweiten Satz von Tablett-Haltepositionen (160m) selektiv zu der Bedienerzugriffsstation (170) bewegt, um einen oder mehrere der Verbrauchsmaterialbehälter (30) von dem zweiten Satz von Tablett-Haltepositionen (160m) durch den Bediener manuell zu entfernen, und/oder
wobei das System so ausgebildet ist, dass das Transfersystem (250) einen oder mehrere der Verbrauchsmaterialbehälter (30) von dem mindestens einen Speichermagazin (120, 120a, 120b) zu dem zweiten Satz von Tablett-Haltepositionen (160m) transferiert, mindestens während der erste Satz von Tablett-Haltepositionen (160o) einen oder mehrere der Verbrauchsmaterialbehälter (30) manuell von dem Bediener aufnimmt, und/oder
wobei das Lade-/Entladetablett (150) so ausgebildet ist, dass es sich um eine Tablettachse (AI) dreht, und dadurch die mindestens einigen der Vielzahl von Tablett-Haltepositionen (160) zwischen der Bedienerzugriffsstation (170) und der Transfersystem-Zugriffsstation (180) bewegt, und/oder
wobei die Bedienerzugriffsstation (170) eine erste Abdeckung (156) umfasst, die zwischen einer offenen Position (156o) und einer geschlossenen Position (156c) bewegbar ist, wobei in der offenen Position (156o) die mindestens einigen der Vielzahl von Tablett-Haltepositionen (160) für den Bediener zugänglich sind, und in der geschlossenen Position die Vielzahl von Tablett-Haltepositionen (160) für den Bediener unzugänglich ist, und wobei die erste Abdeckung (156) in der geschlossenen Position (156c) verbleibt, wenn das Lade-/Entladetablett (150) sich zwischen der Bedienerzugriffsstation (170) und der Transfersystem-Zugriffsstation (180) bewegt, insbesondere, weiter umfassend einen Verriegelungsmechanismus (157), der so ausgebildet ist, dass er das Lade-/Entladetablett (150) lösbar stationär hält, wenn sich die erste Abdeckung (156) in der offenen Position (156o) befindet, und dem Lade-/Entladetablett (150) ermöglicht, sich zu bewegen, wenn sich die erste Abdeckung (156) in der geschlossenen Position (156c) befindet, und/oder
wobei die Transfersystem-Zugriffsstation (180) eine zweite Abdeckung (185) umfasst, wobei die zweite Abdeckung (185) eine Zugriffsöffnung (186) umfasst, die fluchtend mit einem oder mehreren der Vielzahl von Tablett-Haltepositionen (160) ist, und wobei die Zugriffsöffnung (186) fluchtend mit der Pufferöffnung (115) des Pufferlagers (110) ist, insbesondere, wobei das Transfersystem (250) so ausgebildet ist, dass es auf das Lade-/Entladetablett (150) zugreift, indem es sich vertikal durch die Pufferöffnung (115) und die Zugriffsöffnung (186) bewegt, um einen oder mehrere der Verbrauchsmaterialbehälter (30) zwischen dem Lade-/Entladetablett (150) und dem Pufferlager (110) und/oder zwischen dem Lade-/Entladetablett (150) und dem mindestens einen Speichermagazin (120, 120a, 120b) zu transferieren.

4. System zum Laden/Entladen von Verbrauchsmaterialbehältern (100) nach einem der Ansprüche 1 bis 3,
wobei das mindestens eine Speichermagazin (120, 120a, 120b) eine dritte Abdeckung (126, 126a, 126b) umfasst, die so ausgebildet ist, dass sie mindestens einige der Vielzahl von Trägern (130) abdeckt, und wobei die dritte Abdeckung (126, 126a, 126b) eine Speicheröffnung (127, 127a, 127b) umfasst, die fluchtend mit den übrigen der Vielzahl von Trägern (130) ist,
insbesondere, wobei die dritte Abdeckung (126, 126a, 126b) weiter einen Deckel (128) umfasst, der an der dritten Abdeckung (126, 126a, 126b) befestigt ist, wobei der Deckel (128) zwischen einer offenen Position (128o) und einer geschlossenen Position (128c) bewegbar ist, wobei in der offenen Position (128o) des Deckels (128) die übrigen der Vielzahl von Trägern (130) für das Transfersystem (250) zugänglich sind, und wobei in der geschlossenen Position (128c) des Deckels (128) die Vielzahl von Trägern (130) für das Transfersystem (250) unzugänglich ist, und/oder
wobei das Transfersystem (250) eine Greif- und Platziervorrichtung (250p) umfasst, wobei mindestens einer der Verbrauchsmaterialbehälter (30) einen Hals (32) und/oder eine Lasche (34) umfasst, und wobei die Greif- und Platziervorrichtung (250p) einen Greifer (36) umfasst, der so ausgebildet ist, dass in den Hals (32) und/oder die Lasche (34) eingreift und dadurch den mindestens einen der Verbrauchsmaterialbehälter (30) zu oder von dem mindestens einen Speichermagazin (120, 120a, 120b) transferiert, insbesondere, wobei die Greif- und Platziervorrichtung (250p) weiter einen Authentifikator (37) umfasst, der an dem Greifer (36) angeordnet ist, und wobei der Authentifikator (37) einen Sensor (38) umfasst, der so ausgebildet ist, dass er einen oder mehrere der von dem Greifer (36) ergriffenen Verbrauchsmaterialbehälter (30) authentifiziert, und/oder
wobei das Transfersystem (250) eine Greif- und Platziervorrichtung (250p) umfasst, wobei mindestens einer der Verbrauchsmaterialbehälter (30) lösbar mit einem Adapter (40) gekoppelt ist, wobei der Adapter (40) eine Lasche (44) umfasst, und wobei die Greif- und Platziervorrichtung (250p) einen Greifer (36) umfasst, der so ausgebildet ist, dass er in die Lasche (44) eingreift und dadurch den mindestens einen der Verbrauchsmaterialbehälter (30) zu oder von dem mindestens einen Speichermagazin (120, 120a, 120b) transferiert, insbesondere, wobei die Greif- und Platziervorrichtung (250p) weiter einen Authentifikator (37) umfasst, die an dem Greifer (36) angeordnet ist, und wobei der Authentifikator (37) einen Sensor (38) umfasst, der so ausgebildet ist, dass er einen oder mehrere der von dem Greifer (36) ergriffenen Verbrauchsmaterialbehälter (30) authentifiziert.

5. System zum Laden/Entladen von Verbrauchsmaterialbehältern (100) nach einem der Ansprüche 1 bis 4,
wobei das Transfersystem (250) so ausgebildet ist, dass es sich um eine Transferachse (A2) dreht, und/oder
wobei das Lade-/Entladetablett (150) temperaturgesteuert ist, insbesondere wobei das System zum Laden/Entladen von Verbrauchsmaterialbehältern (100) das Pufferlager (110) nach Anspruch 2 umfasst, wobei das Pufferlager (110) temperaturgesteuert ist, und/oder
wobei die mindestens eine Analysatoranordnung (20) eine erste Analysatoranordnung (20i) und eine zweite Analysatoranordnung (20o) umfasst, wobei jede der ersten und zweiten Analysatoranordnung (20i, 20o) den Aktivmodus (12) und den Leerlaufmodus (14) umfasst und so ausgebildet ist, dass sie die mindestens flüssigen Verbrauchsmaterialien (30L) verbraucht, wenn sie sich im Aktivmodus (12) befindet, und wobei das Lade-/Entladetablett (150) so ausgebildet ist, dass es einen oder mehrere der Verbrauchsmaterialbehälter (30) manuell von dem Bediener aufnimmt, mindestens während sich mindestens eine der ersten und zweiten Analysatoranordnung (20i, 20o) im Aktivmodus (12) befindet, und/oder
wobei das mindestens eine Speichermagazin (120, 120a, 120b) ein erstes Speichermagazin (120a) und ein zweites Speichermagazin (120b) umfasst, wobei jedes der ersten Speichermagazins (120a) und des zweiten Speichermagazins (120b) die Vielzahl von Trägern (130) umfasst, und wobei das Transfersystem (250) weiter so ausgebildet ist, dass es einen oder mehrere der Verbrauchsmaterialbehälter (30) automatisch zwischen dem Lade-/Entladetablett (150) und den ersten und zweiten Speichermagazinen (120a, 120b) transferiert,
insbesondere, wobei das Transfersystem (250) so ausgebildet ist, dass es einen oder mehrere der Verbrauchsmaterialbehälter (30) zwischen dem ersten Speichermagazin (120a) und dem zweiten Speichermagazin (120b) transferiert.

6. System zum Laden/Entladen von Verbrauchsmaterialbehältern (100) nach einem der Ansprüche 1 bis 5,
wobei das Transfersystem (250) und das Lade-/Entladetablett (150) so ausgebildet sind, dass sie mindestens einen der Verbrauchsmaterialbehälter (30), der von dem mindestens einen Speichermagazin (120, 120a, 120b) in einer ersten Halteposition lösbar gehalten wird, umordnen, indem der mindestens eine der Verbrauchsmaterialbehälter (30) zu dem Lade-/Entladetablett (150) transferiert wird und der mindestens eine der Verbrauchsmaterialbehälter (30) zu dem mindestens einen Speichermagazin (120, 120a, 120b) in einer zweiten Halteposition transferiert wird, und/oder
wobei das System zum Laden/Entladen von Verbrauchsmaterialbehältern (100) das Pufferlager (110) nach Anspruch 2 umfasst und wobei das Transfersystem (250) und das Pufferlager (110) so ausgebildet sind, dass sie mindestens einen der Verbrauchsmaterialbehälter (30), der von dem mindestens einen Speichermagazin (120, 120a, 120b) in einer ersten Halteposition lösbar gehalten wird, umordnen, indem der mindestens eine der Verbrauchsmaterialbehälter (30) zu dem Pufferlager (110) transferiert wird und der mindestens eine der Verbrauchsmaterialbehälter (30) zu dem mindestens einen Speichermagazin (120, 120a, 120b) in einer zweiten Halteposition transferiert wird,
insbesondere, wobei das System so ausgebildet ist, dass der mindestens eine der Verbrauchsmaterialbehälter (30), der von dem mindestens einen Speichermagazin (120, 120a, 120b) lösbar gehalten wird, umgeordnet wird, um einer Testreihenfolge zu entsprechen, und/oder
insbesondere, wobei das System so ausgebildet ist, dass mindestens einer der Verbrauchsmaterialbehälter (30), der von dem mindestens einen Speichermagazin (120, 120a, 120b) lösbar gehalten wird, umgeordnet wird, um eine Position des mindestens einen der Verbrauchsmaterialbehälter (30) zu korrigieren.

7. System zum Laden/Entladen von Verbrauchsmaterialbehältern (100) nach einem der Ansprüche 1 bis 6, weiter umfassend eine Abfallentsorgungsstation (190), wobei das Transfersystem (250) einen oder mehrere der Verbrauchsmaterialbehälter (30) von dem mindestens einen Speichermagazin (120, 120a, 120b) zu der Abfallentsorgungsstation (190) transferiert, bei Detektieren, dass der eine oder die mehreren der Verbrauchsmaterialbehälter (30) die flüssigen Verbrauchsmaterialien (30L) unter einem vorbestimmten Schwellenvolumen enthalten,
wobei insbesondere das System zum Laden/Entladen von Verbrauchsmaterialbehältern (100) das Pufferlager (110) nach Anspruch 2 umfasst und weiter einen Planer (205) umfasst, der so ausgebildet ist, dass er einen Behälterzugriffszeitraum des mindestens einen Speichermagazins (120, 120a, 120b) identifiziert und/oder erzeugt, wenn sich die mindestens eine Analysatoranordnung (20, 20i, 20o) im Aktivmodus (12) befindet, wobei das Transfersystem (250) mindestens einen der Verbrauchsmaterialbehälter (30) zwischen dem mindestens einen Speichermagazin (120, 120a, 120b) und dem Lade-/Entladetablett (150) und/oder zwischen dem mindestens einen Speichermagazin (120, 120a, 120b) und dem Pufferlager (110) in dem Behälterzugriffszeitraum transferiert, ohne ein Timing des Aktivmodus (12) zu beeinflussen, insbesondere, wobei der Planer (205) in einer Steuereinheit (200) des automatisierten Analysators (10) eingeschlossen ist, insbesondere, wobei der Planer (205) Software einschließt, die in einem nichtflüchtigen Speicher (210) der Steuereinheit (200) gespeichert ist.

8. System zum Laden/Entladen von Verbrauchsmaterialbehältern (100) nach einem der vorstehenden Ansprüche, umfassend das Pufferlager (110), wobei das Pufferlager vertikal auf einer anderen Ebene angeordnet ist als das Lade-/Entladetablett (150) und eine Vielzahl von Puffer-Haltepositionen (112) umfasst, wobei jede der Vielzahl von Puffer-Haltepositionen (112) so ausgebildet ist, dass sie mindestens einen der Verbrauchsmaterialbehälter (30) lösbar hält,
insbesondere, wobei das Pufferlager (110) vertikal auf derselben Ebene angeordnet ist wie das mindestens eine Speichermagazin (120, 120a, 120b) und/oder wobei das Lade-/Entladetablett (150) vertikal auf einer anderen Ebene angeordnet ist als das mindestens eine Speichermagazin (120, 120a, 120b).

9. Verfahren (500) zum Laden/Entladen eines oder mehrerer Verbrauchsmaterialbehälter (30) unter Verwendung des Systems zum Laden/Entladen von Verbrauchsmaterialbehältern (100) für einen automatisierten Analysator (10) nach einem der Ansprüche 1-9, wobei das Verfahren (500) Folgendes umfasst:
Bereitstellen (510) des automatisierten Analysators (10);
manuelles Laden (520) eines oder mehrerer der Verbrauchsmaterialbehälter (30) in mindestens eine der Vielzahl von Tablett-Haltepositionen (160) des Lade-/Entladetabletts (150), mindestens während sich die mindestens eine Analysatoranordnung (20, 20i, 20o) im Aktivmodus (12) befindet; und
Transferieren (530), über das Transfersystem (250), eines oder mehrerer der Verbrauchsmaterialbehälter (30) zu oder von dem mindestens einen Speichermagazin (120, 120a, 120b), während einer oder mehrere der Verbrauchsmaterialbehälter (30) manuell in die mindestens eine der Vielzahl von Tablett-Haltepositionen (160) des Lade-/Entladetabletts (150) geladen werden.

10. Verfahren (500) nach Anspruch 9
weiter umfassend, Transferieren, über das Transfersystem (250), eines oder mehrerer der Verbrauchsmaterialbehälter (30) zwischen dem mindestens einen Speichermagazin (120, 120a, 120b) und dem Lade-/Entladetablett (150), mindestens während einer oder mehrere der Verbrauchsmaterialbehälter (30) manuell in die mindestens eine der Vielzahl von Tablett-Haltepositionen (160) des Lade-/Entladetabletts (150) geladen werden, und/oder
weiter umfassend, Transferieren, über das Transfersystem (250), eines oder mehrerer der Verbrauchsmaterialbehälter (30) zwischen dem mindestens einen Speichermagazin (120, 120a, 120b) und einem Pufferlager (110), das vertikal auf einer anderen Ebene angeordnet ist als das Lade-/Entladetablett (150), mindestens während einer oder mehrere der Verbrauchsmaterialbehälter (30) manuell in die mindestens eine der Vielzahl von Tablett-Haltepositionen (160) des Lade-/Entladetabletts (150) geladen werden, insbesondere,
wobei das Transfersystem (250) einen oder mehrere der Verbrauchsmaterialbehälter (30) zwischen dem mindestens einen Speichermagazin (120, 120a, 120b) und dem Pufferlager (110) transferiert, mindestens während die mindestens eine Analysatoranordnung (20, 20i, 20o) die mindestens flüssigen Verbrauchsmaterialien (30L) verbraucht, und/oder
weiter umfassend, vertikales Bewegen des Transfersystems (250) durch eine Pufferöffnung (115) des Pufferlagers (110), um auf das Lade-/Entladetablett (150) zuzugreifen, um einen oder mehrere der Verbrauchsmaterialbehälter (30) zwischen dem Lade-/Entladetablett (150) und dem Pufferlager (110) und/oder zwischen dem Lade-/Entladetablett (150) und dem mindestens einen Speichermagazin (120, 120a, 120b) zu transferieren.

11. Verfahren (500) nach einem der Ansprüche 9 oder 10, weiter umfassend, Bewegen, über das Lade-/Entladetablett (150), der mindestens einigen der Vielzahl von Tablett-Haltepositionen (160) des Lade-/Entladetabletts (150) zwischen einer Bedienerzugriffsstation (170) und einer Transfersystem-Zugriffsstation (180), mindestens während sich die mindestens eine Analysatoranordnung (20, 20i, 20o) im Aktivmodus (12) befindet, wenn sich eine erste Abdeckung (156) der Bedienerzugriffsstation (170) in einer geschlossenen Position (156c) befindet, und wobei die erste Abdeckung (156) in der geschlossenen Position (156c) verbleibt, wenn die mindestens einigen der Vielzahl von Tablett-Haltepositionen (160) sich zwischen der Bedienerzugriffsstation (170) und der Transfersystem-Zugriffsstation (180) bewegen, insbesondere
weiter umfassend, Öffnen der ersten Abdeckung (156) zu einer offenen Position (156o), um auf die mindestens einigen der Vielzahl von Tablett-Haltepositionen (160) zuzugreifen, die so ausgebildet sind, dass sie einen oder mehrere der Verbrauchsmaterialbehälter (30) manuell aufnehmen, mindestens während sich die mindestens eine Analysatoranordnung (20, 20i, 20o) im Aktivmodus (12) befindet, insbesondere weiter umfassend, lösbares Halten, über einen Verriegelungsmechanismus (157), des Lade-/Entladetabletts (150), wenn sich die erste Abdeckung (156) in der offenen Position (156o) befindet, wobei der Verriegelungsmechanismus (157) dem Lade-/Entladetablett (150) ermöglicht, sich zu bewegen, wenn sich die erste Abdeckung (156) in der geschlossenen Position (156c) befindet, und/oder
weiter umfassend: Bewegen der mindestens einigen der Vielzahl von Tablett-Haltepositionen (160) von der Bedienerzugriffsstation (170) zu der Transfersystem-Zugriffsstation (180) bei Bestimmen, dass die mindestens einigen der Vielzahl von Tablett-Haltepositionen (160) des Lade-/Entladetabletts (150) zum manuellen Laden zusätzlicher Verbrauchsmaterialbehälter (30) nicht verfügbar sind;
Entfernen, über das Transfersystem (250), eines oder mehrerer der Verbrauchsmaterialbehälter (30) von den mindestens einigen der Vielzahl von Tablett-Haltepositionen (160) zu dem Pufferlager (110); und Bewegen der mindestens einigen der Vielzahl von Tablett-Haltepositionen (160) zu der Bedienerzugriffsstation (170) zum manuellen Laden der zusätzlichen Verbrauchsmaterialbehälter (30) nach Transferieren des einen oder der mehreren der Verbrauchsmaterialbehälter (30) von den mindestens einigen der Vielzahl von Tablett-Haltepositionen (160).

12. Verfahren (500) nach einem der Ansprüche 9 bis 11 weiter umfassend: Bestimmen, dass die Vielzahl von Trägern (130) des mindestens einen Speichermagazins (120, 120a, 120b) gegenwärtig keine ausreichende Anzahl von leeren Trägern einschließt, um den einen oder die mehreren manuell geladenen Verbrauchsmaterialbehälter (30) aufzunehmen; Entfernen, über das Transfersystem (250), mindestens einer erforderlichen Anzahl der Verbrauchsmaterialbehälter (30) von belegten Trägern aus der Vielzahl von Trägern (130) des mindestens einen Speichermagazins (120, 120a, 120b), um mindestens die ausreichende Anzahl von leeren Trägern vorzubereiten, um den einen oder die mehreren manuell geladenen Verbrauchsmaterialbehälter (30) aufzunehmen; und Transferieren, über das Transfersystem (250), des einen oder der mehreren manuell geladenen Verbrauchsmaterialbehälter (30) von der mindestens einen der Vielzahl von Tablett-Haltepositionen (160) zu der Vielzahl von Trägern (130) des mindestens einen Speichermagazins (120, 120a, 120b), insbesondere
wobei mindestens Entfernen mindestens der erforderlichen Anzahl der Verbrauchsmaterialbehälter (30) von den belegten Trägern erfolgt, wenn sich die mindestens eine Analysatoranordnung (20, 20i, 20o) im Aktivmodus (12) befindet, und/oder
wobei Transferieren des einen oder der mehreren manuell geladenen Verbrauchsmaterialbehälter von der mindestens einen der Vielzahl von Tablett-Haltepositionen (160) zu der Vielzahl von Trägern (130) erfolgt, wenn sich die mindestens eine Analysatoranordnung (20, 20i, 20o) im Aktivmodus (12) befindet, und/oder
weiter umfassend, Transferieren, über das Transfersystem (250), mindestens einiger der erforderlichen Anzahl der von den belegten Trägern entfernten Verbrauchsmaterialbehälter (30) zu dem Lade-/Entladetablett (150), und/oder
weiter umfassend, Transferieren, über das Transfersystem (250), mindestens einiger der erforderlichen Anzahl der von den belegten Trägern entfernten Verbrauchsmaterialbehälter (30) zu dem Pufferlager (110), und/oder
weiter umfassend, Transferieren, über das Transfersystem (250), mindestens einiger des einen oder der mehreren manuell geladenen Verbrauchsmaterialbehälter (30) von der mindestens einen der Vielzahl von Tablett-Haltepositionen (160) zu dem Pufferlager (110) vor Transferieren zu der Vielzahl von Trägern (130) des mindestens einen Speichermagazins (120, 120a, 120b), und/oder
weiter umfassend: Transferieren, über das Transfersystem (250), mindestens eines des einen oder der mehreren manuell geladenen Verbrauchsmaterialbehälter (30), die eine höhere Priorität aufweisen, von mindestens einer der Vielzahl von Tablett-Haltepositionen (160) zu der Vielzahl von Trägern (130) des mindestens einen Speichermagazins (120, 120a, 120b); und Transferieren, über das Transfersystem (250), mindestens einiger des einen oder der mehreren manuell geladenen Verbrauchsmaterialbehälter (30), die eine niedrigere Priorität aufweisen, von mindestens einer der Vielzahl von Tablett-Haltepositionen (160) zu dem Pufferlager (110) vor Transferieren der mindestens einigen des einen oder der mehreren manuell geladenen Verbrauchsmaterialbehälter (30), die die niedrigere Priorität aufweisen, zu der Vielzahl von Trägern (130) des mindestens einen Speichermagazins (120, 120a, 120b), und/oder
weiter umfassend, Transferieren, über das Transfersystem (250), mindestens einiger der erforderlichen Anzahl der von den belegten Trägern entfernten Verbrauchsmaterialbehälter (30) zu einer Abfallentsorgungsstation (190) bei Detektieren, dass der eine oder die mehreren der Verbrauchsmaterialbehälter (30) die flüssigen Verbrauchsmaterialien (30L) unter einem vorbestimmten Schwellenvolumen enthalten.

13. Verfahren (500) nach einem der Ansprüche 9 bis 12
weiter umfassend: Bestimmen, dass die Vielzahl von Trägern (130) des mindestens einen Speichermagazins (120, 120a, 120b) gegenwärtig keine ausreichende Anzahl von leeren Trägern einschließt, um den einen oder die mehreren manuell geladenen Verbrauchsmaterialbehälter (30) aufzunehmen; Entfernen, über das Transfersystem (250), mindestens einer zulässigen Anzahl der Verbrauchsmaterialbehälter (30) von belegten Trägern der Vielzahl von Trägern (130) des mindestens einen Speichermagazins (120, 120a, 120b), ohne ein Timing des Aktivmodus (12) der mindestens einen Analysatoranordnung (20, 20i, 20o) zu beeinflussen; Transferieren, über das Transfersystem (250), einiger des einen oder der mehreren manuell geladenen Verbrauchsmaterialbehälter (30) von mindestens einer der Vielzahl von Tablett-Haltepositionen (160) zu verfügbaren leeren Trägern der Vielzahl von Trägern (130) des mindestens einen Speichermagazins (120, 120a, 120b) nach Entfernen von mindestens der zulässigen Anzahl der Verbrauchsmaterialbehälter (30); und Transferieren, über das Transfersystem (250), der übrigen des einen oder der mehreren manuell geladenen Verbrauchsmaterialbehälter (30) von mindestens einer der Tablett-Haltepositionen zu dem Pufferlager (110),
insbesondere, weiter umfassend: Bestimmen, dass die Vielzahl von Trägern (130) des mindestens einen Speichermagazins (120, 120a, 120b) gegenwärtig eine ausreichende Anzahl von leeren Trägern einschließt, um die übrigen des einen oder der mehreren manuell geladenen Verbrauchsmaterialbehälter (30) aufzunehmen; und Transferieren, über das Transfersystem (250), der übrigen des einen oder der mehreren manuell geladenen Verbrauchsmaterialbehälter (30) von dem Pufferlager (110) zu der ausreichenden Anzahl von leeren Trägern des mindestens einen Speichermagazins (120, 120a, 120b), und/oder
weiter umfassend, Warnen eines Bedieners, wenn die Vielzahl von Trägern (130) des mindestens einen Speichermagazins (120, 120a, 120b) gegenwärtig nicht die ausreichende Anzahl von leeren Trägern einschließt, um den einen oder die mehreren manuell geladenen Verbrauchsmaterialbehälter (30) aufzunehmen, und/oder
weiter umfassend, Sammeln einer Bedienereingabe von einem Bediener, wenn die Vielzahl von Trägern (130) des mindestens einen Speichermagazins (120, 120a, 120b) gegenwärtig nicht die ausreichende Anzahl von leeren Trägern einschließt, um den einen oder die mehreren manuell geladenen Verbrauchsmaterialbehälter (30) aufzunehmen, insbesondere, wobei die Bedienereingabe Definieren der von den belegten Trägern der Vielzahl von Trägern (130) des mindestens einen Speichermagazins (120, 120a, 120b) zu entfernenden Verbrauchsmaterialbehälter (30) umfasst, und/oder
weiter umfassend: Reservieren eines ersten Satzes von Tablett-Haltepositionen (160o) aus der Vielzahl von Tablett-Haltepositionen (160) des Lade-/Entladetabletts (150) zum manuellen Laden eines oder mehrerer der Verbrauchsmaterialbehälter (30), derart, dass der erste Satz von Tablett-Haltepositionen (160o) nicht in der Lage ist, einen oder mehrere der Verbrauchsmaterialbehälter (30) von dem Transfersystem (250) aufzunehmen; und Reservieren eines zweiten Satzes von Tablett-Haltepositionen (160m) aus der Vielzahl von Tablett-Haltepositionen (160) des Lade-/Entladetabletts (150) zum Aufnehmen eines oder mehrerer der Verbrauchsmaterialbehälter (30) von dem Transfersystem (250), derart, dass der zweite Satz von Tablett-Haltepositionen (160m) nicht zum manuellen Laden eines oder mehrerer der Verbrauchsmaterialbehälter (30) verfügbar ist, insbesondere
weiter umfassend: Bewegen des ersten Satzes von Tablett-Haltepositionen (160o) zu der Bedienerzugriffsstation (170) zum manuellen Laden eines oder mehrerer der Verbrauchsmaterialbehälter (30);
und Bewegen des ersten Satzes von Tablett-Haltepositionen (160o) zu der Transfersystem-Zugriffsstation (180) zum Entfernen eines oder mehrerer der Verbrauchsmaterialbehälter (30) von dem ersten Satz von Tablett-Haltepositionen (160o) durch das Transfersystem (250) nach manuellem Laden, und/oder
weiter umfassend: Bewegen des zweiten Satzes von Tablett-Haltepositionen (160m) zu der Transfersystem-Zugriffsstation (180) zum Aufnehmen eines oder mehrerer der Verbrauchsmaterialbehälter (30) von dem Transfersystem (250); und Bewegen des zweiten Satzes von Tablett-Haltepositionen (160m) zu der Bedienerzugriffsstation (170) zum manuellen Entfernen eines oder mehrerer der Verbrauchsmaterialbehälter (30) von dem zweiten Satz von Tablett-Haltepositionen (160m), und/oder
weiter umfassend, Transferieren, über das Transfersystem (250), eines oder mehrerer der Verbrauchsmaterialbehälter (30) von dem mindestens einen Speichermagazin (120, 120a, 120b) zu dem zweiten Satz von Tablett-Haltepositionen (160m), mindestens während einer oder mehrere der Verbrauchsmaterialbehälter (30) manuell in die mindestens eine der Vielzahl von Tablett-Haltepositionen (160) des Lade-/Entladetabletts (150) geladen werden, und/oder
wobei die Transfersystem-Zugriffsstation (180) eine zweite Abdeckung (185) umfasst, wobei die zweite Abdeckung (185) eine Zugriffsöffnung (186) umfasst, die fluchtend mit einer oder mehreren der Vielzahl von Tablett-Haltepositionen (160) ist, und wobei die Zugriffsöffnung (186) fluchtend mit der Pufferöffnung (115) des Pufferlagers (110) ist.

14. Verfahren (500) nach einem der Ansprüche 9 bis 13,
wobei das mindestens eine Speichermagazin (120, 120a, 120b) eine dritte Abdeckung (126, 126a, 126b) umfasst, die so ausgebildet ist, dass sie mindestens einige der Vielzahl von Trägern (130) abdeckt, und wobei die dritte Abdeckung (126, 126a, 126b) eine Speicheröffnung (127, 127a, 127b) umfasst, die fluchtend mit den übrigen der Vielzahl von Trägern (130) ist, insbesondere
weiter umfassend, Bewegen eines Deckels (128) der dritten Abdeckung (126, 126a, 126b) zwischen einer offenen Position (128o) und einer geschlossenen Position (128c), wobei in der offenen Position (128o) des Deckels (128) mindestens einige der Vielzahl von Trägern (130) für das Transfersystem (250) zugänglich sind, und wobei in der geschlossenen Position (128c) des Deckels (128) die Vielzahl von Trägern (130) für das Transfersystem (250) unzugänglich ist, und/oder
weiter umfassend, Öffnen der dritten Abdeckung (126, 126a, 126b), um auf die Vielzahl von Trägern (130) des mindestens einen Speichermagazins (120, 120a, 120b) zuzugreifen, wenn sich die mindestens eine Analysatoranordnung (20, 20i, 20o) im Leerlaufmodus (14) befindet, und/oder
weiter umfassend, Lesen jeweiliger Kennungen (39) eines oder mehrerer der Verbrauchsmaterialbehälter (30), insbesondere, wobei das Transfersystem (250) einen Sensor umfasst, der an einem Greifer (36) angeordnet ist, der so ausgebildet ist, dass er die Kennungen (39) des einen oder der mehreren der Verbrauchsmaterialbehälter (30) liest.

15. Verfahren (500) nach einem der Ansprüche 9 bis 14,
wobei das mindestens eine Speichermagazin (120, 120a, 120b) ein erstes Speichermagazin (120a) und ein zweites Speichermagazin (120b) umfasst, wobei jedes der ersten Speichermagazins (120a) und des zweiten Speichermagazins (120b) die Vielzahl von Trägern (130) umfasst, wobei das Verfahren (500) weiter automatisches Transferieren über das Transfersystem (250) eines oder mehrerer der Verbrauchsmaterialbehälter (30) zwischen dem Lade-/Entladetablett (150) und den ersten und zweiten Speichermagazinen (120a, 120b) umfasst, insbesondere, weiter umfassend, Transferieren eines oder mehrerer der Verbrauchsmaterialbehälter (30) über das Transfersystem (250) zwischen dem ersten Speichermagazin (120a) und dem zweiten Speichermagazin (120b), und/oder
weiter umfassend, Umordnen mindestens eines der Verbrauchsmaterialbehälter (30), der von dem mindestens einen Speichermagazin (120, 120a, 120b) in einer ersten Halteposition lösbar gehalten wird, durch Transferieren des mindestens einen der Verbrauchsmaterialbehälter (30) zu dem Lade-/Entladetablett (150) oder dem Pufferlager (110) und Transferieren des mindestens einen der Verbrauchsmaterialbehälter (30) zu dem mindestens einen Speichermagazin (120, 120a, 120b) in einer zweiten Halteposition, und/oder
weiter umfassend, Identifizieren und/oder Erzeugen, über einen Planer (205) eines Behälterzugriffszeitraums des mindestens einen Speichermagazins (120, 120a, 120b), und Transferieren, über das Transfersystem (250), mindestens eines der Verbrauchsmaterialbehälter (30) zwischen dem mindestens einen Speichermagazin (120, 120a, 120b) und dem Lade-/Entladetablett (150) und/oder zwischen dem mindestens einen Speichermagazin (120, 120a, 120b) und dem Pufferlager (110) in dem Behälterzugriffszeitraum.

## Revendications

1. Système (100) de chargement/déchargement de récipients de produits consommables pour un automate d'analyse (10),
l'automate d'analyse (10) présentant au moins un agencement d'analyseur (20, 20i, 20o) avec un mode actif (12) et un mode inactif (14),
l'au moins un agencement d'analyseur (20, 20i, 20o) étant configuré pour consommer au moins des produits consommables liquides (30L) lorsqu'il est dans le mode actif (12), les produits consommables liquides (30L) étant distribués à l'automate d'analyse (10) via un ou plusieurs récipients (30) de produits consommables et étant distribués à l'au moins un agencement d'analyseur (20, 20i, 20o) via un pipetage automatisé lorsque l'au moins un agencement d'analyseur (20, 20i, 20o) est dans le mode actif (12),
le système (100) de chargement/déchargement de récipients de produits consommables comprenant :
au moins un chargeur de stockage (120, 120a, 120b) comprenant une pluralité de supports (130), chacun de la pluralité de supports (130) étant configuré pour maintenir de manière amovible au moins un des récipients (30) de produits consommables, l'au moins un chargeur de stockage (120, 120a, 120b) étant configuré pour recevoir manuellement un ou plusieurs des récipients (30) de produits consommables depuis un opérateur pendant que l'au moins un agencement d'analyseur (20, 20i, 20o) est dans le mode inactif (14) ;
un plateau de chargement/déchargement (150) configuré pour recevoir manuellement un ou plusieurs des récipients (30) de produits consommables en provenance de l'opérateur au moins pendant que l'au moins un agencement d'analyseur (20, 20i, 20o) est dans le mode actif (12) ; et
un système de transfert (250) configuré pour transférer automatiquement un ou plusieurs des récipients (30) de produits consommables au moins entre le plateau de chargement/déchargement (150) et l'au moins un chargeur de stockage (120, 120a, 120b) ;
dans lequel le système de transfert (250) est configuré pour transférer un ou plusieurs des récipients (30) de produits consommables
vers ou depuis l'au moins un chargeur de stockage (120, 120a, 120b) au moins pendant que le plateau de chargement/déchargement (150) reçoit manuellement un ou plusieurs des récipients (30) de produits consommables provenant de l'opérateur, et/ou
entre le plateau de chargement/déchargement (150) et un espace de stockage tampon (110) et/ou entre le plateau de chargement/déchargement (150) et l'au moins un chargeur de stockage (120, 120a, 120b) au moins pendant que l'au moins un agencement d'analyseur (20, 20i, 20o) est dans le mode actif (12).

2. Système (100) de chargement/déchargement de récipients de produits consommables selon la revendication 1,
dans lequel le système de transfert (250) transfère un ou plusieurs des récipients (30) de produits consommables entre l'au moins un chargeur de stockage (120, 120a, 120b) et le plateau de chargement/déchargement (150) au moins pendant que le plateau de chargement/déchargement (150) reçoit manuellement un ou plusieurs des récipients (30) de produits consommables en provenance de l'opérateur, et/ou
comprenant en outre un espace de stockage tampon (110) comprenant une pluralité de positions de maintien tampon (112), chacune de la pluralité de positions de maintien tampon (112) étant configurée pour maintenir de manière amovible au moins un des récipients (30) de produits consommables, dans lequel le système de transfert (250) transfère un ou plusieurs des récipients (30) de produits consommables entre l'au moins un chargeur de stockage (120, 120a, 120b) et l'espace de stockage tampon (110) au moins pendant que le plateau de chargement/déchargement (150) reçoit manuellement un ou plusieurs des récipients (30) de produits consommables en provenance de l'opérateur, en particulier,
dans lequel le système de transfert (250) transfère un ou plusieurs des récipients (30) de produits consommables entre l'au moins un chargeur de stockage (120, 120a, 120b) et l'espace de stockage tampon (110) au moins pendant que les produits consommables liquides (30L) sont distribués depuis l'au moins un chargeur de stockage (120, 120a, 120b) à d'automate d'analyse (10) via un pipetage automatisé, et/ou
dans lequel l'espace de stockage tampon (110) est situé verticalement à un niveau différent de celui du plateau de chargement/déchargement (150), en particulier, dans lequel l'espace de stockage tampon (110) est situé verticalement à un niveau supérieur à celui du plateau de chargement/déchargement (150), et/ou
dans lequel l'espace de stockage tampon (110) comprend une première portion (110a) et une deuxième portion (110b) espacée de la première portion (110a), dans lequel la première portion (110a) et la deuxième portion (110b) définissent une ouverture tampon (115) entre elles, et dans lequel la première portion (110a) comprend un premier ensemble de positions de maintien tampon (112a) de la pluralité de positions de maintien tampon (112) et la deuxième portion (110b) comprend un deuxième ensemble de positions de maintien tampon (112b) de la pluralité de positions de maintien tampon (112), en particulier, dans lequel le système de transfert (250) est configuré pour accéder au plateau de chargement/déchargement (150) en se déplaçant verticalement à travers l'ouverture tampon (115) afin de transférer un ou plusieurs des récipients (30) de produits consommables entre le plateau de chargement/déchargement (150) et l'espace de stockage tampon (110) et/ou entre le plateau de chargement/déchargement (150) et l'au moins un chargeur de stockage (120, 120a, 120b).

3. Système (100) de chargement/déchargement de récipients de produits consommables selon l'une quelconque des revendications 1 ou 2 comprenant en outre : une station d'accès opérateur (170) configurée pour permettre à l'opérateur d'accéder manuellement au plateau de chargement/déchargement (150) au moins pendant que l'au moins un agencement d'analyseur (20, 20i, 20o) est dans le mode actif (12) ; et une station d'accès de système de transfert (180) séparée de la station d'accès opérateur (170) et configurée pour permettre au système de transfert (250) d'accéder au plateau de chargement/déchargement (150), dans lequel la station d'accès de système de transfert (180) est inaccessible à l'opérateur au moins pendant que l'au moins un agencement d'analyseur (20, 20i, 20o) est dans le mode actif (12),
en particulier, dans lequel le plateau de chargement/déchargement (150) comprend une pluralité de positions de maintien sur plateau (160), dans lequel chacune de la pluralité de positions de maintien sur plateau (160) est configurée pour maintenir de manière amovible un ou plusieurs des récipients (30) de produits consommables, dans lequel au moins certaines de la pluralité de positions de maintien sur plateau (160) sont accessibles par l'opérateur par la station d'accès opérateur (170), et dans lequel le plateau de chargement/déchargement (150) est configuré pour déplacer les au moins certaines de la pluralité de positions de maintien sur plateau (160) entre la station d'accès opérateur (170) et la station d'accès du système de transfert (180) au moins pendant que l'au moins un agencement d'analyseur (20, 20i, 20o) est dans le mode actif (12), en particulier,
dans lequel le système est configuré de telle sorte que : lorsqu'il est déterminé que le plateau de chargement/déchargement (150) est indisponible pour recevoir manuellement des récipients (30) de produits consommables supplémentaires, le plateau de chargement/déchargement (150) déplace les au moins certaines de la pluralité de positions de maintien sur plateau (160) de la station d'accès opérateur (170) à la station d'accès du système de transfert (180) ; le système de transfert (250) retire un ou plusieurs des récipients (30) de produits consommables des au moins certaines de la pluralité de positions de maintien sur plateau (160) vers l'espace de stockage tampon (110) ; et après le transfert des un ou plusieurs récipients (30) de produits consommables depuis les au moins certaines de la pluralité de positions de maintien sur plateau (160), le plateau de chargement/déchargement (150) est configuré pour déplacer les au moins certaines de la pluralité de positions de maintien sur plateau (160) vers la station d'accès opérateur (170) pour recevoir manuellement les récipients (30) de produits consommables supplémentaires de l'opérateur, ou
dans lequel le système de transfert (250) est configuré pour transférer un nombre requis des récipients (30) de produits consommables depuis l'au moins un chargeur de stockage (120, 120a, 120b) vers l'espace de stockage tampon (110) lorsqu'il est déterminé que la pluralité de supports (130) de l'au moins un chargeur de stockage (120, 120a, 120b) n'inclut pas actuellement un nombre suffisant de supports vides pour accueillir les un ou plusieurs récipients (30) de produits consommables reçus manuellement, et dans lequel le système de transfert (250) est configuré pour transférer les un ou plusieurs récipients (30) de produits consommables reçus manuellement depuis au moins une de la pluralité de positions de maintien sur plateau (160) vers la pluralité de supports (130) de l'au moins un chargeur de stockage (120, 120a, 120b) après le retrait du nombre requis des récipients (30) de produits consommables, et/ou
dans lequel la pluralité de positions de maintien sur plateau (160) comprend un premier ensemble de positions de maintien sur plateau (160o) et un deuxième ensemble de positions de maintien sur plateau (160m), dans lequel le premier ensemble de positions de maintien sur plateau (160o) est réservé pour recevoir manuellement un ou plusieurs des récipients (30) de produits consommables de l'opérateur et est incapable de recevoir un ou plusieurs des récipients (30) de produits consommables depuis le système de transfert (250), et dans lequel le deuxième ensemble de positions de maintien sur plateau (160m) est réservé pour recevoir un ou plusieurs des récipients (30) de produits consommables depuis le système de transfert (250) et est incapable de recevoir manuellement un ou plusieurs des récipients (30) de produits consommables de l'opérateur, en particulier
dans lequel le système est configuré de telle sorte que le plateau de chargement/déchargement (150) déplace sélectivement le premier ensemble de positions de maintien sur plateau (160o) vers la station d'accès opérateur (170) pour recevoir manuellement un ou plusieurs des récipients (30) de produits consommables de l'opérateur, et dans lequel le plateau de chargement/déchargement (150) déplace sélectivement le premier ensemble de positions de maintien sur plateau (160o) vers la station d'accès du système de transfert (180) pour le retrait d'un ou plusieurs des récipients (30) de produits consommables du premier ensemble de positions de maintien sur plateau (160o) par le système de transfert (250) après la réception manuelle d'un ou plusieurs des récipients (30) de produits consommables de l'opérateur, et/ou
dans lequel le système est configuré de telle sorte que le plateau de chargement/déchargement (150) déplace sélectivement le deuxième ensemble de positions de maintien sur plateau (160m) vers la station d'accès du système de transfert (180) pour recevoir un ou plusieurs des récipients (30) de produits consommables depuis le système de transfert (250), et dans lequel le plateau de chargement/déchargement (150) déplace sélectivement le deuxième ensemble de positions de maintien sur plateau (160m) vers la station d'accès opérateur (170) pour le retrait manuel d'un ou plusieurs des récipients (30) de produits consommables du deuxième ensemble de positions de maintien sur plateau (160m) par l'opérateur, et/ou
dans lequel le système est configuré de telle sorte que le système de transfert (250) transfère un ou plusieurs des récipients (30) de produits consommables depuis l'au moins un chargeur de stockage (120, 120a, 120b) vers le deuxième ensemble de positions de maintien sur plateau (160m) au moins pendant que le premier ensemble de positions de maintien sur plateau (160o) reçoit manuellement un ou plusieurs des récipients (30) de produits consommables de l'opérateur, et/ou
dans lequel le plateau de chargement/déchargement (150) est configuré pour tourner autour d'un axe de plateau (AI) et ainsi déplacer les au moins certaines de la pluralité de positions de maintien sur plateau (160) entre la station d'accès opérateur (170) et la station d'accès du système de transfert (180), et/ou
dans lequel la station d'accès opérateur (170) comprend un premier cache (156) déplaçable entre une position ouverte (156o) et une position fermée (156c), dans lequel dans la position ouverte (156o), les au moins certaines de la pluralité de positions de maintien sur plateau (160) sont accessibles à l'opérateur, et dans lequel dans la position fermée, la pluralité de positions de maintien sur plateau (160) est inaccessible à l'opérateur, et dans lequel le premier cache (156) demeure dans la position fermée (156c) lorsque le plateau de chargement/déchargement (150) se déplace entre la station d'accès opérateur (170) et la station d'accès du système de transfert (180), en particulier, comprenant en outre un mécanisme d'interverrouillage (157) configuré pour maintenir de manière amovible le plateau de chargement/déchargement (150) immobile lorsque le premier cache (156) est dans la position ouverte (156o) et permettre au plateau de chargement/déchargement (150) de se déplacer lorsque le premier cache (156) est dans la position fermée (156c), et/ou
dans lequel la station d'accès du système de transfert (180) comprend un deuxième cache (185), dans lequel le deuxième cache (185) comprend une ouverture d'accès (186) alignée sur un ou plusieurs de la pluralité de positions de maintien sur plateau (160), et dans lequel l'ouverture d'accès (186) est alignée sur l'ouverture tampon (115) de l'espace de stockage tampon (110), en particulier, dans lequel le système de transfert (250) est configuré pour accéder au plateau de chargement/déchargement (150) en se déplaçant verticalement à travers l'ouverture tampon (115) et l'ouverture d'accès (186) afin de transférer un ou plusieurs des récipients (30) de produits consommables entre le plateau de chargement/déchargement (150) et l'espace de stockage tampon (110) et/ou entre le plateau de chargement/déchargement (150) et l'au moins un chargeur de stockage (120, 120a, 120b).

4. Système (100) de chargement/déchargement de récipients de produits consommables selon l'une quelconque des revendications 1 à 3, dans lequel l'au moins un chargeur de stockage (120, 120a, 120b) comprend un troisième cache (126, 126a, 126b) configuré pour couvrir au moins certains de la pluralité de supports (130), et dans lequel le troisième cache (126, 126a, 126b) comprend une ouverture de stockage (127, 127a, 127b) alignée sur le reste de la pluralité de supports (130),
en particulier, dans lequel le troisième cache (126, 126a, 126b) comprend en outre un couvercle (128) fixé au troisième cache (126, 126a, 126b), dans lequel le couvercle (128) est déplaçable entre une position ouverte (128o) et une position fermée (128c), dans lequel dans la position ouverte (128o) du couvercle (128), le reste de la pluralité de supports (130) est accessible au système de transfert (250), et dans lequel dans la position fermée (128c) du couvercle (128), la pluralité de supports (130) est inaccessible au système de transfert (250), et/ou
dans lequel le système de transfert (250) comprend un dispositif de prise et de dépose (250p), dans lequel au moins un des récipients (30) de produits consommables comprend un col (32) et/ou une languette (34), et dans lequel le dispositif de prise et de dépose (250p) comprend une pince de préhension (36) configurée pour venir en prise avec le col (32) et/ou la languette (34) et ainsi transférer l'au moins un des récipients (30) de produits consommables vers ou depuis l'au moins un chargeur de stockage (120, 120a, 120b), en particulier, dans lequel le dispositif de prise et de dépose (250p) comprend en outre un authentificateur (37) disposé sur la pince de préhension (36), et dans lequel l'authentificateur (37) comprend un capteur (38) configuré pour authentifier un ou plusieurs des récipients (30) de produits consommables mis en prise par la pince de préhension (36), et/ou
dans lequel le système de transfert (250) comprend un dispositif de prise et de dépose (250p), dans lequel au moins un des récipients (30) de produits consommables est couplé de manière détachable à un adaptateur (40), dans lequel l'adaptateur (40) comprend une languette (44), et dans lequel le dispositif de prise et de dépose (250p) comprend une pince de préhension (36) configurée pour venir en prise avec la languette (44) et ainsi transférer l'au moins un des récipients (30) de produits consommables vers ou depuis l'au moins un chargeur de stockage (120, 120a, 120b), en particulier, dans lequel le dispositif de prise et de dépose (250p) comprend en outre un authentificateur (37) disposé sur la pince de préhension (36), et dans lequel l'authentificateur (37) comprend un capteur (38) configuré pour authentifier un ou plusieurs des récipients (30) de produits consommables mis en prise par la pince de préhension (36).

5. Système (100) de chargement/déchargement de récipients de produits consommables selon l'une quelconque des revendications 1 à 4, dans lequel le système de transfert (250) est configuré pour tourner autour d'un axe de transfert (A2), et/ou
dans lequel le plateau de chargement/déchargement (150) est régulé en température, en particulier, le système (100) de chargement/déchargement de récipients de produits consommables comprenant l'espace de stockage tampon (110) de la revendication 2 dans lequel l'espace de stockage tampon (110) est régulé en température, et/ou
dans lequel l'au moins un agencement d'analyseur (20) comprend un premier agencement d'analyseur (20i) et un deuxième agencement d'analyseur (20o), chacun des premier et deuxième agencements d'analyseur (20i, 20o) comprenant le mode actif (12) et le mode inactif (14) et étant configuré pour consommer les au moins produits consommables liquides (30L) lorsqu'il est dans le mode actif (12), et dans lequel le plateau de chargement/déchargement (150) est configuré pour recevoir manuellement un ou plusieurs des récipients (30) de produits consommables de l'opérateur au moins pendant qu'au moins un des premier et deuxième agencements d'analyseur (20i, 20o) est dans le mode actif (12), et/ou
dans lequel l'au moins un chargeur de stockage (120, 120a, 120b) comprend un premier chargeur de stockage (120a) et un deuxième chargeur de stockage (120b), chacun du premier chargeur de stockage (120a) et du deuxième chargeur de stockage (120b) comprenant la pluralité de supports (130), et dans lequel le système de transfert (250) est en outre configuré pour transférer automatiquement un ou plusieurs des récipients (30) de produits consommables entre le plateau de chargement/déchargement (150) et les premier et deuxième chargeurs de stockage (120a, 120b),
en particulier, dans lequel le système de transfert (250) est configuré pour transférer un ou plusieurs des récipients (30) de produits consommables entre le premier chargeur de stockage (120a) et le deuxième chargeur de stockage (120b).

6. Système (100) de chargement/déchargement de récipients de produits consommables selon l'une quelconque des revendications 1 à 5,
dans lequel le système de transfert (250) et le plateau de chargement/déchargement (150) sont configurés pour réagencer au moins un des récipients (30) de produits consommables maintenus de manière amovible par l'au moins un chargeur de stockage (120, 120a, 120b) dans une première position de maintien en transférant l'au moins un des récipients (30) de produits consommables vers le plateau de chargement/déchargement (150) et en transférant l'au moins un des récipients (30) de produits consommables vers l'au moins un chargeur de stockage (120, 120a, 120b) dans une deuxième position de maintien, et/ou
dans lequel le système (100) de chargement/déchargement de récipients de produits consommables comprenant l'espace de stockage tampon (110) de la revendication 2 et dans lequel le système de transfert (250) et l'espace de stockage tampon (110) sont configurés pour réagencer au moins un des récipients (30) de produits consommables maintenus de manière amovible par l'au moins un chargeur de stockage (120, 120a, 120b) dans une première position de maintien en transférant l'au moins un des récipients (30) de produits consommables vers l'espace de stockage tampon (110) et en transférant l'au moins un des récipients (30) de produits consommables vers l'au moins un chargeur de stockage (120, 120a, 120b) dans une deuxième position de maintien,
en particulier, dans lequel le système est configuré pour que l'au moins un des récipients (30) de produits consommables maintenus de manière amovible par l'au moins un chargeur de stockage (120, 120a, 120b) soit réagencé pour correspondre à un ordre de test, et/ou
en particulier, dans lequel le système est configuré pour qu'au moins un des récipients (30) de produits consommables maintenus de manière amovible par l'au moins un chargeur de stockage (120, 120a, 120b) soit réagencé pour corriger un emplacement de l'au moins un des récipients (30) de produits consommables.

7. Système (100) de chargement/déchargement de récipients de produits consommables selon l'une quelconque des revendications 1 à 6 comprenant en outre une station d'élimination des déchets (190), dans lequel le système de transfert (250) transfère un ou plusieurs des récipients (30) de produits consommables depuis l'au moins un chargeur de stockage (120, 120a, 120b) vers la station d'élimination des déchets (190) lorsqu'il est détecté que les un ou plusieurs des récipients (30) de produits consommables contiennent les produits consommables liquides (30L) sous un volume seuil prédéterminé, en particulier, le système (100) de chargement/déchargement de récipients de produits consommables comprenant l'espace de stockage tampon (110) de la revendication 2 et comprenant en outre un ordonnanceur (205) configuré pour identifier et/ou créer une période d'accès aux récipients de l'au moins un chargeur de stockage (120, 120a, 120b) lorsque l'au moins un agencement d'analyseur (20, 20i, 20o) est dans le mode actif (12), dans lequel le système de transfert (250) transfère au moins un des récipients (30) de produits consommables entre l'au moins un chargeur de stockage (120, 120a, 120b) et le plateau de chargement/déchargement (150) et/ou entre l'au moins un chargeur de stockage (120, 120a, 120b) et l'espace de stockage tampon (110) dans la période d'accès aux récipients sans affecter une temporisation du mode actif (12), en particulier, dans lequel l'ordonnanceur (205) est inclus dans un dispositif de commande (200) de l'automate d'analyse (10), en particulier, dans lequel l'ordonnanceur (205) inclut un logiciel stocké dans une mémoire non transitoire (210) du dispositif de commande (200).

8. Système (100) de chargement/déchargement de récipients de produits consommables selon l'une quelconque des revendications précédentes, comprenant l'espace de stockage tampon (110), dans lequel l'espace de stockage tampon est situé verticalement à un niveau différent de celui du plateau de chargement/déchargement (150) et comprend une pluralité de positions de maintien tampon (112), chacune de la pluralité de positions de maintien tampon (112) étant configurée pour maintenir de manière amovible au moins un des récipients (30) de produits consommables,
en particulier, dans lequel l'espace de stockage tampon (110) est situé verticalement au même niveau que l'au moins un chargeur de stockage (120, 120a, 120b) et/ou dans lequel le plateau de chargement/déchargement (150) est situé verticalement à un niveau différent de celui de l'au moins un chargeur de stockage (120, 120a, 120b).

9. Procédé (500) de chargement/déchargement d'un ou plusieurs récipients (30) de produits consommables en utilisant le système (100) de chargement/déchargement de récipients de produits consommables pour un automate d'analyse (10) selon l'une quelconque des revendications 1 à 8, le procédé (500) comprenant :
la fourniture (510) de l'automate d'analyse (10) ;
le chargement manuel (520) d'un ou plusieurs des récipients (30) de produits consommables dans au moins une de la pluralité de positions de maintien sur plateau (160) du plateau de chargement/déchargement (150) au moins pendant que l'au moins un agencement d'analyseur (20, 20i, 20o) est dans le mode actif (12) ; et
le transfert (530), via le système de transfert (250), d'un ou plusieurs des récipients (30) de produits consommables vers ou depuis l'au moins un chargeur de stockage (120, 120a, 120b) pendant qu'un ou plusieurs des récipients (30) de produits consommables sont chargés manuellement dans l'au moins une de la pluralité de positions de maintien sur plateau (160) du plateau de chargement/déchargement (150).

10. Procédé (500) selon la revendication 9 comprenant en outre le transfert, via le système de transfert (250), d'un ou plusieurs des récipients (30) de produits consommables entre l'au moins un chargeur de stockage (120, 120a, 120b) et le plateau de chargement/déchargement (150) au moins pendant qu'un ou plusieurs des récipients (30) de produits consommables sont chargés manuellement dans l'au moins une de la pluralité de positions de maintien sur plateau (160) du plateau de chargement/déchargement (150), et/ou
comprenant en outre le transfert, via le système de transfert (250), d'un ou plusieurs des récipients (30) de produits consommables entre l'au moins un chargeur de stockage (120, 120a, 120b) et un espace de stockage tampon (110) situé verticalement à un niveau différent de celui du plateau de chargement/déchargement (150) au moins pendant qu'un ou plusieurs des récipients (30) de produits consommables sont chargés manuellement dans l'au moins une de la pluralité de positions de maintien sur plateau (160) du plateau de chargement/déchargement (150), en particulier,
dans lequel le système de transfert (250) transfère un ou plusieurs des récipients (30) de produits consommables entre l'au moins un chargeur de stockage (120, 120a, 120b) et l'espace de stockage tampon (110) au moins pendant que l'au moins un agencement d'analyseur (20, 20i, 20o) consomme les au moins produits consommables liquides (30L), et/ou
comprenant en outre le déplacement du système de transfert (250) verticalement à travers une ouverture tampon (115) de l'espace de stockage tampon (110) afin d'accéder au plateau de chargement/déchargement (150) pour transférer un ou plusieurs des récipients (30) de produits consommables entre le plateau de chargement/déchargement (150) et l'espace de stockage tampon (110) et/ou entre le plateau de chargement/déchargement (150) et l'au moins un chargeur de stockage (120, 120a, 120b).

11. Procédé (500) selon l'une quelconque des revendications 9 ou 10 comprenant en outre le déplacement, via le plateau de chargement/déchargement (150), d'au moins certaines de la pluralité de positions de maintien sur plateau (160) du plateau de chargement/déchargement (150) entre une station d'accès opérateur (170) et une station d'accès du système de transfert (180) au moins pendant que l'au moins un agencement d'analyseur (20, 20i, 20o) est dans le mode actif (12) lorsqu'un premier cache (156) de la station d'accès opérateur (170) est dans une position fermée (156c), et dans lequel le premier cache (156) demeure dans la position fermée (156c) lorsque les au moins certaines de la pluralité de positions de maintien sur plateau (160) se déplacent entre la station d'accès opérateur (170) et la station d'accès du système de transfert (180), en particulier
comprenant en outre l'ouverture du premier couvercle (156) à une position ouverte (156o) afin d'accéder aux au moins certaines de la pluralité de positions de maintien sur plateau (160) configurées pour recevoir manuellement un ou plusieurs des récipients (30) de produits consommables au moins pendant que l'au moins un agencement d'analyseur (20, 20i, 20o) est dans le mode actif (12),
en particulier, comprenant en outre le maintien amovible, via un mécanisme d'interverrouillage (157), du plateau de chargement/déchargement (150) immobile lorsque le premier cache (156) est dans la position ouverte (156o), dans lequel le mécanisme d'interverrouillage (157) permet au plateau de chargement/déchargement (150) de se déplacer lorsque le premier couvercle (156) est dans la position fermée (156c), et/ou
comprenant en outre : le déplacement des au moins certaines de la pluralité de positions de maintien sur plateau (160) de la station d'accès opérateur (170) à la station d'accès du système de transfert (180) lorsqu'il est déterminé que les au moins certaines de la pluralité de positions de maintien sur plateau (160) du plateau de chargement/déchargement (150) sont indisponibles pour charger manuellement des récipients (30) de produits consommables supplémentaires ; le retrait, via le système de transfert (250), d'un ou plusieurs des récipients (30) de produits consommables des au moins certaines de la pluralité de positions de maintien sur plateau (160) vers l'espace de stockage tampon (110) ; et le déplacement des au moins certaines de la pluralité de positions de maintien sur plateau (160) vers la station d'accès opérateur (170) pour charger manuellement les récipients (30) de produits consommables supplémentaires après le transfert des un ou plusieurs récipients (30) de produits consommables depuis les au moins certaines de la pluralité de positions de maintien sur plateau (160).

12. Procédé (500) selon l'une quelconque des revendications 9 à 11 comprenant en outre : la détermination que la pluralité de supports (130) de l'au moins un chargeur de stockage (120, 120a, 120b) n'inclut pas actuellement un nombre suffisant de supports vides pour accueillir les un ou plusieurs récipients (30) de produits consommables chargés manuellement ; le retrait, via le système de transfert (250), d'au moins un nombre requis des récipients (30) de produits consommables depuis des supports occupés de la pluralité de supports (130) de l'au moins un chargeur de stockage (120, 120a, 120b) afin de préparer au moins le nombre suffisant de supports vides pour recevoir les un ou plusieurs récipients (30) de produits consommables chargés manuellement ; et le transfert, via le système de transfert (250), des un ou plusieurs récipients (30) de produits consommables chargés manuellement depuis l'au moins une de la pluralité de positions de maintien sur plateau (160) vers la pluralité de supports (130) de l'au moins un chargeur de stockage (120, 120a, 120b), en particulier
dans lequel au moins le retrait d'au moins le nombre requis des récipients (30) de produits consommables depuis les supports occupés se produit lorsque l'au moins un agencement d'analyseur (20, 20i, 20o) est dans le mode actif (12), et/ou
dans lequel le transfert des un ou plusieurs récipients de produits consommables chargés manuellement depuis l'au moins une de la pluralité de positions de maintien sur plateau (160) vers la pluralité de supports (130) se produit lorsque l'au moins un agencement d'analyseur (20, 20i, 20o) est dans le mode actif (12), et/ou
comprenant en outre le transfert, via le système de transfert (250), d'au moins certains du nombre requis des récipients (30) de produits consommables retirés des supports occupés vers le plateau de chargement/déchargement (150), et/ou
comprenant en outre le transfert, via le système de transfert (250), d'au moins certains du nombre requis des récipients (30) de produits consommables retirés des supports occupés vers l'espace de stockage tampon (110), et/ou
comprenant en outre le transfert, via le système de transfert (250), d'au moins certains des un ou plusieurs récipients (30) de produits consommables chargés manuellement depuis l'au moins une de la pluralité de positions de maintien sur plateau (160) vers l'espace de stockage tampon (110) avant le transfert vers la pluralité de supports (130) de l'au moins un chargeur de stockage (120, 120a, 120b), et/ou
comprenant en outre : le transfert, via le système de transfert (250), d'au moins un parmi les un ou plusieurs récipients (30) de produits consommables chargés manuellement présentant une priorité supérieure depuis l'au moins une de la pluralité de positions de maintien sur plateau (160) vers la pluralité de supports (130) de l'au moins un chargeur de stockage (120, 120a, 120b) ; et le transfert, via le système de transfert (250), d'au moins certains des un ou plusieurs récipients (30) de produits consommables chargés manuellement présentant une priorité inférieure depuis l'au moins une de la pluralité de positions de maintien sur plateau (160) vers l'espace de stockage tampon (110) avant le transfert des au moins certains des un ou plusieurs récipients (30) de produits consommables chargés manuellement présentant la priorité inférieure vers la pluralité de supports (130) de l'au moins un chargeur de stockage (120, 120a, 120b), et/ou
comprenant en outre le transfert, via le système de transfert (250), d'au moins certains du nombre requis des récipients (30) de produits consommables retirés des supports occupés vers une station d'élimination des déchets (190) lorsqu'il est détecté que les un ou plusieurs récipients (30) de produits consommables contiennent les produits consommables liquides (30L) sous un volume seuil prédéterminé.

13. Procédé (500) selon l'une quelconque des revendications 9 à 12
comprenant en outre : la détermination que la pluralité de supports (130) de l'au moins un chargeur de stockage (120, 120a, 120b) n'inclut pas actuellement un nombre suffisant de supports vides pour accueillir les un ou plusieurs récipients (30) de produits consommables chargés manuellement ; le retrait, via le système de transfert (250), d'au moins un nombre admissible des récipients (30) de produits consommables depuis des supports occupés de la pluralité de supports (130) de l'au moins un chargeur de stockage (120, 120a, 120b) sans affecter une temporisation du mode actif (12) de l'au moins un agencement d'analyseur (20, 20i, 20o) ; le transfert, via le système de transfert (250), de certains d'un ou plusieurs récipients (30) de produits consommables chargés manuellement depuis l'au moins une de la pluralité de positions de maintien sur plateau (160) vers des supports vides disponibles de la pluralité de supports (130) de l'au moins un chargeur de stockage (120, 120a, 120b) après le retrait d'au moins le nombre admissible des récipients (30) de produits consommables ; et le transfert, via le système de transfert (250), du reste des un ou plusieurs récipients (30) de produits consommables chargés manuellement depuis l'au moins une des positions de maintien sur plateau vers l'espace de stockage tampon (110),
en particulier, comprenant en outre : la détermination que la pluralité de supports (130) de l'au moins un chargeur de stockage (120, 120a, 120b) inclut actuellement un nombre suffisant de supports vides pour accueillir le reste des un ou plusieurs récipients (30) de produits consommables chargés manuellement ; et le transfert, via le système de transfert (250), du reste des un ou plusieurs récipients (30) de produits consommables chargés manuellement depuis l'espace de stockage tampon (110) vers le nombre suffisant de supports vides de l'au moins un chargeur de stockage (120, 120a, 120b), et/ou
comprenant en outre l'avertissement d'un opérateur si la pluralité de supports (130) de l'au moins un chargeur de stockage (120, 120a, 120b) n'inclut pas actuellement le nombre suffisant de supports vides pour accueillir les un ou plusieurs récipients (30) de produits consommables chargés manuellement, et/ou
comprenant en outre la collecte d'une entrée d'opérateur depuis un opérateur si la pluralité de supports (130) de l'au moins un chargeur de stockage (120, 120a, 120b) n'inclut pas actuellement le nombre suffisant de supports vides pour accueillir les un ou plusieurs récipients (30) de produits consommables chargés manuellement,
en particulier, dans lequel l'entrée d'opérateur comprend la définition des récipients (30) de produits consommables à retirer des supports occupés de la pluralité de supports (130) de l'au moins un chargeur de stockage (120, 120a, 120b), et/ou
comprend en outre : la réservation d'un premier ensemble de positions de maintien sur plateau (160o) de la pluralité de positions de maintien sur plateau (160) du plateau de chargement/déchargement (150) pour le chargement manuel d'un ou plusieurs des récipients (30) de produits consommables, de telle sorte que le premier ensemble de positions de maintien sur plateau (160o) est incapable de recevoir un ou plusieurs des récipients (30) de produits consommables depuis le système de transfert (250) ; et la réservation d'un deuxième ensemble de positions de maintien sur plateau (160m) de la pluralité de positions de maintien sur plateau (160) du plateau de chargement/déchargement (150) pour recevoir un ou plusieurs des récipients (30) de produits consommables depuis le système de transfert (250), de telle sorte que le deuxième ensemble de positions de maintien sur plateau (160m) est indisponible pour le chargement manuel d'un ou plusieurs des récipients (30) de produits consommables, en particulier
comprenant en outre : le déplacement du premier ensemble de positions de maintien sur plateau (160o) vers la station d'accès opérateur (170) pour le chargement manuel d'un ou plusieurs des récipients (30) de produits consommables ; et le déplacement du premier ensemble de positions de maintien sur plateau (160o) vers la station d'accès du système de transfert (180) pour le retrait d'un ou plusieurs des récipients (30) de produits consommables du premier ensemble de positions de maintien sur plateau (160o) par le système de transfert (250) après le chargement manuel, et/ou
comprenant en outre : le déplacement du deuxième ensemble de positions de maintien sur plateau (160m) vers la station d'accès du système de transfert (180) pour recevoir un ou plusieurs des récipients (30) de produits consommables depuis le système de transfert (250) ; et le déplacement du deuxième ensemble de positions de maintien sur plateau (160m) vers la station d'accès opérateur (170) pour le retrait manuel d'un ou plusieurs des récipients (30) de produits consommables du deuxième ensemble de positions de maintien sur plateau (160m), et/ou
comprenant en outre le transfert, via le système de transfert (250), d'un ou plusieurs des récipients (30) de produits consommables depuis l'au moins un chargeur de stockage (120, 120a, 120b) vers le deuxième ensemble de positions de maintien sur plateau (160m) au moins pendant qu'un ou plusieurs des récipients (30) de produits consommables sont chargés manuellement dans l'au moins une de la pluralité de positions de maintien sur plateau (160) du plateau de chargement/déchargement (150), et/ou
dans lequel la station d'accès du système de transfert (180) comprend un deuxième cache (185), dans lequel le deuxième cache (185) comprend une ouverture d'accès (186) alignée sur un ou plusieurs de la pluralité de positions de maintien sur plateau (160), et dans lequel l'ouverture d'accès (186) est alignée sur l'ouverture tampon (115) de l'espace de stockage tampon (110).

14. Procédé (500) selon l'une quelconque des revendications 9 à 13,
dans lequel l'au moins un chargeur de stockage (120, 120a, 120b) comprend un troisième cache (126, 126a, 126b) configuré pour couvrir au moins certains de la pluralité de supports (130), et dans lequel le troisième cache (126, 126a, 126b) comprend une ouverture de stockage (127, 127a, 127b) alignée sur le reste de la pluralité de supports (130), en particulier
comprenant en outre le déplacement d'un couvercle (128) du troisième cache (126, 126a, 126b) entre une position ouverte (128o) et une position fermée (128c), dans lequel dans la position ouverte (128o) du couvercle (128), au moins certains de la pluralité de supports (130) sont accessibles au système de transfert (250), et dans lequel dans la position fermée (128c) du couvercle (128), la pluralité de supports (130) est inaccessible au système de transfert (250), et/ou
comprenant en outre l'ouverture du troisième cache (126, 126a, 126b) afin d'accéder à la pluralité de supports (130) de l'au moins un chargeur de stockage (120, 120a, 120b) lorsque l'au moins un agencement d'analyseur (20, 20i, 20o) est dans le mode inactif (14), et/ou
comprenant en outre la lecture d'identifiants (39) respectifs d'un ou plusieurs des récipients (30) de produits consommables, en particulier, dans lequel le système de transfert (250) comprend un capteur disposé sur une pince de préhension (36) configuré pour lire les identifiants (39) d'un ou plusieurs des récipients (30) de produits consommables.

15. Procédé (500) selon l'une quelconque des revendications 9 à 14,
dans lequel l'au moins un chargeur de stockage (120, 120a, 120b) comprend un premier chargeur de stockage (120a) et un deuxième chargeur de stockage (120b), chacun du premier chargeur de stockage (120a) et du deuxième chargeur de stockage (120b) comprenant la pluralité de supports (130),
dans lequel le procédé (500) comprend en outre le transfert automatique, via le système de transfert (250), d'un ou plusieurs des récipients (30) de produits consommables entre le plateau de chargement/déchargement (150) et les premier et deuxième chargeurs de stockage (120a, 120b), en particulier, comprenant en outre le transfert d'un ou plusieurs des récipients (30) de produits consommables, via le système de transfert (250), entre le premier chargeur de stockage (120a) et le deuxième chargeur de stockage (120b), et/ou
comprenant en outre le réagencement d'au moins un des récipients (30) de produits consommables maintenus de manière amovible par l'au moins un chargeur de stockage (120, 120a, 120b) dans une première position de maintien en transférant l'au moins un des récipients (30) de produits consommables vers le plateau de chargement/déchargement (150) ou l'espace de stockage tampon (110) et en transférant l'au moins un des récipients (30) de produits consommables vers l'au moins un chargeur de stockage (120, 120a, 120b) dans une deuxième position de maintien, et/ou
comprenant en outre l'identification et/ou la création, via un ordonnanceur (205), d'une période d'accès aux récipients de l'au moins un chargeur de stockage (120, 120a, 120b), et le transfert, via le système de transfert (250), d'au moins un des récipients (30) de produits consommables entre l'au moins un chargeur de stockage (120, 120a, 120b) et le plateau de chargement/déchargement (150) et/ou entre l'au moins un chargeur de stockage (120, 120a, 120b) et l'espace de stockage tampon (110) dans la période d'accès aux récipients.
